(19) Europäisches Patentamt
European Patent Office
Office européen des brevets

(11) **EP 4 651 590 A1**

(12) **EUROPEAN PATENT APPLICATION**
published in accordance with Art. 153(4) EPC

(43) Date of publication:
**19.11.2025 Bulletin 2025/47**

(21) Application number: **23915269.7**

(22) Date of filing: **09.01.2023**

(51) International Patent Classification (IPC):
*H04W 72/04* (2023.01)    *H04B 7/155* (2006.01)

(52) Cooperative Patent Classification (CPC):
**H04B 7/155; H04W 72/04**

(86) International application number:
**PCT/CN2023/071455**

(87) International publication number:
**WO 2024/148490 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: FUJITSU LIMITED
**Kawasaki-shi, Kanagawa 211-8588 (JP)**

(72) Inventors:
• JIANG, Qinyan
  **Beijing 100022 (CN)**
• ZHANG, Lei
  **Beijing 100022 (CN)**
• TIAN, Yan
  **Beijing 100022 (CN)**

(74) Representative: **Haseltine Lake Kempner LLP
Cheapside House
138 Cheapside
London EC2V 6BJ (GB)**

(54) **INFORMATION SENDING METHOD, INFORMATION RECEIVING METHOD, REPEATER, AND NETWORK DEVICE**

(57)    Embodiments of this disclosure provide an information transmission method, an information reception method, a repeater and a network device. The information transmission method includes: transmitting downlink control information by a network device to a repeater, the downlink control information being in a first DCI format, and the downlink control information comprising one or more first information fields for indicating beams, and/or one or more second information fields for indicating time domain resources, and/or one or more third information fields for indicating subcarrier spacings.

201

The network device transmits downlink control information by to a repeater, the downlink control information being in a first DCI format, and the downlink control information including one or more first information fields for indicating beams, and/or one or more second information fields for indicating time domain resources, and/or one or more third information fields for indicating subcarrier spacings

**Fig. 2**

**Description**

Technical Field

This disclosure relates to the field of communication technologies.

Background

Compared with traditional 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services.

For this reason, 5G systems are also deployed at new spectra in addition to conventional telecommunications spectra, and frequencies of the spectra are obviously higher than those of conventional telecommunications spectra used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In order to better solve the coverage problem of cellular mobile communication systems in practical deployment, use of a radio frequency (RF) relay/repeater to amplify and forward signals between a terminal equipment and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using an RF repeater is one of feasible solutions. However, as a forwarding behavior of a traditional RF repeater is not controlled by a network, on the one hand, an effect of amplifying and forwarding a target signal by the repeater may possibly be not ideal, and on the other hand, it may pose significant interference to other devices in the network, and increase noise and interference levels of the system, thereby reducing network throughput. Specifically, taking an antenna direction as an example, compared to 2G, 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Analog) beam directions and widths, etc., of the network device and terminal equipment may dynamically change (i.e. beam switching) due to such factors as changes of positions. However, antennas of a traditional RF repeater may not be dynamically adjusted with respect to directions and have relatively wide beams, and beam directions and beam widths of transmitting and receiving antennas of the RF repeater are unable to flexibly match positions of the network device and terminal equipment and dynamic changes of the beam directions and widths of the transmitting and receiving antennas. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmitting beams, and increase noise and interference levels of the entire system, thereby reducing network throughput. However, there is currently no method for how to control a forwarding behavior of a repeater by a network device.

In order to solve at least one of the above problems, embodiments of this disclosure provide an information transmission method, an information reception method, a repeater and a network device.

According to one aspect of the embodiments of this disclosure, there is provided a network device, including: a transmitting unit configured to receive downlink control information transmitted by the network device, the downlink control information being in a first DCI format, and the downlink control information including one or more first information fields for indicating beams, and/or one or more second information fields for indicating time domain resources, and/or one or more third information fields for indicating subcarrier spacings.

According to another aspect of the embodiments of this disclosure, there is provided a repeater, including: a receiving unit configured to transmit downlink control information to a repeater, the downlink control information being in a first DCI format, and the downlink control information comprising one or more first information fields for indicating beams, and/or one or more second information fields for indicating time domain resources, and/or one or more third information fields for indicating subcarrier spacings.

According to a further aspect of the embodiments of this disclosure, there is provided a communication system, including a repeater as described in the other aspect and/or a network device as described in the one aspect.

An advantage of the embodiments of this disclosure exists in that indication on beams of the repeater may be performed via the DCI in the first DCI format, and the beams of the repeater in performing forwarding (forwarding DL/UL signals) may be enabled to match with beams of the terminal equipment receiving/transmitting signals by controlling the beams of the repeater by the network device, thereby improving effects of amplifying/enhancing signals, and at the same time, reducing interference to other devices in the network, and improving the network throughput.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of an application scenario of embodiments of this disclosure;
FIG. 2 is a schematic diagram of an information transmission method of embodiments of this disclosure;
FIGs. 3A-3G are schematic diagrams of correspondences in the embodiments of this disclosure;
FIGs. 4A-4G are schematic diagrams of correspondences in the embodiments of this disclosure;
FIGs. 5A-5D are schematic diagrams of correspondences in the embodiments of this disclosure;
FIG. 6 is an exemplary diagram of a CORESET configuration of the embodiments of this disclosure;
FIG. 7 is a schematic diagram of a mapping relationship between a PDCCH and a physical resource of the embodiments of this disclosure;
FIG. 8 is a schematic diagram of a method for transmitting DCI in a first DCI format by the network device and the repeater of the embodiments of this disclosure;
FIG. 9 is a schematic diagram of a method for transmitting the DCI in the first DCI format by the network device to the repeater of the embodiments of this disclosure;
FIG. 10 is an exemplary diagram of mapping modulation symbols to physical resources of the embodiments of this disclosure;
FIGs. 11A and 11B are two exemplary diagrams of PDCCH DMRSs in cases of wideband mapping and narrowband mapping of the embodiments of this disclosure;
FIG. 12 is a schematic diagram of an information reception method of embodiments of this disclosure;
FIG. 13 is a schematic diagram of a PDCCH candidate of the embodiments of this disclosure;
FIG. 14 is a schematic diagram of information transmission of the embodiments of this disclosure;
FIG. 15 is a schematic diagram of a repeater of the embodiments of this disclosure;
FIG. 16 is a schematic diagram of a network device of the embodiments of this disclosure; and
FIG. 17 is a schematic diagram of an electronic device of the embodiments of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, existing traffics or traffics that may be implemented in the future may be performed between a network device and a terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

A traditional repeater does not have capability to communicate with a network device. Hence, although a traditional repeater is helpful to enhance signal strengths, it is not flexible enough to cope with complex environmental changes. Deploying a traditional repeater in a 5G network (especially a high-frequency 5G network) may possibly cause unnecessary interference to other network devices and/or terminal equipments, thereby reducing a transmission efficiency (such as throughput) of the entire network. In order that forwarding of the repeater is more flexible to be adapted to characteristics of the 5G network, the network device needs to assist the repeater, and configure forwarding of the repeater according to network conditions.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

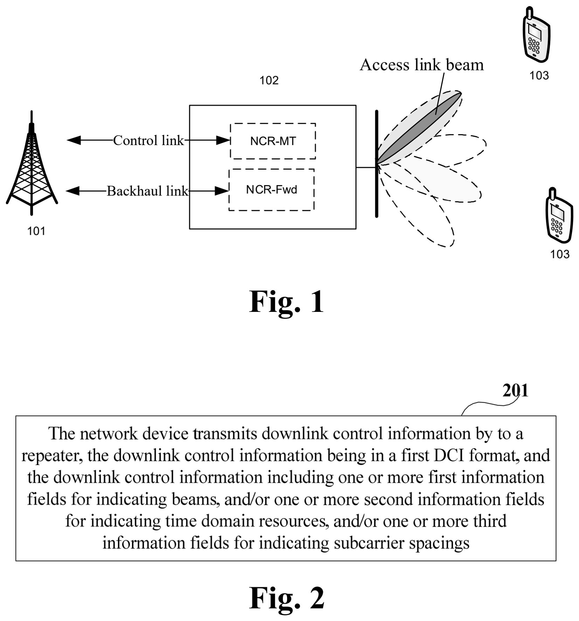

FIG. 1 is a schematic diagram of the NCR in embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater. (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH link) for forwarding, and an access link (AC link, also referred to as an NCR-UE link), wherein the C-link is used for communication between the NCR and the network device, the BH link is used by the repeater to receive signals to be forwarded from the network device, or forward signals from the terminal equipment to the network device, and the AC link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH link and the AC link.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC link (or the BH link)' may be equivalent to 'performing forwarding on the AC link (or the BH link)', and 'performing transmission or reception on the control link' may be equivalent to 'performing communication on the control link'. The above terms are for convenience of explanation only, and are not intended to limit this disclosure. In some cases, "a forwarding unit" and "a forwarding behavior" are interchangeable.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE) or information field included in the RRC message or RRC IE (or information field included in the information field). Higher-layer signaling may also be, for example, medium access control (MAC) signaling, or an MAC control element (MAC CE); however, this disclosure is not limited thereto.

In the embodiments of this disclosure, multiple refers to at least two, or two or more.

In the embodiments of this disclosure, predefined refers to specified in a protocol or specified according to a rule specified in a protocol, without the need for additional configuration. Configuration/indication refer(s) to direct or indirect configuration/indication by a network device via higher-layer signaling and/or physical layer signaling. The physical layer signaling refers to, for example, control information (DCI) carried by a physical control channel or control information carried by a sequence. However, it is not limited thereto, and configuration/indication may be achieved by introducing higher-layer parameters in the higher-layer signaling, wherein higher-layer parameters refer to information fields and/or information elements (IEs) in the higher-layer signaling.

Implementations of the embodiments of this disclosure shall be described below with reference to the accompanying drawings. These implementations are illustrative only, and are not intended to limit this disclosure.

Embodiments of a first aspect

The embodiments of this disclosure provide an information transmission method, which shall be described from a side of a network device.

FIG. 2 is a schematic diagram of the information indication method of the embodiments of this disclosure. As shown in FIG. 2, the method includes:

201: a network device transmits downlink control information to a repeater, the downlink control information being in a first DCI format, and the downlink control information including one or more first information fields for indicating beams, and/or one or more second information fields for indicating time domain resources, and/or one or more third information fields for indicating subcarrier spacings.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the downlink control information in the first DCI format is used to dynamically indicate/control access link beams, or to control the forwarding unit of the repeater, or to transmit side control information or access link beam indications.

In the embodiments of this disclosure, "downlink control information in a first DCI format" or "downlink control information using a first DCI format" or "DCI in a first DCI format" may also be directly referred to as "a first DCI format" in brief, and the same is applicable to other DCI formats.

In some embodiments, the downlink control information in the first DCI format is not used for scheduling PDSCHs or PUSCHs.

In some embodiments, the downlink control information in the first DCI format may also be used to schedule PDSCHs or PUSCHs.

In some embodiments, the network device further transmits downlink control information in a second DCI format to the repeater. The second DCI format is different from the first DCI format, for example, DCI format numbers of them are different (for example, the first DCI format is DCI format 2_8, and the second DCI format is DCI format 1_1). The second DCI format is used for scheduling PDSCHs or PUSCHs and/or for activating or deactivating beam configurations, etc., and the embodiments of this disclosure are not limited thereto.

In some embodiments, the DCI in the first DCI format and the DCI in the second DCI format are monitored at identical or different SSs, and/or adopt identical or different RNTIs (such as for scrambling CRC).

In some embodiments, the first DCI format may be a newly-introduced DCI format (e.g. DCI format 2_8, or 2_9, or 2_10, etc.), or may an existing DCI format (e.g. 1_1, or 2_0, etc.) (the existing DCI format further supports functions in the embodiments of this disclosure), and the embodiments of this disclosure are not limited thereto.

In some embodiments, the first DCI format is unicast or group common, and the DCI in the first DCI format includes one or more first information fields for indicating beams, and/or one or more second information fields for indicating time domain resources, and/or one or more third information fields for indicating subcarrier spacings. However, this disclosure is not limited thereto, for example, the DCI in the first DCI format may also include other information fields, such as one or more information fields indicating whether the first information fields indicate beams, or one or more information fields indicating ON/OFF.

In some embodiments, the beams refer to beams of the access link or beams of a link between the NCR and a terminal equipment, or beams of the NCR used for receiving signals from and/or transmit signals to a terminal equipment. Or, the beams refer to physical beams of an access link that may possibly be used by the NCR or physical beams of an access link used by the NCR for forwarding.

The first information fields shall be described below first.

In some embodiments, a first information field is used to indicate one beam index, or indicate at most one beam index, or indicate multiple beam indices. The beam index may include a beam index corresponding to a beam (or (an actual) physical beam) and/or a beam index not corresponding to a beam (or (an actual) physical beam).

In some embodiments, a beam index range is predefined and/or is configured/indicated by higher-layer signaling. For example, all beam indices within the beam index range are predefined or are configured/indicated by the higher-layer signaling, or some beam indices therein are predefined while others are configured/indicated by the higher-layer signaling. For the latter case, for example, beam indices corresponding to beams are predefined, beam indices not corresponding to beams are configured/indicated by the higher-layer signaling; however, it is not limited thereto.

For example, the beam index range is $\{X, X + 1, ... , X + N_{\text{BI}} - 1\}$; where, $X$ and $N_{\text{BI}}$ are predefined and/or are configured/indicated by the higher-layer signaling. For example, $X$ denotes a starting beam index or a minimum/lowest beam index, and $N_{\text{BI}}$ denotes the number of beam indices; where, $X = 0$ or $X = 1$ or $X = -1$ or $X = -2$ or $X$ is another value, and $N_{\text{BI}} = 1$ or $N_{\text{BI}} = 2$ or $N_{\text{BI}} = 4$ or $N_{\text{BI}} = 8$ or $N_{\text{BI}}$ is another value, which shall not be enumerated herein any further. All $N_{\text{BI}}$ beam indices correspond respectively to actual physical beams. For example, assuming that there are $N_{\text{beam}}^{\text{AC}}$ actual physical beams, $N_{\text{BI}} = N_{\text{beam}}^{\text{AC}}$. Or, parts of beam indices in $N_{\text{BI}}$ beam indices correspond to the actual physical beams, while others do not correspond to the actual physical beams. For example, assuming there are $N_{\text{beam}}^{\text{AC}}$ actual physical beams,

$$N_{\mathrm{BI}} = N_{\mathrm{beam}}^{\mathrm{AC}} + 1$$ , beam index $X$ does not correspond to the actual physical beam, and beam indices {$X$ + 1, $X$ + 2, ..., $X$ + $N_{\mathrm{BI}}$ - 1} correspond respectively to the actual physical beams, or beam indices {$X$, $X$ + 1, ..., $X$ + $N_{\mathrm{BI}}$ - 2} correspond respectively to the actual physical beams, and beam index $X$ + $N_{\mathrm{BI}}$ - 1 does not correspond to the actual physical beam.

Wherein, the actual physical beam $N_{\mathrm{beam}}^{\mathrm{AC}}$ is predefined and/or is configured/indicated by the higher-layer signaling, for example, $N_{\mathrm{beam}}^{\mathrm{AC}} = 1$ or $N_{\mathrm{beam}}^{\mathrm{AC}} = 2$ or $N_{\mathrm{beam}}^{\mathrm{AC}} = 4$ or $N_{\mathrm{beam}}^{\mathrm{AC}} = 8$ or $N_{\mathrm{beam}}^{\mathrm{AC}}$ is another value, which shall not be enumerated herein any further. In the above example, values in the beam index range are continuous; however, this disclosure is not limited thereto, and they may also be discontinuous.

In some embodiments, the correspondence between beam indices and beams may be predefined and/or may be configured by higher-layer signaling and/or OAM. In the case where it is configured by OAM, specific information exchanged is dependent on implementations. For example, the mobile termination of the repeater (NCR-MT) may report beam/antenna-related characteristics via OAM, and the network device may configure the beams and/or beam indices of the NCR via OAM. The information exchanged between the NCR-MT and the network device via OAM is carried by, for example, data radio bearers (DRBs).

In some embodiments, the NCR-MT may indicate/report a maximum number of DRBs it supports in a UE capability (*UECapabilityInformation message*), and if the maximum number is not indicated/reported (or does not exist in the UE capability), the NCR-MT does not support DRBs. Based on the DRBs, the NCR-MT is connected to an OAM system via a protocol data unit (PDU) session or a packet data network (PDN) session (data of the PDU session or the PDN session being carried by DRBs). That is, the NCR-MT may establish a PDU session or a PDN session for OAM, thereby exchanging information of OAM via the PDU session or the PDN session. For the PDU session or the PDN session, the NCR-MT may use an ordinary terminal equipment process to acquire an IP address/prefix from a core network.

In some embodiments, the beam index not corresponding to beam is predefined and/or is configured/indicated by the higher-layer signaling.

In some embodiments, in a case where the beam indices include a beam index corresponding to the beam and a beam index not corresponding to the beam, the former are referred to as, for example, valid beam index (first beam index), and the latter are referred to as, for example, invalid beam index (second beam index). That is, if the first information field indicates the valid beam index, the first information field indicates a beam to which the index corresponds, and if the first information field indicates the invalid beam index, the first information field does not indicate a beam. In some cases, the first information field must indicate the valid beam index, or the first information field may indicate the valid beam index or the invalid beam index.

In some embodiments, bit values of the first information field include bit values with corresponding beam indices and/or bit values with no corresponding beam indices, including all values of (bits in) the first information fields have corresponding beam indices, or parts of values have corresponding beam indices, and others have not. For the latter case, the first information field must indicate the beam index (i.e. the first information fields must be set to be of a value with corresponding beam index), or, the first information field may indicate the beam index or not (that is, the first information field may be set to be of a value with corresponding beam index (i.e. indicating the beam index) or a value without corresponding beam index (i.e. not indicating the beam index)); where, the 'a value without corresponding beam index' includes: a value not corresponding to any physical beam (assuming that the beam index include only beam index corresponding to actually existing physical beam), and/or reserved values, and/or a value used to provide other information (such as used to indicate ON/OFF of the NCR-Fwd, etc.) (assuming that the first information fields are used to indicate both beams and ON/OFF of the NCR-Fwd), and/or predefined specific value (such as all '0's, all '1's, etc., which shall not be enumerated herein any further). The specific value is used for, for example, some specific cases. For example, it is specified in protocols that in some cases, the first information field should be set to be of the specific value, or if the first information field is set to be of the specific value, they will affect how the NCR-MT processes/understands one or more other information bits or information fields in the DCI; however, this disclosure is not limited thereto. If the first information field does not indicate a beam index, the first information field does not indicate a beam. Based on the above explanations of the beam indices, that is, "a first information field has not indicated/does not indicate a beam" includes that: the first information field indicates invalid beam index and/or the first information field has not indicated/does not indicate a beam index. That 'the first information field indicates a beam' includes that: the first information field indicates valid beam index and/or the first information field indicates a beam index.

In some embodiments, the first information field must indicate a beam, or the first information field may indicate a beam or may not indicate a beam.

The first information field shall be illustrated below by taking tables 1-7 as examples.

Table 1 shows an example of that the first information field indicate a beam

| First information field (bit values) | Beam index | Whether it corresponds to a physical beam |
|---|---|---|
| 000 | 0 | Yes |
| 001 | 1 | Yes |
| 010 | 2 | Yes |
| 011 | 3 | Yes |
| 100 | Reserved | No |
| 101 | Reserved | No |
| 110 | Reserved | No |
| 111 | Reserved | No |

As shown in Table 1, $N_{\mathrm{beam}}^{\mathrm{AC}} = 4$, and the beam index only includes valid beam indices {0,1,2,3}. Bit values of a part of the first information field, such as 110, 101, 110, 111, are reserved, and there are no corresponding beam indices.

Table 2 shows an example of that the first information field indicate a beam

| First information field (bit values) | Beam index | Whether it corresponds to a physical beam |
|---|---|---|
| 000 | 0 | Yes |
| 001 | 1 | Yes |
| 010 | 2 | Yes |
| 011 | 3 | Yes |
| 100 | Reserved | No |
| 101 | Reserved | No |
| 110 | Reserved | No |
| 111 | -1 | No |

As shown in Table 2, $N_{\mathrm{beam}}^{\mathrm{AC}} = 4$, and the beam indices include valid beam indices {0,1,2,3} and an invalid beam index {-1}. Bit values of a part of the first information field, such as 110, 101, 110, are reserved, and there are no corresponding beam indices.

Table 3 shows an example of that the first information field indicate a beam

| First information field (bit values) | Beam index | Whether it corresponds to a physical beam |
|---|---|---|
| 000 | -1 | No |
| 001 | 0 | Yes |
| 010 | 1 | Yes |
| 011 | 2 | Yes |
| 100 | 3 | Yes |
| 101 | Reserved | No |
| 110 | Reserved | No |
| 111 | Reserved | No |

As shown in Table 3, $N_{\mathrm{beam}}^{\mathrm{AC}} = 4$, and the beam indices include valid beam indices {0,1,2,3} and an invalid beam index {-1}. Bit values of a part of the first information field, such as 101, 111, 110, are reserved, and there are no corresponding beam indices.

Table 4 shows an example of that the first information field indicate a beam

| First information field (bit values) | Beam index | Whether it corresponds to a physical beam |
|---|---|---|
| 000 | 0 (or, '000' is a predefined specific value, and it is no corresponding beam index) | No |
| 001 | 1 | Yes |
| 010 | 2 | Yes |
| 011 | 3 | Yes |
| 100 | 4 | Yes |
| 101 | Reserved | No |
| 110 | Reserved | No |
| 111 | Reserved | No |

As shown in Table 4, $N_{\text{beam}}^{\text{AC}} = 4$, and the beam indices include valid beam indices {0,1,2,3} and an invalid beam index {0}, or, the beam indices include only valid beam indices {0,1,2,3}. "000" is a predefined specific value, and it is no corresponding beam index. Another part of bit values, such as 101, 111, 110, are reserved, and there are no corresponding beam indices.

Table 5 shows an example of that the first information field indicate a beam

| First information field (bit values) | Beam index | Whether it corresponds to a physical beam |
|---|---|---|
| 0 | 0 | Yes |
| 1 | Reserved | No |

As shown in Table 5, $N_{\text{beam}}^{\text{AC}} = 1$, and the beam indices include a valid beam index {0}, or, it is replaced with {1}. A bit value of a part of the first information field, such as 1, is reserved, and it is no corresponding beam index. Specifically, in the case where there is only one beam ( $N_{\text{beam}}^{\text{AC}} = 1$ ), the first information field indicates a beam index or a valid beam index, or, it may also be said that the first information field indicates that the NCR-Fwd is ON. That the first information field does not indicate a beam index or indicates an invalid beam index may also be said that the first information field indicates that the NCR-Fwd is OFF.

Table 6 shows an example of that the first information field indicates a beam

| First information field (bit values) | Beam index | Whether it corresponds to a physical beam |
|---|---|---|
| 000 | 0 | Yes |
| 001 | 1 | Yes |
| 010 | 2 | Yes |
| 011 | 3 | Yes |
| 100 | 4 | No |
| 101 | 5 | No |
| 110 | 6 | No |
| 111 | 7 | No |

As shown in Table 6, $N_{\text{beam}}^{\text{AC}} = 4$, the beam indices include valid beam indices {0,1,2,3} and invalid beam indices {4,5,6,7}, and all candidate bit values of the first information field have corresponding beam indices.

Table 7 shows an example of that the first information field indicates a beam

| First information field (bit values) | Beam index | Whether it corresponds to a physical beam |
|---|---|---|
| 00 | 0 | Yes |
| 01 | 1 | Yes |
| 10 | 2 | Yes |
| 11 | 3 | Yes |

As shown in Table 7, $N_{\text{beam}}^{\text{AC}} = 4$, the beam indices include valid beam indices {0,1,2,3} or may be replaced with {1,2,3,4}, and all candidate bit values of the first information field have corresponding beam indices.

In some embodiments, the number of first information fields in the downlink control information in the first DCI format is predefined and/or is configured or indicated by higher-layer signaling. In some embodiments, the number of first information fields or a maximum number of first information fields that may be configured (or included) for the first DCI format is related to the number of beams and/or an operating frequency band (or a frequency range (FR)) and/or bitwidths of the first information fields; however, it is not limited thereto.

For example, the number of the first information fields is predefined. For example, it is predefined that the DCI in the first DCI format includes $N_{1,\text{fields}}$ first information fields; where, $N_{1,\text{fields}} \geq 1$. For another example, it is specified in a protocol that the number of first information fields is identical to the number of second information fields, and if the number of second information fields is configured/indicated by higher-layer signaling, the number of first information fields may also be determined. For a further example, the number of first information fields is related to the number of time domain resources that is able to be indicated by the second information fields, for example, the number of first information fields is equal to a maximum number of time domain resources that is able to be indicated by the second information fields, wherein the maximum number is a maximum number 1 of time domain resources that is able to be configured or a maximum number 2 of time domain resources included by configurations in a time domain resource table to which the second information fields correspond. For example, the maximum number of time domain resources that is able to be configured by the configurations in the time domain resource table is 4. According to an actual configuration, the time domain resource table includes 2 configurations, wherein one configuration includes 2 time domain resources, and the other configuration includes one time domain resource, that is, the maximum number of time domain resources included in the configurations in the time domain resource table is 2. If the above maximum number is 1, the number of the first information fields is 4, and if the above maximum number is 2, the number of the first information fields is 2.

For example, the number of the first information fields is configured or indicated by higher-layer signaling. For example, a new higher-layer parameter 1 is introduced, which is used to configure the number $N_{1,\text{fields}}$ of the first information fields in the DCI in the first DCI format. For example, $N_{1,\text{fields}} \in \{1, 2 \ldots, N_{1,\text{fields}}^{\max}\}$ (however, it is not limited thereto, and it may also be defined as a set of discontinuous integers greater than 0), and $N_{1,\text{fields}}^{\max}$ is predefined and/or is configured/indicated by higher-layer signaling, and denotes the maximum number of the first information fields that is able to be configured for (or is able to be included by) the DCI in the first DCI format.

For example, the number of the first information fields in the downlink control information in the first DCI format is predefined and is configured or indicated by higher-layer signaling, in a case where it is not configured/indicated by the higher-layer signaling (such as when the higher-layer parameter 1 is not provided), the number of the first information fields in the first DCI format is predefined (that is, a default number is specified in a protocol, which is applied to a case where the higher-layer signaling does not configure the number of the first information fields), and in a case where it is configured/indicated by the higher-layer signaling (such as when the higher-layer parameter 1 is provided), the number of the first information fields in the first DCI format is configured/indicated by the higher-layer signaling.

In some embodiments, the bitwidths of the first information fields are predefined and/or are configured or indicated by the higher-layer signaling, wherein the bitwidths of the first information fields are the number of bits included in the first information fields. When the downlink control information includes multiple first information fields, bitwidths of different first information fields are identical or different, and beam sets and/or beam index sets to which different first information fields correspond are identical or different. In some embodiments, the bitwidths of the first information fields are related to the number of corresponding beam indices and/or the number of valid beam indices and/or the number of beams and/or the number of the first information fields and/or operating frequency bands (or frequency ranges (FRs)); however, it is not limited thereto.

For example, the bitwidth may be predefined, a bitwidth $L_{1,\text{bitwidth}}$ of a first information field defined in the protocol is a predetermined value (an integer greater than 0, such as 1, 2, 3, 4), values of $L_{1,\text{bitwidth}}$ may be defined to be identical or different for different frequency domain ranges or operating frequency bands. For example, for FR1, a value is 1 or 2, and for FR2, the value is 3 or 4. Values of $L_{1,\text{bitwidth}}$ defined for different first information fields are identical or different. Wherein, the bitwidth of the first information field defined by the protocol is determined by the number $N_{\text{BI}}$ of beam indices and/or the number $N_{\text{BI,valid}}$ of valid beam indices and/or the number $N_{\text{beam}}^{\text{AC}}$ of beams and/or another parameter M , etc. For

example, $\qquad L_{1,\text{bitwidth}} = \lceil \log_2(N_{\text{BI}}) \rceil \qquad$ or $\qquad L_{1,\text{bitwidth}} = \lceil \log_2(N_{\text{BI}} + M) \rceil \qquad$ or

$$L_{1,\text{bitwidth}} = \lceil \log_2(N_{\text{BI}}) \rceil + M \qquad \text{or} \qquad L_{1,\text{bitwidth}} = \lceil \log_2(N_{\text{beam}}^{\text{AC}}) \rceil \qquad \text{or}$$

$$L_{1,\text{bitwidth}} = \lceil \log_2(N_{\text{beam}}^{\text{AC}} + M) \rceil \qquad \text{or} \qquad L_{1,\text{bitwidth}} = \lceil \log_2(N_{\text{beam}}^{\text{AC}}) \rceil + M \qquad , \qquad \text{or}$$

$$L_{1,\text{bitwidth}} = \lceil \log_2(N_{\text{BI,valid}} + M) \rceil \text{ , or } L_{1,\text{bitwidth}} = \lceil \log_2(N_{\text{BI,valid}}) \rceil + M \text{ (in the above example,}$$

if calculation results in rounding-up symbols are always integers for all values of variables, the rounding-up symbols may be removed); where, $N_{\text{BI}}$ and $N_{\text{beam}}^{\text{AC}}$ are as described above, and M is an integer greater than 0 (e.g. M = 1 ), which is predefined and/or is configured/indicated by the higher-layer signaling. M is, for example, equal to the number of bit values in the first information field that are not used to indicate beam indices (it is assumed herein that the first information field may include bit values that are not used to indicate beam indices), or the number of values that do not correspond to beam indices (or are not used to indicate beam indices), or the number of values that do not correspond to valid beam indices, or the number of invalid beam indices, or the number of predefined specific values, or a sum of two or more of the above numbers (such as the number of invalid beam indices+the number of predefined specific values).

In some embodiments, if the number $N_{\text{BI}}$ of beam indices and/or the number $N_{\text{BI,valid}}$ of valid beam indices and/or the number $N_{\text{beam}}^{\text{AC}}$ of beams is/are configured/indicated by the higher-layer signaling (such as a higher-layer parameter), it may also be said that the higher-layer signaling (such as the higher-layer parameter) is used to indirectly/implicitly configure/indicate the bitwidths of the first information fields.

For example, the bitwidth is configured or indicated by the higher-layer signaling, one or more new higher-layer parameters 2 may be introduced to configure the bitwidth $L_{1,\text{bitwidth}}$ of the first information field. For example,

$$L_{1,\text{bitwidth}} \in \{1, 2 \dots, L_{1,\text{bitwidth}}^{\max}\} \text{ (however, it is not limited thereto, it may also be defined as a set of discontinuous}$$

integers greater than 0); where, $L_{1,\text{bitwidth}}^{\max}$ is predefined and denotes a maximum number of bitwidths that the first information fields are able to be configured. Wherein, values of $L_{1,\text{bitwidth}}^{\max}$ for different frequency ranges or operating frequency bands may be predefined to be identical or different. For example, for FR1, $L_{1,\text{bitwidth}}^{\max} \in \{1,2,3\}$, and for FR2, $L_{1,\text{bitwidth}}^{\max} \in \{1,2,3,4,5,6\}$ . Or, actually configurable maximum values of $L_{1,\text{bitwidth}}$ may be different; for example, $L_{1,\text{bitwidth}}^{\max} = 6$ , for FR1, an actually configurable maximum value of $L_{1,\text{bitwidth}}$ is 3, and for FR2, an actually configurable maximum value of $L_{1,\text{bitwidth}}$ is 6. Wherein, for different first information fields, configured values of $L_{1,\text{bitwidth}}$ are identical or different (correspondingly, corresponding numbers $N_{\text{beam}}^{\text{AC}}$ of beams and/or numbers $N_{\text{BI}}$ of beam indices and/or numbers $N_{\text{BI,valid}}$ of valid beam indices are identical or different). For example, the above higher-layer parameter 2 is introduced, and configured bitwidths are applied to all first information fields in the first DCI format. Or, multiple higher-layer parameters 2 are introduced, which are respectively used to configure bitwidths of different first information fields.

In some embodiments, it is defined in the protocol that the number $N_{\text{beam}}^{\text{AC}}$ of beams and/or the number $N_{\text{BI}}$ of beam indices and/or the number $N_{\text{BI,valid}}$ of valid beam indices is/are determined by the bitwidth $L_{1,\text{bitwidth}}$ of the first information field. For example, $N_{\text{BI}} = 2^{L_{1,\text{bitwidth}}}$ or $N_{\text{BI}} = 2^{L_{1,\text{bitwidth}}} - M$ or $N_{\text{BI}} = 2^{(L_{1,\text{bitwidth}}-M)}$ or $N_{\text{beam}}^{\text{AC}} = 2^{L_{1,\text{bitwidth}}}$ or

$$N_{\text{beam}}^{\text{AC}} = 2^{L_{1,\text{bitwidth}}} - M \text{ or } N_{\text{beam}}^{\text{AC}} = 2^{(L_{1,\text{bitwidth}} - M)} \text{ or } N_{\text{BI,valid}} = 2^{L_{1,\text{bitwidth}}} \text{ or } N_{\text{BI,valid}} = 2^{L_{1,\text{bitwidth}}} - M \text{ or }$$

$N_{\text{BI,valid}} = 2^{(L_{1,\text{bitwidth}}-M)}$, and definitions of the parameter are as described above, which shall not be repeated herein any further. In this case, if the bitwidth of the first information field is configured/indicated by the higher-layer signaling (such as the higher-layer parameter), it may also be said that the higher-layer signaling (such as the higher-layer parameter) is used to indirectly/implicitly configure/indicate the number $N_{\text{beam}}^{\text{AC}}$ of beams and/or the number $N_{\text{BI}}$ of beam indices and/or the number $N_{\text{BI,valid}}$ of valid beam indices.

For example, the bitwidth is predefined and is configured or indicated by the higher-layer signaling, in a case where the higher-layer signaling does not configure/indicate (such as when the above higher-layer parameter 2 is not provided), the bitwidth of the first information field is predefined (that is, the protocol specifies a default bitwidth, and the bitwidth is applied when the higher-layer signaling does not configure the bitwidth of the first information fields), and in a case where the higher-layer signaling configures/indicates (such as when the above higher-layer parameter 2 is provided), the bitwidth of the first information field is configured/indicated by the higher-layer signaling.

The second information fields shall be described below.

In some embodiments, a second information field is used to indicate one time domain resource index, or indicate at most one time domain resource index, or indicate multiple time domain resource indices. The index may also be replaced with a sequence number.

In some embodiments, a second information field corresponds to a time domain resource table. The time domain resource table is predefined and/or is configured by the higher-layer signaling. The time domain resource table includes one or more time domain resource configurations, and the time domain resource (TDRA) table (or simply referred to as a TDRA table) includes at least one row (column). For ease of description, one row (column) is referred to as one TDRA configuration, which includes one time domain resource or more time domain resources or does not include time domain resources. A time domain resource is continuous or discontinuous.

In some embodiments, a time domain resource is defined by one or more of the following parameters: a slot offset (used to determine a starting slot), a symbol offset (used to determine a starting symbol in a slot), number of symbols (used to determine a duration of the time domain resource), and a subcarrier spacing. These parameters are predefined and/or are configured by the higher-layer signaling, wherein the slot offset refers to an offset between a slot where the time domain resource is located or a first one of slots where the time domain resource is located and a reference point, and a range of values of the offset (such as a minimum value and/or a maximum value of the offset) is predefined and/or is configured by the higher-layer signaling. The above reference point is, for example, a slot where the DCI in the first DCI format is located or a last slot where the DCI in the first DCI format is located or a slot where a former time domain resource in the same configuration is located or a last slot where a former time domain resource in the same configuration is located. If a time domain resource configuration includes multiple time domain resources, reference points of slot offsets of different time domain resources are identical (for example, they are all slots where the DCI in the first DCI format is located) or different (for example, for a first one of time domain resources, a reference point is the slot where the DCI in the first DCI format is located, and for a subsequent time domain resource, a reference point is a slot where a former time domain resource is located). The symbol offset refers to an offset between a first one of symbols of a time domain resource and a first symbol in a slot or a first one of slots where the time domain resource is located. The symbol offset and/or the number of symbols must ensure that configured time domain resources are within the same slot, or that configured time domain resources may be within the same slot or across slots.

In some embodiments, time domain resources in a configuration may be defined in a form of a list or a sequence. For example, an IE is introduced, which includes the parameters defined above for a time domain resource. A configuration includes a list or a sequence, which includes one or more fields corresponding to the above IE.

In some embodiments, numbers of time domain resources included in each configuration in the time domain resource table are identical or different. For example, it is specified in the protocol that the numbers of time domain resources included in each configuration must be identical or may be different. When the numbers must be identical, every $T_{\text{list}}$ configurations must include $N_{\text{TR}}$ time domain resources; where, $N_{\text{TR}}$ is the number of time domain resources included in one configuration (e.g. $N_{\text{TR}} = 1$) and/or the number of the first information fields included in the DCI in the first DCI format (e.g. $N_{\text{TR}} = N_{1,\text{fields}} = 4$). When the numbers may be different, one configuration may include $N_{\text{TR}} \in \{0, 1, \dots, N_{\text{TR}}^{\max}\}$ or $N_{\text{TR}} \in \{1, 2, \dots, N_{\text{TR}}^{\max}\}$ (however, it is not limited thereto, and they may also be defined as a set of discontinuous integers greater than 0) time domain resources; where, $N_{\text{TR}}^{\max}$ is a maximum number of time domain resources that one configuration is able to include (e.g. $N_{\text{TR}} = 4$) and/or a maximum number of first information fields that the first DCI in the DCI format is able to include (e.g. $N_{\text{TR}} = N_{1,\text{fields}}^{\max} = 4$).

In some embodiments, a specific configuration in the time domain resource table does not include time domain resources. For example, it is specified in the protocol that a first configuration (with an index/sequence number 0 or 1) in the time domain resource table does not include time domain resources. The specific configuration is predefined and/or is configured/indicated by the higher-layer signaling. Wherein, if it is configured/indicated by the higher-layer signaling, for example, it is specified in the protocol that the specific configuration (such as the first configuration) must be configured to exclude time domain resources, or the specific configuration may be configured to include or exclude time domain resources.

In some embodiments, in the case where a time domain resource configuration includes multiple time domain resources, different time domain resources do not coincide/overlap, or may coincide/overlap. In the time domain resources listed in this configuration, time domain resources listed later must be after (a starting or ending position of) time domain resources listed earlier, or time domain resources listed later may be before (a starting or ending position of) time domain resources listed earlier; however, the embodiments of this disclosure are not limited thereto.

In some embodiments, the second information fields may indicate one or more time domain resources or may not indicate time domain resources by indicating the configurations in the time domain resource table.

In some embodiments, the time domain resource indices may include time domain resource indices corresponding to time domain resources and/or time domain resource indices not corresponding to time domain resources. For example, the time domain resource indices are indices or sequence numbers configured for a column (row) in the time domain resource table to which the second information fields correspond, if all configurations in the time domain resource table include time domain resources, the time domain resource indices only include time domain resource indices corresponding to time domain resources, and if configurations including time domain resources and configurations not including time domain resources exist in the time domain resource table, the time domain resource indices include time domain resource indices corresponding to time domain resources and time domain resource indices not corresponding to time domain resources. For another example, all configurations in the time domain resource list include time domain resources, if all values in the time domain resource indices correspond to the configurations in the time domain resource table, the time domain resource indices only include time domain resource indices corresponding to time domain resources, and if a part of values in the time domain resource indices correspond to the configurations in the time domain resource table and another part of values therein do not correspond to any configuration in the time domain resource table, the time domain resource indices include time domain resource indices corresponding to time domain resources and time domain resource indices not corresponding to time domain resources, wherein the time domain indices not corresponding to time domain resources are predefined and/or are configured by the higher-layer signaling.

For example, a range of the time domain resource indices is $\{I_{start}, I_{start} + 1, ..., I_{start} + N_{TI} - 1\}$; where, $I_{start}$, for example, denotes a starting time domain resource index or a minimum/lowest time domain resource index, and $N_{TI}$, for example, denotes the number of the time domain resource indices, wherein $I_{start} = 0$ or $I_{start} = 1$ or $I_{start} = -1$ or $I_{start} = -2$ or $I_{start}$ is another value, and $N_{TI} = 1$ or $N_{TI} = 2$ or $N_{TI} = 4$ or $N_{TI} = 8$ or $N_{TI}$ is another value, which shall not be illustrated herein one by one. All the $N_{TI}$ time domain resource indices correspond respectively to a configuration/row/column in the time domain resource table, such an I configurations/rows/columns in the time domain resource table, and $N_{TI} = I$. Or, a part of time domain resource indices in the $N_{TI}$ time domain resource indices correspond to the configurations in the time domain resource table, and another part thereof do not correspond to the configurations in the time domain resource table. For example, there are I configurations/rows/columns in the time domain resource table, $N_{TI} = I + 1$, a time domain resource index $I_{start}$ does not correspond to the configurations in the time domain resource table, and time domain resource indices $\{I_{start} + 1, I_{start} + 2, ..., I_{start} + N_{TI} - 1\}$ correspond respectively to the configurations in the time domain resource table, or time domain resource indices $\{I_{start}, I_{start} + 1, ..., I_{start} + N_{TI} - 2\}$ correspond respectively to the configurations in the time domain resource table, and a beam index $I_{start} + N_{TI} - 1$ does not correspond to the configurations in the time domain resource table. In the above example, values of a range of the time domain resource indices are continuous; however, this disclosure is not limited thereto, and they may also be discontinuous.

In some embodiments, in the case where the time domain resource indices include the time domain resource indices corresponding to the time domain resources and the time domain resource indices not corresponding to the time domain resources, the former is referred to as valid time domain resource indices (first time domain resource indices), and the latter is referred to as invalid time domain resource indices (second time domain resource indices). If a second information field indicates a valid time domain resource index, the second information field indicates time domain resource to which the index corresponds, and if the second information field indicates invalid time domain resource index, the second information field does not indicate time domain resource. In some cases, the second information field must indicate valid time domain resource index, or the second information field may indicate valid time domain resource index or invalid time domain resource index.

In some embodiments, bit values of the second information field include bit values with corresponding time domain resource indices and/or bit values with no corresponding time domain resource indices. For example, all values of the second information field have corresponding time domain resource indices, or a part of values thereof have corresponding time domain resource indices and another part of values thereof do not have corresponding time domain resource indices. For the latter case, the second information field must indicate a time domain resource index (that is, the second information field must be set to be a value with corresponding time domain resource index), or the second information field may indicate a time domain resource index (set to be a value with corresponding time domain resource index) or may not indicate a time domain resource index (set to be a value with no corresponding time domain resource indices).

For example, in the DCI in the first DCI format, the second information field may indicate a time domain resource index or may not indicate a time domain resource index (that is, the second information field may be set to have corresponding time domain resource index (i.e. indicating a time domain resource index) or a value with no corresponding time domain resource index (i.e. not indicating a time domain resource index); wherein 'a value with no corresponding time domain resource index' include: a value that do not correspond to any time domain resource, and/or a reserved value, and/or a value used to provide other information (such as being used to indicate ON/OFF of the NCR-Fwd, etc.) (assuming that the second information fields are used to indicate both time domain resources and ON/OFF of the NCR-Fwd), and/or a predefined specific value (such as all '0's, or all '1's, which shall not be illustrated herein any further). The specific values, for example, are used for some specific cases. For example, it is specified by the protocol that in some cases, the second information field should be set to be of the specific value, or, if the second information field is set to be of the specific value, how the NCR-MT processes/understands one or more other information bits or information fields in the DCI shall be affected; however, this disclosure is not limited thereto. If the second information field does not indicate a time domain resource index, the second information field does not indicate a time domain resource. With reference to the above explanation of the time domain resource indices, that 'the second information field has not indicated/does not indicate a time domain resource' includes that: the second information field indicates invalid a time domain resource index and/or the second information field has not indicated/does not indicate a time domain resource index. That the 'second information field indicates a beam' includes that: the second information field indicates a valid time domain resource index and/or the second information field indicate a time domain resource index.

In some embodiments, the second information field must indicates a time domain resource, or the second information field may indicate a time domain resource or does not indicate a time domain resource.

The second information field shall be illustrated below by taking tables 8-13 as examples.

Table 8 shows an example of that the second information field indicates a time domain resource

| Second information field (bit values) | Time domain resource index | Time domain resource table | Whether it corresponds to a time domain resource |
|---|---|---|---|
| 000 | 0 | First configuration | Yes |
| 001 | 1 | Second configuration | Yes |
| 010 | 2 | Third configuration | Yes |
| 011 | 3 | Fourth configuration | Yes |
| 100 | Reserved | - | No |
| 101 | Reserved | - | No |
| 110 | Reserved | - | No |
| 111 | Reserved | - | No |

As shown in Table 8, a length of the time domain resource table is $I$ = 4, and the time domain resource indices include only valid time domain resource indices {1,2,3,4}. A part of bit values 100, 101, 110, 111 are reserved values, and there are no corresponding time domain resource indices.

Table 9 shows an example of that the second information field indicates a time domain resource

| Second information field (bit values) | Time domain resource index | Time domain resource table | Whether it corresponds to a time domain resource |
|---|---|---|---|
| 000 | 0 | First configuration | Yes |
| 001 | 1 | Second configuration | Yes |
| 010 | 2 | Third configuration | Yes |
| 011 | 3 | Fourth configuration | Yes |
| 100 | Reserved | - | No |
| 101 | Reserved | - | No |
| 110 | Reserved | - | No |

(continued)

| Second information field (bit values) | Time domain resource index | Time domain resource table | Whether it corresponds to a time domain resource |
|---|---|---|---|
| 111 | -1 | - | No |

As shown in Table 9, a length of the time domain resource table is *I* = 4, and the time domain resource indices include valid time domain resource indices {1,2,3,4} and an invalid time domain resource index {-1}. A part of bit values 100, 101, 110 are reserved values, and there are no corresponding time domain resource indices.

Table 10 shows an example of that the second information field indicates a time domain resource

| Second information field (bit values) | Time domain resource index | Time domain resource table | Whether it corresponds to a time domain resource |
|---|---|---|---|
| 000 | -1 | - | No |
| 001 | 0 | First configuration | Yes |
| 010 | 1 | Second configuration | Yes |
| 011 | 2 | Third configuration | Yes |
| 100 | 3 | Fourth configuration | Yes |
| 101 | Reserved | - | No |
| 110 | Reserved | - | No |
| 111 | Reserved | - | No |

As shown in Table 10, a length of the time domain resource table is I = 4, and the time domain resource indices include valid time domain resource indices {0,1,2,3} and an invalid time domain resource index {-1}. A part of bit values 111, 101, 110 are reserved values, and there are no corresponding time domain resource indices.

Table 11 shows an example of that the second information field indicates a time domain resource

| Second information field (bit values) | Time domain resource index | Time domain resource table | Whether it corresponds to a time domain resource |
|---|---|---|---|
| 000 | 0 (or, '000' is a predefined specific value, and there are no corresponding time domain resource indices) | - | No |
| 001 | 1 | First configuration | Yes |
| 010 | 2 | Second configuration | Yes |
| 011 | 3 | Third configuration | Yes |
| 100 | 4 | Fourth configuration | Yes |
| 101 | Reserved | - | No |
| 110 | Reserved | - | No |
| 111 | Reserved | - | No |

As shown in Table 11, a length of the time domain resource table is *I* = 4, the time domain resource indices include valid time domain resource indices {1,2,3,4} and an invalid time domain resource index {0} or the time domain resource indices include only valid time domain resource indices {1,2,3,4}, '000' is a predefined specific value, and there are no corresponding time domain resource indices. Another part of bit values 111, 101, 110 are reserved values, and there are no corresponding time domain resource indices.

Table 12 shows an example of that the second information field indicates a time domain resource

| Second information field (bit values) | Time domain resource index | Time domain resource table | Whether it corresponds to a time domain resource |
|---|---|---|---|
| 00 | 0 | First configuration | No |
| 01 | 1 | Second configuration | Yes |
| 10 | 2 | Third configuration | Yes |
| 11 | 3 | Fourth configuration | Yes |

As shown in Table 12, a length of the time domain resource table is $l = 4$, the time domain resource indices include valid time domain resource indices {0,1,2,3} and an invalid time domain resource index {0}.

Table 13 shows an example of that the second information field indicates a time domain resource

| Second information field (bit values) | Time domain resource index | Time domain resource table | Whether it corresponds to a time domain resource |
|---|---|---|---|
| 00 | 0 | First configuration | Yes |
| 01 | 1 | Second configuration | Yes |
| 10 | 2 | Third configuration | Yes |
| 11 | 3 | Fourth configuration | Yes |

As shown in Table 13, a length of the time domain resource table is $l = 4$, the time domain resource indices include valid time domain resource indices {0,1,2,3} (or are replaced with {1,2,3,4}). All the bit values have corresponding time domain resource indices.

In some embodiments, the number of the second information fields is predefined and/or is configured/indicated by the higher-layer signaling. The number of the second information fields may be related to the number of the first information fields and/or the number of the time domain resources included in the configurations of the time domain resource table.

For example, when the number of the second information fields is predefined, it may be predefined that the DCI in the first DCI format includes $N_{2,\text{fields}}$ first information fields. For example, the first DCI format includes one and only one second information field, that is, $N_{2,\text{fields}} = 1$. Or, the number of the second information fields is identical to the number of first information fields, that is, $N_{2,\text{fields}} = N_{1,\text{fields}}$. Or, the DCI in the first DCI format includes $N_{1,\text{fields}} > 1$ or $N_{1,\text{fields}} \geq 1$ first information fields, and the higher-layer signaling configures one above time domain resource table. When each configuration in the time domain resource table only includes one time domain resource or includes at most one time domain resource, the DCI in the first DCI format includes $N_{2,\text{fields}} = N_{1,\text{fields}}$ second information fields (all of which correspond to the time domain resource table). When one or more configurations or at least one configuration in the time domain resource table include(s) more than one time domain resources, the DCI in the first DCI format includes $N_{2,\text{fields}} = 1$ second information field. What described above is an example only, and this disclosure is not limited thereto.

For example, when the number of the second information fields is configured/indicated by the higher-layer signaling, a new higher-layer parameter 3 is introduced, which is used to configure the number $N_{2,\text{fields}}$ of the second information fields in the first DCI format.

For example,  $N_{2,\text{fields}} \in \{1, 2 \dots, N_{2,\text{fields}}^{\max}\}$  (however, it is not limited thereto, and it may also be defined as a set of discontinuous integers greater than 0); where,  $N_{2,\text{fields}}^{\max}$  is predefined and denotes a maximum number of second information fields that the first DCI format is able to be configured.

For another example, $N_{2,\text{fields}} \in \{1, N_{1,\text{fields}}\}$, that is, the higher-layer parameter may configure that the first DCI format includes $N_{2,\text{fields}} = 1$ second information field or includes $N_{2,\text{fields}} = N_{1,\text{fields}}$ second information fields.

For a further example, the higher-layer parameter is used to configure a correspondence between the first information fields and the second information fields, thereby indirectly/implicitly configuring the number of the second information fields. For example, if it is configured as a one-to-one correspondence, $N_{2,\text{fields}} = N_{1,\text{fields}}$ second information fields are included, and if it is configured as a many-to-one (or all-to-one) correspondence, $N_{2,\text{fields}} = 1$ second information field is included. Specifically, if only one first information field is included, when the number (1) of the second information fields is configured, from a configuration perspective, it may belong to the "one-to-one correspondence" or the "many-to-one correspondence".

On the other hand, in a case where the numbers of the first information fields and the second information fields are both configured by higher-layer parameters, the numbers of the first information fields and the second information fields are configured by different higher-layer parameters, or are configured by the same higher-layer parameter (i.e. higher-layer parameter 1 and higher-layer parameter 3 are identical or different).

The numbers are configured by different higher-layer parameters respectively:

for example, a new higher-layer parameter is introduced to configure the number $N_{1,fields}$ of the first information fields, and another new higher-layer parameter is introduced to configure the number $N_{2,fields}$ of the second information fields (refer to the above explanations).

The numbers are configured by the same higher-layer parameter:

for example, a new higher-layer parameter is introduced to configure the numbers of the first information fields and the second information fields.

For example, the first information fields and the second information fields exist in pairs, and the higher-layer parameter is used to configure the number of pairs {a first information field, a second information field}. Or, the higher-layer parameter is used to configure the number of blocks (the blocks shall be described in a "listing order"). Or, the higher-layer parameters configure the numbers of the first information fields and the second information fields jointly, such as configuration a $\{N_{1,fields}, N_{2,fields}\}$ pair, which may be a configuration {N, 1} or {N, N}; where, N ≥ 1; however, it is not limited thereto. Or, the higher-layer parameters may configure the numbers of the first information fields and the second information fields respectively.

For another example, the higher-layer parameter is used to configure the number $N_{1,fields}$ of the first information fields or the number $N_{2,fields}$ of the second information fields, and at the same time, it is specified in the protocol that $N_{1,fields} = N_{2,fields}$, hence, the NCR-MT may also learn the number of the first information fields and the number of the second information fields according to the higher-layer parameter. That is, the higher-layer parameter is used to directly configure the number of the first information fields and indirectly configure the number of the second information fields, or, on the contrary, it is used to directly configure the number of the second information fields and indirectly configure the number of the first information fields.

For example, when the number of the second information fields is predefined and is configured/indicated by the higher-layer signaling, in a case where it is not configured/indicated by the higher-layer signaling (such as when the above higher-layer parameter 3 is not provided), the number of the second information fields is predefined (that is, a default number is specified in the protocol, which is applied to the case where the higher-layer signaling does not configure the number of the second information fields), and in a case where it is configured/indicated by the higher-layer signaling (such as when the above higher-layer parameter 3 is provided), the number of the second information fields is configured/indicated by the higher-layer signaling.

In some embodiments, the bitwidth of the second information field is predefined and/or is configured or indicated by the higher-layer signaling, wherein the bitwidth of the second information field is the number of bits included in the second information fields. In a case where the DCI in the first DCI format includes multiple second information fields, time domain resource tables and/or time domain resource index sets to which different second information fields correspond are identical or different, and bitwidths of different second information fields are identical or different. The bitwidth of the second information field is related to a length $I$ of a corresponding time domain resource table (i.e. the number of configurations included therein) and/or the number $N_{TI}$ of time domain resource indices and/or the number $N_{TI,valid}$ of valid time domain resource indices.

For example, the bitwidth $L_{2,bitwidth}$ of the second information field is determined by the length of the list. For example, $L_{2,bitwidth} = \lceil \log_2(I) \rceil$ or $L_{2,bitwidth} = \lceil \log_2(I) + Q \rceil$ or $L_{2,bitwidth} = \lceil \log_2(N_{TI}) \rceil$ or

$L_{2,bitwidth} = \lceil \log_2(N_{TI}) + Q \rceil$ or $L_{2,bitwidth} = \lceil \log_2(N_{TI,valid}) \rceil$ or

$L_{2,bitwidth} = \lceil \log_2(N_{TI,valid}) + Q \rceil$ ; where, $Q$ is an integer greater than 0 (for example, $Q$ = 1), which is predefined and/or is configured/indicated by the higher-layer signaling. $Q$ is, for example, equal to the number of bit values in the second information field that are not used to indicate time domain resource indices (it is assumed here that the second information field may include two parts of candidate bit values, one of which being not used to indicate time domain resource indices), or the number of values that do not correspond to time domain resource indices (or are not used to indicate time domain resource indices), or the number of values that do not correspond to valid time domain resource indices, or the number of invalid time domain resource indices, or the number of predefined specific values, or a sum of two or more of the above numbers (such as the number of invalid time domain resource indices+the number of predefined specific values), wherein the predefined specific values are as described above, which shall not be repeated herein any further. Wherein, if the time domain resource table (implicitly the length $I$) and/or the number $N_{TI}$ of time domain resource indices and/or the number $N_{TI,valid}$ of valid time domain resource indices is/are configured/indicated by the higher-layer signaling (such as a higher-layer parameter), it may also be said that the higher-layer signaling (such as the higher-layer parameter) is used to indirectly/implicitly configure/indicate the bitwidth of the second information fields.

For example, the bitwidth $L_{2,bitwidth}$ of the second information field is configured or indicated by the higher-layer signaling, for example, one or more new higher-layer parameters 4 are introduced, which are used to configure the bitwidth $L_{2,bitwidth}$ of the second information field, and reference may be made to configuring the bitwidths of the first information fields by higher-layer parameter 2, which shall not be repeated herein any further. For example, a higher-layer parameter 4 described above is introduced, and the configured bitwidths are applied to all second information fields in the DCI in the first DCI format; or, multiple higher-layer parameters 4 are introduced, which are respectively used to configure bitwidths of different second information fields.

For example, the bitwidths are predefined and configured or indicated by the higher-layer signaling. In a case where the higher-layer signaling does not configure/indicate the bitwidths (such as when higher-layer parameter 4 is not provided), the bitwidths of the second information fields are predefined (that is, the protocol specifies default bitwidths that apply when higher-layer signaling does not configure the bitwidths of the second information fields); and in a case where the higher-layer signaling configures/indicates the bitwidths (such as when higher-layer parameter 4 is provided), the bitwidths of the second information fields are configured/indicated by the higher-layer signaling.

How the first information fields and the second information fields are listed in the DCI in the first DCI format shall be described below.

In some embodiments, an order of information fields in the downlink control information includes that: all second information fields are listed after or before all first information fields, or the second information fields are listed crosswise with the first information fields.

In some embodiments, all $N_{2,fields}$ second information fields are before or after all $N_{1,fields}$ first information fields.

For example: $N_{1,fields} \geq 1$, and $N_{2,fields} = 1$.

Example 1: the second information field is after the first information fields

a first information field 1, a first information field 2,..., a first information field $N_{1,fields}$, a second information field

Example 2: the second information field is before the first information fields

a second information field, a first information field 1, a first information field 2,..., a first information field $N_{1,fields}$

For example: $N_{1,fields} \geq 1$, and $N_{2,fields} = N_{1,fields}$

Example 1: the second information fields are after the first information fields

a first information field 1, a first information field 2,..., a first information field $N_{1,fields}$, a second information field 1, a second information field 2,..., a second information field $N_{2,fields}$

Example 2: the second information fields are before the first information fields

a second information field 1, a second information field 2,..., a second information field $N_{2,fields}$, a first information field 1, a first information field 2,..., a first information field $N_{1,fields}$.

In some embodiments, the second information fields are listed crosswise (spaced apart) with the first information fields. For example, the $N_{2,fields}$ second information fields and the $N_{1,fields}$ first information field are crosswise enumerated in the first DCI format in an order of the first information fields first and then the second information fields, or are crosswise enumerated in an order of the second information fields first and then the second information fields.

For example: $N_{1,fields} \geq 1$, and $N_{2,fields} = 1$

Example 1: a first information field 1, a second information field 1, a first information field 2,..., a first information field $N_{1,fields}$

For example: $N_{1,fields} \geq 1$, and $N_{2,fields} = N_{1,fields}$

Example 1: a first information field 1, a second information field 1, a first information field 2, a first information field 2, a first information field $N_{1,fields}$, a second information field $N_{2,fields}$

Example 2: a second information field 1, a first information field 1, a second information field 2, a first information field 2,..., a second information field $N_{2,fields}$ ..., a first information field $N_{1,fields}$.

Example 3: $N_{block}$ blocks are included in the first DCI format, which are in an order of block number 1, block number 2,··· ···, block number $N_{block}$. Each block defines one or more first information fields and one or more second information fields. In one block, the first information fields and the second information fields are listed in the above order. For example, each block includes a first information field and a second information field, $N_{block} = N_{1,fields} = N_{2,fields}$, and first information fields correspond to second information fields in the same block:

Block 1: a first information field 1, a second information field 1, or, a second information field 1, a first information field 1

Block 2: a first information field 2, a second information field 2, or, a second information field 2, a first information field 2

......

Block $N_{block}$ : a first information field $N_{1,fields}$ , a second information field $N_{2,fields}$, or, a second information field $N_{2,fields}$, a first information field $N_{1,fields}$.

How to arrange the first information fields and the second information fields when the number $N_{1,fields}$ of the first information fields and the number $N_{2,fields}$ of the second information fields are different shall not be illustrated one by one any further.

A correspondence between the first information fields and the second information fields and/or a correspondence between beams (beam indices) indicated by the first information fields and time domain resources indicated by the second information fields shall be described below.

In some embodiments, the first information fields correspond one-to-one with the second information fields, or multiple first information fields correspond to one second information field, or one first information field corresponds to multiple second information fields.

(I) Regarding $N_{1,fields} \geq 1$ and $N_{2,fields} = 1$

In some embodiments, all first information fields correspond to one second information field, that is, all beams indicated by the first information fields are applied to one or more time domain resources indicated by the second information field (beams indicated by different first information fields are applied to identical or different time domain resources therein). the first information fields (or beams or beam indices or valid beam indices indicated by the first information fields) and time domain resources indicated by the second information field may be in a one-to-one correspondence or a many-to-one correspondence or a one-to-many correspondence, wherein the one-to-one correspondence refers to that a beam indicated by a first information field corresponds to a time domain resource, beams indicated by different first information fields correspond to different time domain resources indicated by a second information field, or, in other words, one time domain resource corresponds to a beam indicated by a first information field, and different time domain resources correspond to beams indicated by different first information fields; the many-to-one correspondence refers to, for example, that beams indicated by multiple first information fields correspond to the same time domain resource, and beams indicated by different first information fields in multiple first information fields correspond to different frequency domain resources; and the one-to-many correspondence refers to, for example, that a beam indicated by a first information field correspond to multiple time domain resources indicated by a second information field, and the multiple time domain resources may or may not coincide/overlap.

In some embodiments, in the DCI in the first DCI format, all first information fields must indicate beams or valid beam indices or beam indices, or at least X (e.g. at least 1) first information fields must indicate beams or indicate valid beam indices or indicate beam indices (one or more thereof may not indicate beams or valid beam indices or may not indicate beam indices). In the latter case, for example, a part of the first information fields (such as a first one of the first information fields) must indicate beams or valid beam indices or beam indices, or any first information field may indicate or may not indicate beams or valid beam indices or beam indices, and/or, in a case where an *n-th* first information field indicates an invalid beam index or does not indicate a beam or does not indicate a beam index, the *n-th* first information field and/or an *(n+1)-th* first information field and subsequent first information fields are ignored by the NCR-MT (that is, the NCR-MT only deems that former n-1 first information fields indicate beams or valid beam indices or beam indices (

$$N_{1,fields}^{valid} = n - 1$$ below), and that the first information fields are ignored by the NCR-MT refers to that forwarding is performed without needing to according to the first information fields, such as reading the first information fields but performing forwarding without needing to according to the first information fields, or not reading the first information fields and performing forwarding without needing to according to the first information fields), even if the *(n+1)-th* or the subsequent first information fields indicate beams or valid beam indices or beam index, and/or the (n+1)-th and the subsequent first information fields must indicate invalid beam indices or do not indicate beams or do not indicate beam indices.

In some embodiments, if the beams or beam indices indicated by the *n-th* first information field (excluding a first one of the first information fields) or set bit values are identical to those of a former first information field (such as a former neighbor *(n-1)-th* first information field or a first one of the first information fields), the *n-th* first information field and/or first information fields after the *n-th* first information field (an (n+1)-th and subsequent first information fields) are ignored by the NCR-MT (that is, the NCR-MT only deems that former n-1 first information fields indicate beams or valid beam indices or beam indices ( $$N_{1,fields}^{valid} = n - 1$$ below), and/or must indicate invalid beam indices or do not indicate beams or do not indicate beam indices or identical beams or beam indices or set to be of identical bit values (same as the *n-th* first information field). Specifically, the *n-th* first information field may also be referred to as an invalid first information field.

In some embodiments, the first information fields that do not indicate beams or valid beam indices or beam indices and/or the first information fields that are ignored by the NCR may be referred to as invalid first information fields, and the first information fields that indicate beams or valid beam indices or beam indices and/or the first information fields that are not ignored by the NCR may be referred to as valid first information fields.

In some embodiments, as there exists only one second information field, corresponding to the above 'all the first information fields must indicate beams or valid beam indices or beam indices', the second information field must indicate $N_{1,fields}$ time domain resources. That is, a configuration indicated by the second information field must include at least $N_{1,fields}$ (e.g. must include $N_{1,fields}$) time domain resources, namely, each configuration in the time domain resource table to which the second information field (or the DCI in the first DCI format) corresponds must include at least $N_{1,fields}$ (e.g. must include $N_{1,fields}$) time domain resources. And corresponding to above 'at least X (e.g. at least 1) first information fields indicate beams or indicate valid beam indices or indicate beam indices', the second information field must indicate at least one time domain resource. That is, a configuration indicated by the second information field must include at least X (e.g. at least one) time domain resources, namely, each configuration in the time domain resource table to which the second information field (or the DCI in the first DCI format) corresponds must include at least X (e.g. at least one) time domain resources.

In some embodiments, correspondences between the first information fields (or the beams or beam indices or the valid beam indices indicated by the first information fields) and the time domain resources indicated by the second information field are determined according to an order of the first information field listed in the DCI in the first DCI format, and/or whether the first information fields indicate beams or indicate valid beam indices or indicate beam indices, and/or an order of the time domain resources indicated by the second information field listed in the time domain resource table, and/or an order of the time domain resources indicated by the second information field in the time domain.

For example, the *n-th* first information field (or a beam or a beam index or a valid beam index indicated by the *n-th* first information field) corresponds to an *n-th* time domain resource indicated by the second information field. For another example, the *n-th* first information field indicating a beam or indicating a valid beam index or indicating a beam index (or, in other words, a beam or a beam index or a valid beam index indicated by the *n-th* first information field indicating a beam or indicating a valid beam index or indicating a beam index) corresponds to the *n-th* time domain resource indicated by the second information field.

The correspondences shall be illustrated below.

In some embodiments, when a first number $N_{1,fields}^{valid}$ ( $N_{1,fields}^{valid} = N_{1,fields}$ or $N_{1,fields}^{valid} \neq N_{1,fields}$ ) of first information fields indicate beams or indicate valid beam indices or indicate beam indices, a second information field indicates time domain resources of the first number, or a second information field indicates time domain resources of a number not less than the first number.

For example, the second information field must indicate the first number $N_{TR} = N_{1,fields}^{valid}$ of time domain resources, and $N_{1,fields}^{valid}$ first information fields (or $N_{1,fields}^{valid}$ beams or beam indices indicated by $N_{1,fields}^{valid}$ first information fields) correspond one-to-one with $N_{TR}$ time domain resources.

The correspondences are determined, for example, according to an order of the $N_{1,fields}^{valid}$ first information fields listed in the DCI in the first DCI format, and/or an order of the time domain resources listed in configurations of the time domain resource table or an order of the time domain resources in the time domain.

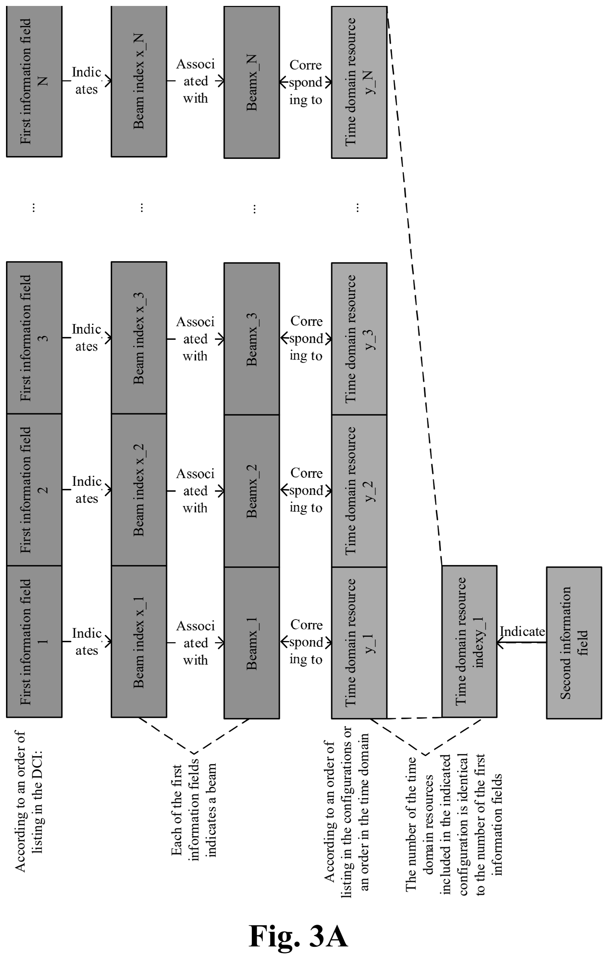

FIG. 3A is a schematic diagram of the correspondences in the embodiments of this disclosure. As shown in FIG. 3A, there are the first number of first information fields, which are listed in an order of first information field 1, first information field 2,.., first information field N in the DCI in the first DCI format. Each first information field indicates a beam, the second information field indicates the first number of time domain resources, the order of the time domain resources in the configurations of the time domain resource table or the order of the time domain resources in the time domain is y_1, y_2, y_3, ..., y_N, the first information field 1 (indicated beam index x_1, or indicated beam x_1) corresponds to the time domain resource y_1 indicated by the second information field, the first information field 2 (indicated beam index x_2, or indicated beam x_2) corresponds to the time domain resource y_2 indicated by the second information field, and so on, and the first information field N (indicated beam index x_N, or indicated beam x_N) corresponds to the time domain resource y_N indicated by the second information field.

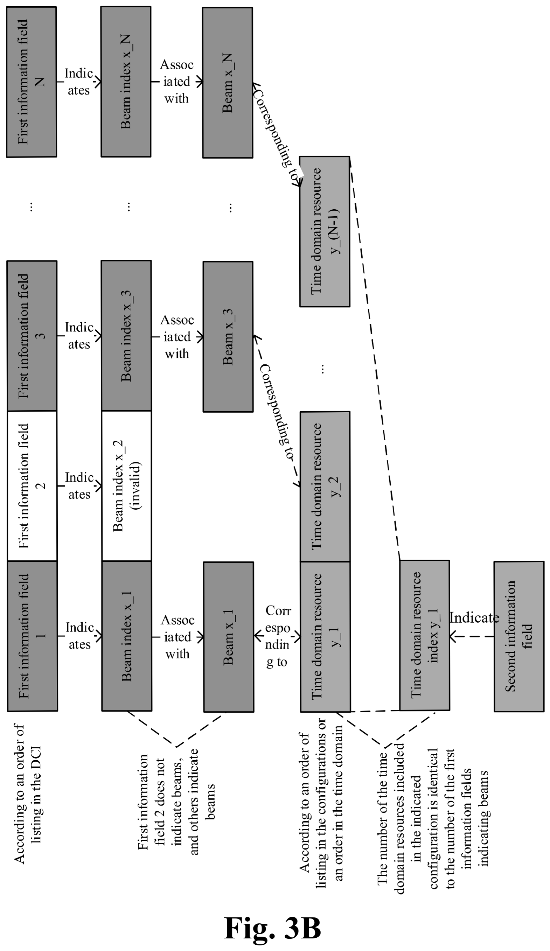

FIG. 3B is a schematic diagram of the correspondences in the embodiments of this disclosure. As shown in FIG. 3B, there are N first information fields, which are listed in an order of first information field 1, first information field 2,.., first information field N in the DCI in the first DCI format, only a first number N-1 of first information fields indicate valid beam indices, the second information field indicates the first number N-1 of time domain resources, the order of the first number of time domain resources in the configurations of the time domain resource table or the order of the time domain resources in the time domain is y_1, y_2, y_3, ..., y_N, the first information field 1 (indicated beam index x_1, or indicated beam x_1) corresponds to the time domain resource y_1 indicated by the second information field, the first information field 3 (indicated beam index x_3, or indicated beam x_3) corresponds to the time domain resource y_2 indicated by the second information field, and so on, and the first information field N (indicated beam index x_N, or indicated beam x_N) corresponds to the time domain resource y_N-1 indicated by the second information field.

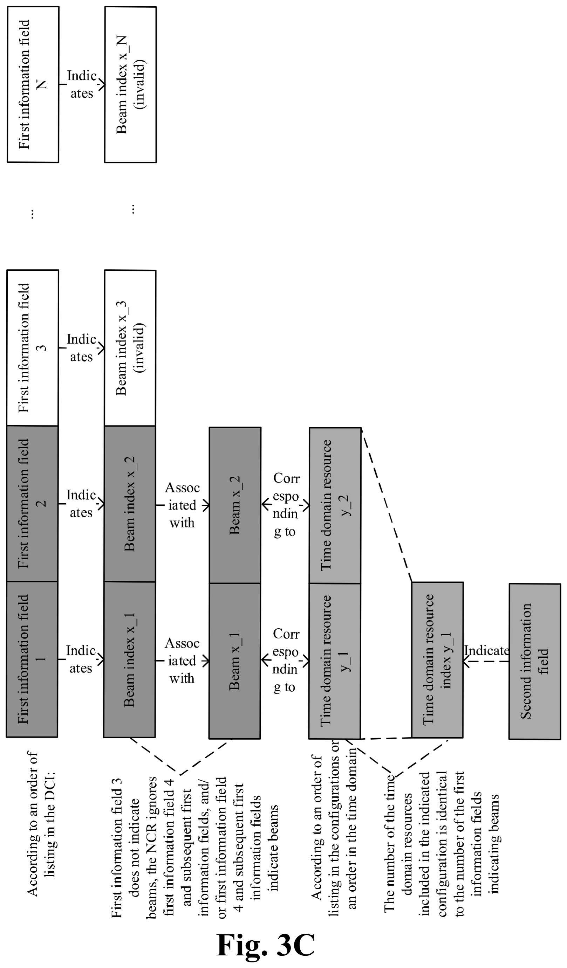

FIG. 3C is a schematic diagram of the correspondences in the embodiments of this disclosure. As shown in FIG. 3C, there are N first information fields, which are listed in an order of first information field 1, first information field 2,.., first information field N in the DCI in the first DCI format, only a first number 2 of first information fields (first information field 1 and first information field 2) indicate valid beam indices, the second information field indicates the first number 2 of time domain resources, the order of the first number 2 of time domain resources in the configurations of the time domain resource table or the order of the time domain resources in the time domain is y_1, y_2, the first information field 1 (indicated beam index x_1, or indicated beam x_1) corresponds to the time domain resource y_1 indicated by the second information field, and the first information field 2 (indicated beam index x_2, or indicated beam x_2) corresponds to the time domain resource y_2 indicated by the second information field.

For example, the second information field may indicate $N_{TR} \geq N_{1,fields}^{valid}$ time domain resources, and $N_{1,fields}^{valid}$ first information fields (or $N_{1,fields}^{valid}$ beams or beam indices indicated by $N_{1,fields}^{valid}$ first information fields) correspond one-to-one with $N_{1,fields}^{valid}$ of the time domain resources therein. The $N_{1,fields}^{valid}$ time domain resources refer to, for example, former $N_{1,fields}^{valid}$ time domain resources in $N_{TR}$ time domain resources, such as former $N_{1,fields}^{valid}$ time domain resources listed in the configurations of the time domain resource table or former $N_{1,fields}^{valid}$ time domain resources in the time domain. The NCR may ignore subsequent (or remaining) time domain resources; however, it is not limited thereto, and the $N_{1,fields}^{valid}$ time domain resources may also be other $N_{1,fields}^{valid}$ time domain resources in $N_{TR}$ time domain resources.

The correspondences are determined according to, for example, an order of the $N_{1,fields}$ first information fields listed in the first DCI format and/or an order of the $N_{1,fields}^{valid}$ first information fields listed in the first DCI format, and/or an order of the time domain resources listed in the configurations of the time domain resource table and/or an order of the time domain resources listed in the time domain.

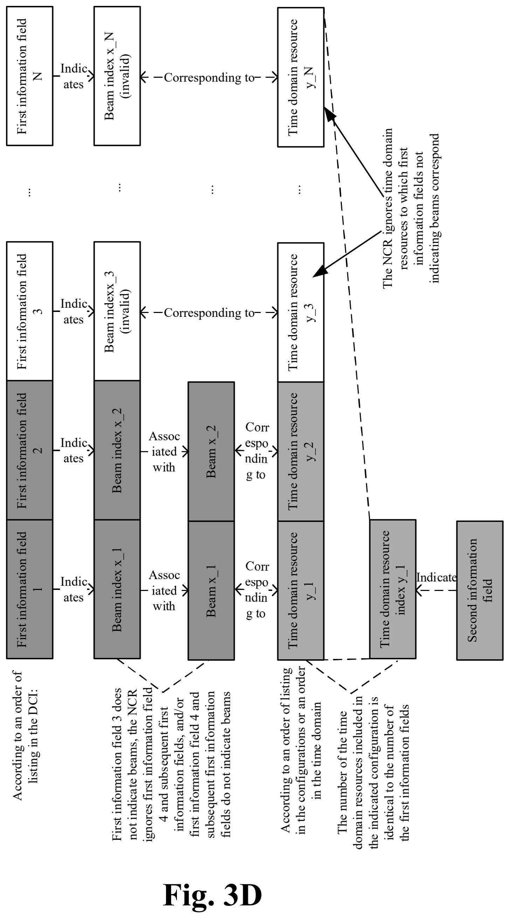

FIG. 3D is a schematic diagram of the correspondences in the embodiments of this disclosure. As shown in FIG. 3D, there are N first information fields, which are listed in an order of first information field 1, first information field 2,.., first information field N in the DCI in the first DCI format, only a first number 2 of first information fields (first information field 1 and first information field 2) indicate valid beam indices, the second information field indicates time domain resources of a number (such as N) greater than the first number, the order of the N time domain resources in the configurations of the time domain resource table or the order of the time domain resources in the time domain is y_1, y_2,... y_N, the first information field 1 (indicated beam index x_1, or indicated beam x_1) corresponds to the time domain resource y_1 indicated by the second information field, the first information field 2 (indicated beam index x_2, or indicated beam x_2) corresponds to the time domain resource y_2 indicated by the second information field, the first information field 3 (indicating an invalid beam index) corresponds to the time domain resource y_3 indicated by the second information field, and so on, and the first information field N (indicating an invalid beam index) corresponds to the time domain resource y_N indicated by the second information field. As the first information field 3 does not indicate a beam, the NCR ignores the first information field 4 and subsequent first information fields, that is, the NCR ignores time domain resources to which first information fields not indicating beams correspond, and/or, the first information field 4 and subsequent first information fields do not indicate beams.

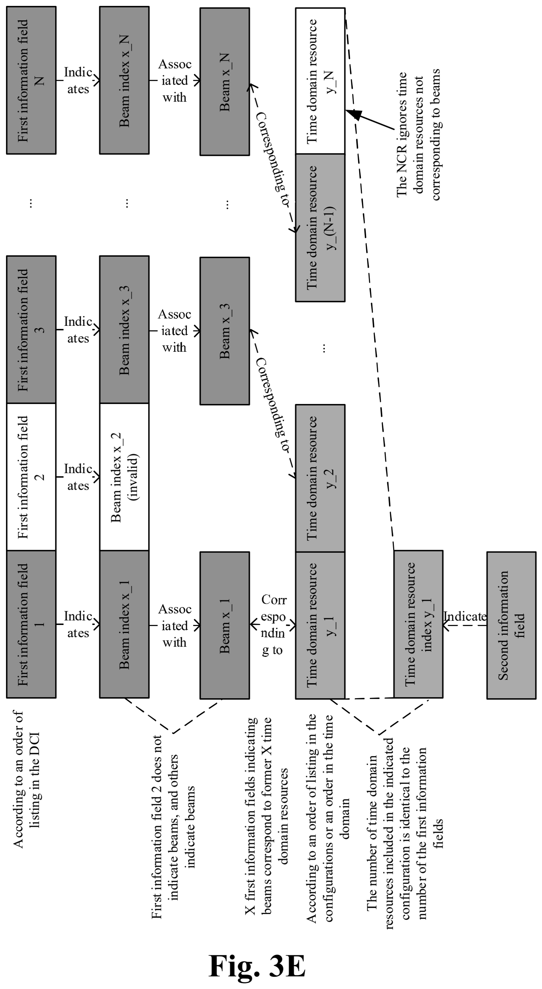

FIG. 3E is a schematic diagram of the correspondences in the embodiments of this disclosure. As shown in FIG. 3E, there are N first information fields, which are listed in an order of first information field 1, first information field 2,..., first information field N in the DCI in the first DCI format, and a first number N-1 of first information fields indicate valid beam indices. Additionally, the second information field 2 does not indicate beams, and the second information field indicates time domain resources of a number greater than the first number (e.g. N). An order of the N time domain resources listed in the configurations of the time domain resource table or an order of the time domain resources in the time domain is y_1, y_2,..., y_N, and the first number of first information fields indicating beams correspond to former first number of time domain resources. The first information field 1 (indicated beam index x_1, or beam x_1) corresponds to the time domain resource y_1 indicated by the second information field, the first information field 3 (indicated beam index x_3, or beam x_3) corresponds to the time domain resource y_2 indicated by the second information field, and so on. The first information field N (indicated beam index x_N, or beam x_N) corresponds to the time domain resource y_N-1 indicated by the second information field. The NCR ignores time domain resources having no corresponding beams (or remaining time domain resources).

In the above examples, it is assumed that the number of the time domain resources indicated by the second information field is identical to the number of the first information fields. However, this disclosure is not limited thereto, and it may also be greater than or less than the number of the first information fields.

In the above examples, a beam indicated by a first information field corresponds to a time domain resource (i.e. the above case of one-to-one correspondence), and beams indicated by different first information fields correspond to different time domain resources indicated by a second information field; however, the embodiments of this disclosure are not limited thereto.

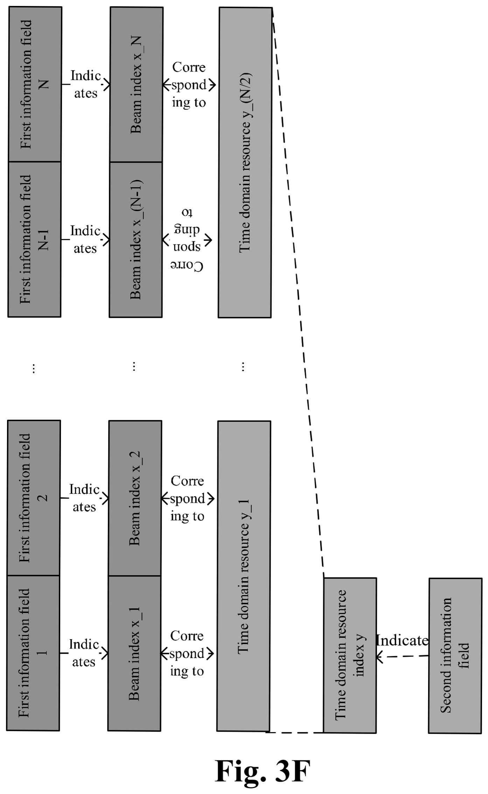

FIG. 3F is a schematic diagram of the correspondences in the embodiments of this disclosure. As shown in FIG. 3F, beams indicated by multiple first information fields correspond to the same time domain resource (the above case of many-to-one correspondence), wherein there are total N first information fields, which are in an order of first information field 1, first information field 2,..., first information field N in the DCI in the first DCI format, and all of which indicate beam indices. The second information field indicates N/2 time domain resources, which are in an order of y_1, y_2,..., y_N/2 listed in the configurations of the time domain resource table or in the time domain. The first information field 1 (indicated beam index x_1) corresponds to the time domain resource y_1 indicated by the second information field, and the first information field 2 (indicated beam index x_2) corresponds to the time domain resource y_1 indicated by the second information field. Every two first information fields correspond to one time domain resource, and so on. The first information field N-1 (indicated beam index x_N-1) and the first information field N (indicated beam index x_N) correspond to the time domain resource y_N/2 indicated by the second information field.

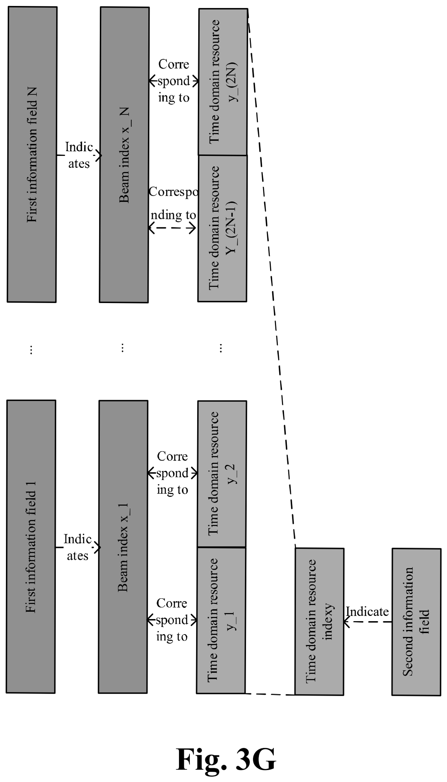

FIG. 3G is a schematic diagram of the correspondences in the embodiments of this disclosure. As shown in FIG. 3G, a beam indicated by a first information field correspond to multiple time domain resources (the above case of one-to-many correspondence) indicated by a second information field, wherein there are total N first information fields, which are in an order of first information field 1, first information field 2,..., first information field N in the DCI in the first DCI format, and all of which indicate beam indices. The second information field indicates 2N time domain resources, which are in an order of y_1, y_2,..., y_2N listed in the configurations of the time domain resource table or in the time domain. The first information field 1 (indicated beam index x_1) corresponds to the time domain resources y_1 and y_2 indicated by the second information field, and one first information field corresponds to two time domain resources, and so on. The first information field N (indicated beam index x_N) corresponds to the time domain resources y_2N-1 and y_2N indicated by the second information field.

(II) Regarding $N_{1,\text{fields}} \geq 1$ and $N_{2,\text{fields}} = N_{1,\text{fields}}$

In some embodiments, the first information fields (or, in other words, beams or beam indices indicated by the first information fields) correspond one-to-one or many-to-one or one-to-many with the second information fields (or time domain resources indicated by the second information fields). Wherein, the one-to-one correspondence refers to, for example, that a beam indicated by a first information field corresponds to a time domain resource indicated by a second information field, beams indicated by different first information fields correspond to time domain resources indicated by different second information fields, or, on the contrary, a time domain resource indicated by a second information field corresponds to a beam indicated by a first information field, and time domain resources indicated by different second information fields correspond to beams indicated by different first information fields; the many-to-one correspondence refers to, for example, that beams indicated by multiple first information fields correspond to same time domain resource indicated by the same second information field, and beams indicated by different first information fields in the multiple first information fields are for different frequency domain resources and/or for different frequency domain resources indicated by the second information field; and the one-to-many correspondence refers to, for example, that beams indicated by a first information field correspond to time domain resources indicated by multiple second information fields, and the time domain resources indicated by the multiple second information fields may or may not coincide/overlap.

In some embodiments, in the DCI in the first DCI format, all the first information fields must indicate beams or valid beam indices or beam indices, or at least X (e.g. at least 1) first information fields must indicate beams or valid beam indices or indicate beam indices (there may be one or more first information fields that do not indicate beams or valid beam indices or do not indicate beam indices). In the latter case, for example, a part of the first information fields (such as a first one of first information fields) must indicate beams or valid beam indices or beam indices, or any first information field may indicate or may not indicate beams or valid beam indices or beam indices, and/or, in a case where an *n-th* first information field indicates an invalid beam index or does not indicate a beam or does not indicate a beam index, the *n-th* first information field and/or an *(n+1)-th* first information field and subsequent first information fields are ignored by the NCR-MT (that is, the NCR-MT only deems that former n-1 first information fields indicate beams or valid beam indices or beam indices (

$$N_{1,\text{fields}}^{\text{valid}} = n - 1$$

below), and that the first information fields are ignored by the NCR-MT refers to that forwarding is performed without needing to according to the first information fields, such as reading the first information fields but without needing to perform forwarding according to the first information fields, or not reading the first information fields and without needing to perform forwarding according to the first information fields), even if the *(n+1)-th* or the subsequent first information fields indicate beams or valid beam indices, and/or the (n+1)-th and the subsequent first information fields must indicate invalid beam indices or do not indicate beams or do not indicate beam indices, and/or the *n-th* and the subsequent second information fields are ignored by the NCR-MT and/or the *n-th* and the subsequent second information fields must indicate invalid time domain resource indices or do not indicate time domain resources or do not indicate time domain resource indices (assuming the *n-th* first information field corresponds to the *n-th* second information field).

In some embodiments, in the DCI in the first DCI format, all the second information fields must indicate time domain resources or valid time domain resource indices or time domain resource indices, or at least Y (e.g. at least 1 or Y=X) second information fields must indicate time domain resources or valid time domain resource indices or time domain resource indices (there may be one or more second information fields that do not indicate time domain resources or do not indicate valid time domain resource indices or do not indicate time domain resource indices). In the latter case, for example, a part of the second information fields (such as a first one of the second information fields) must indicate time domain resources or valid time domain resource indices or time domain resource indices, or any second information field may indicate or may not indicate time domain resources or valid time domain resource indices or time domain resource indices, and/or, if an *m-th* second information field indicates an invalid time domain resource index or does not indicate a time domain resource or does not indicate a time domain resource index, the *m-th* second information field and/or an *(m+1)-th* second information field and subsequent second information fields are ignored by the NCR-MT (that is, the NCR-MT only deems that former m-1 second information fields indicate time domain resources or valid time domain resource indices or time domain resource indices ( $N_{2,\text{fields}}^{\text{valid}} = m - 1$ below), and that the second information fields are ignored by the NCR-MT refers to that forwarding is performed without needing to according to the second information fields, such as reading the second information fields but performing forwarding without needing to according to the second information fields, or not reading the second information fields and performing forwarding without needing to according to the second information fields), even if the *(m+1)-th* or the subsequent second information fields indicate(s) time domain resources or valid time domain resource indices, and/or the *(m+1)-th* or the subsequent second information fields must indicate invalid time domain resource indices or do(es) not indicate time domain resources or do(es) not indicate time domain resource indices, and/or the *m-th* or the subsequent first information fields is/are ignored by the NCR-MT and/or the *m-th* or the subsequent first information fields must indicate invalid beam indices or do(es) not indicate beams or do(es) not indicate beam indices (assuming that the *m-th* second information field corresponds to the *m-th* first information field).

In some embodiments, a second information field that does not indicate time domain resources or valid time domain resource indices or time domain resource indices and/or a second information field that is ignored by the NCR may be referred to as an invalid second information field, and a second information field that indicates time domain resources or valid time domain resource indices or time domain resource indices and/or a second information field that is not ignored by the NCR may be referred to as a valid second information field.

In some embodiments, if the beams or beam indices indicated by the *n-th* first information field (excluding a first one of the first information fields) or set bit values are identical to those of a former first information field (such as a former neighbor *(n-1)-th* first information field or a first one of the first information fields), the *n-th* first information field and/or first information fields after the *n-th* first information field (an (n+1)-th and subsequent first information fields) are ignored by the NCR-MT (that is, the NCR-MT only deems former n-1 first information fields indicate beams or valid beam indices or beam indices, and/or must indicate invalid beam indices or do not indicate beams or do not indicate beam indices or identical beams or beam indices or set to be of identical bit values (same as the *n-th* first information field).

In some embodiments, if the time domain resources or time domain resources indices indicated by the *m-th* second information field (excluding a first one of the second information fields) or set bit values are identical to those of a former second information field (such as a former neighbor *(m-1)-th* second information field or a first one of the second information fields), the *m-th* second information field and/or second information fields after the *m-th* second information field (an *(m+1)-th* and subsequent second information fields) are ignored by the NCR-MT (that is, the NCR-MT only deems that former m-1 second information fields indicate time domain resources or valid time domain resource indices or time domain resource indices ( $N_{2,\text{fields}}^{\text{valid}} = m - 1$ below), and/or must indicate invalid time domain resource indices or do not indicate time domain resources or do not indicate time domain resource indices or identical time domain resources or time domain resource indices or set to be of identical bit values (same as the *m-th* second information field). Specifically, the *m-th* second information field may also be referred to as an invalid second information field.

In some embodiments, if a first information field in a *p-th* block indicates invalid beam indices or does not indicate beams or does not indicate beam indices, and/or a second information field indicates an invalid time domain resource index or does not indicate time domain resources or does not indicate time domain resource indices or time domain resource or time domain resource index indicated thereby or set bit values are identical to a second information field in a previous block (such as a neighbor previous (p-1)-th or a first one of blocks), the NCR ignores the *p-th* block and/or subsequent (a *(p+1)-th* and subsequent) blocks, and/or bits in the subsequent blocks are set to be specific values (such as all '0's). The subsequent blocks may also be referred to as invalid blocks.

In some embodiments, for a case where there are multiple second information fields, different second information fields are based on identical or different time domain resource tables. A new higher-layer parameter *field* and/or an IE may be introduced into the higher-layer signaling to configure a time domain resource table for the second information fields (or for the first DCI format). When the time domain resource tables are identical, one time domain resource table is configured only, and all the second information fields in the DCI in the first DCI format are based on this time domain resource table. At this point, bitwidths of different second information fields are identical or different. When the time domain resource tables are different, more than one time domain resource tables may be configured, and different time domain resource tables correspond to different second information fields. At this point, bitwidths of different second information fields are identical or different. For example, the configurations in the above time domain resource table respectively include one time domain resource or at least one time domain resource, or one or more configurations therein do not include time domain resources, and other configurations respectively include one time domain resource, which shall not be illustrated herein any further. In some cases, whether the second information fields are based on identical or different time domain resource tables is dependent on the number of the time domain resource tables or are related to the number of time domain resource tables. In a case where there is only one time domain resource table, they are all based on the one time domain resource table, and in a case where there are multiple time domain resource tables, different second information fields may be based on different time domain resource tables. For example, the above higher-layer signaling may configure one or more time domain resource tables, if one time domain resource table is configured, the above multiple second information fields are all based on this time domain resource table, and if the number of configured time domain resource tables is identical to that of the second information fields, the second information fields correspond one-to-one with the configured time domain resource tables, such as in an order of the second information fields listed in DCI and an order of the time domain resource tables listed in the higher-layer signaling (a first one of second information fields is based on a first one of time domain resource tables, and so on).

In some embodiments, the correspondences between the first information fields (or the beams or beam indices or the valid beam indices indicated by the first information fields) and the second information fields (or the time domain resources or time domain resource indices or the valid time domain resource indices indicated by the second information fields) are determined in an order of the first information fields listed in the DCI in the first DCI format, and/or whether the first information fields indicate beams or indicate valid beam indices or indicate beam indices, and/or an order of the second information fields listed in the DCI in the first DCI format, and/or whether the second information fields indicate time domain resources or indicate valid time domain resource indices or indicate time domain resource indices, and/or an order of the time domain resources indicated by the second information fields in the time domain.

For example, the *n-th* first information field (or the beam or the beam index or the valid beam index indicated by the *n-th* first information field) in the first DCI format corresponds to the *n-th* second information field (or the time domain resource or the time domain resource index or the valid time domain resource index indicated by the *n-th* second information field). For another example, in an *n-th* block in the DCI in the first DCI format, a first information field (or a beam or a beam index or a valid beam index indicated by the first information field) corresponds to a second information field (or a time domain resource or a time domain resource index or a valid time domain resource index indicated by the second information field). For a further example, an *n-th* first information field indicating a beam or a beam index or a valid beam index (or, in other words, a beam or a beam index or a valid beam index indicated by an *n-th* first information field indicating a beam or a beam index or a valid beam index) corresponds to an *n-th* second information field indicating a time domain resource or a time domain resource index or a valid time domain resource index (or, in other words, a time domain resource or a time domain resource index or a valid time domain resource index indicated by an *n-th* second information field indicating a time domain resource or a time domain resource index or a valid time domain resource index), which shall not be illustrated herein one by one any further.

In some embodiments, the number of the second information fields indicating time domain resources or valid time domain resource indices or time domain resource indices is limited by the number of the first information fields indicating beams or valid beam indices or beam indices, or the number of the first information fields indicating beams or valid beam indices or beam indices is limited by the number of the second information fields indicating time domain resources or valid time domain resource indices or time domain resource indices.

In some embodiments, whether a second information field must indicate a time domain resource or a valid time domain resource index or a time domain resource index is limited by a first information field to which it corresponds, or whether a first information field must indicate a beam or a valid beam index or a beam index is limited by a second information field to which it corresponds. For example, if the *n-th* first information field indicates a beam or a valid beam index or a beam index, the *n-th* second information field must indicate a time domain resource or a valid time domain resource index or a time domain resource index, or if the *n-th* second information field must indicate a time domain resource or a valid time domain resource index or a time domain resource index, the *n-th* first information field indicates a beam or a valid beam index or a beam index. For another example, if a first information field in the *n-th* block indicates a beam or a valid beam index or a beam index, an second information field therein must indicate a time domain resource or a valid time domain resource index or a time domain resource index, or if a second information field in the *n-th* block must indicate a time domain resource or a valid time domain resource index or a time domain resource index, a first information field therein must indicate a beam or a valid beam index or a beam index.

The correspondences shall be illustrated below.

When the first information fields are dominant, in some embodiments, when a first number $N_{1,\text{fields}}^{\text{valid}}$ ( $N_{1,\text{fields}}^{\text{valid}} = N_{1,\text{fields}}$ or $N_{1,\text{fields}}^{\text{valid}} \neq N_{1,\text{fields}}$ ) of first information fields indicate beams or indicate valid beam indices or indicate beam indices, a second number $N_{2,\text{fields}}^{\text{valid}}$ of second information fields in all the second information fields indicate time domain resources or valid time domain resource indices or time domain resource indices, wherein the second number is equal to the first number, or the second number is greater than the first number.

For example, $N_{2,\text{fields}}^{\text{valid}} = N_{1,\text{fields}}^{\text{valid}}$ second information fields indicate time domain resources or valid time domain resource indices or time domain resource indices, and the $N_{1,\text{fields}}^{\text{valid}}$ first information fields correspond one-to-one with the $N_{2,\text{fields}}^{\text{valid}}$ second information fields. For example, the $N_{1,\text{fields}}^{\text{valid}}$ first information fields are former $N_{1,\text{fields}}^{\text{valid}}$ first information fields in $N_{1,\text{fields}}$ first information fields, and the $N_{2,\text{fields}}^{\text{valid}}$ second information fields are former $N_{2,\text{fields}}^{\text{valid}}$ second information fields in the $N_{2,\text{fields}}$ second information fields; however, this disclosure is not limited thereto. For example, the $N_{1,\text{fields}}^{\text{valid}}$ first information fields are latter $N_{1,\text{fields}}^{\text{valid}}$ first information fields in the $N_{1,\text{fields}}$ first information fields, and the $N_{2,\text{fields}}^{\text{valid}}$ second information fields are latter $N_{2,\text{fields}}^{\text{valid}}$ second information fields in the $N_{2,\text{fields}}$ second information fields, which shall not be illustrated herein one by one any further.

For example, $N_{2,\text{fields}}^{\text{valid}} \geq N_{1,\text{fields}}^{\text{valid}}$ second information fields indicate time domain resources or valid time domain resource indices or time domain resource indices. The $N_{1,\text{fields}}^{\text{valid}}$ first information fields correspond one-to-one with $N_{1,\text{fields}}^{\text{valid}}$ second information fields therein. For example, the $N_{1,\text{fields}}^{\text{valid}}$ first information fields are former (latter) $N_{1,\text{fields}}^{\text{valid}}$ first information fields in the $N_{1,\text{fields}}$ first information fields, and the $N_{1,\text{fields}}^{\text{valid}}$ second information fields are former (latter) $N_{1,\text{fields}}^{\text{valid}}$ second information fields in the $N_{2,\text{fields}}$ second information fields or former (latter) $N_{1,\text{fields}}^{\text{valid}}$ second information fields in the above $N_{2,\text{fields}}^{\text{valid}}$ second information fields, which shall not be illustrated herein one by one any further.

When the second information fields are dominant, in some embodiments, when $N_{2,\text{fields}}^{\text{valid}}$ ( $N_{2,\text{fields}}^{\text{valid}} = N_{2,\text{fields}}$ or $N_{2,\text{fields}}^{\text{valid}} \neq N_{2,\text{fields}}$ ) second information fields indicate time domain resources or valid time domain resource indices or time domain resource indices, a first number $N_{1,\text{fields}}^{\text{valid}}$ of first information fields in all of the first information fields indicate beams or indicate valid beam indices or indicate beam indices, wherein the first number is equal to the second number, or the first number is greater than the second number.

For example, $N_{1,\text{fields}}^{\text{valid}} = N_{2,\text{fields}}^{\text{valid}}$ first information fields indicate beams or indicate valid beam indices or indicate beam indices. The $N_{1,\text{fields}}^{\text{valid}}$ first information fields correspond one-to-one with the $N_{2,\text{fields}}^{\text{valid}}$ second information fields. For example, the $N_{1,\text{fields}}^{\text{valid}}$ first information fields are former (or latter) $N_{1,\text{fields}}^{\text{valid}}$ first information fields in the $N_{1,\text{fields}}$ first information fields, and the $N_{2,\text{fields}}^{\text{valid}}$ second information fields are former (or latter) $N_{2,\text{fields}}^{\text{valid}}$ second information fields in the $N_{2,\text{fields}}$ second information fields, which shall not be illustrated herein one by one any further.

For example, $N_{1,\text{fields}}^{\text{valid}} \geq N_{2,\text{fields}}^{\text{valid}}$ first information fields indicate beams or indicate valid beam indices or indicate beam indices, and the $N_{2,\text{fields}}^{\text{valid}}$ second information fields correspond one-to-one with $N_{2,\text{fields}}^{\text{valid}}$ first information fields therein. For example, the $N_{2,\text{fields}}^{\text{valid}}$ first information fields are former (or later) $N_{2,\text{fields}}^{\text{valid}}$ second information fields in $N_{1,\text{fields}}$ first information fields or former (or later) $N_{2,\text{fields}}^{\text{valid}}$ first information fields in the above $N_{1,\text{fields}}^{\text{valid}}$ first information fields, and the $N_{2,\text{fields}}^{\text{valid}}$ second information fields are former (or later) $N_{2,\text{fields}}^{\text{valid}}$ second information fields in $N_{2,\text{fields}}$ second information fields, which shall not be illustrated herein one by one any further.

The correspondences shall be described below with reference to the accompanying drawings.

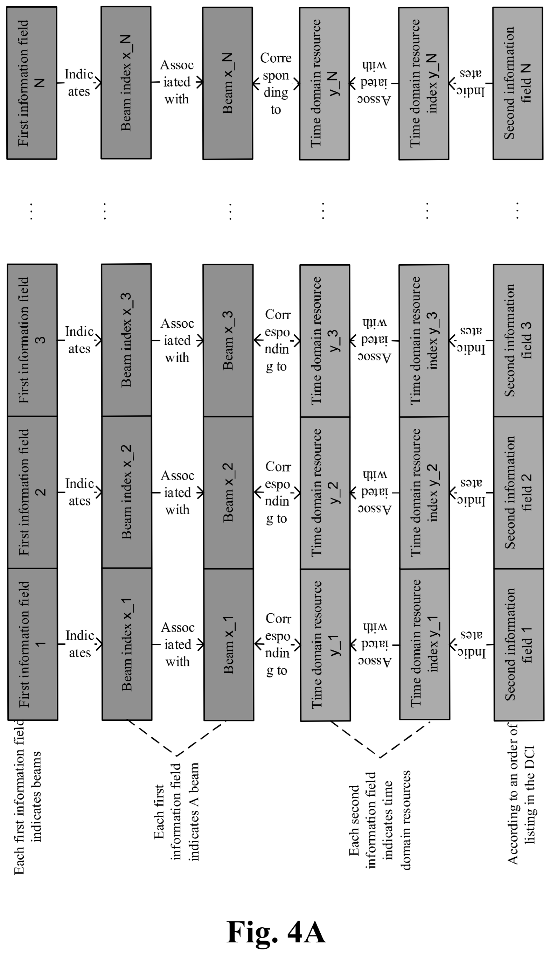

FIGs. 4A-4G are schematic diagrams of the correspondences in the embodiments of this disclosure. In FIGs. 4A-4G, there are total N first information fields, which are listed in an order of first information field 1, first information field 2,..., first information field N in the DCI in the first DCI format, and there are total N second information fields, which are listed in an order of second information field 1, second information field 2,..., second information field N in the DCI in the first DCI format.

As shown in FIG. 4A, all the first information fields indicate beams, and all the second information fields indicate time domain resources. A beam index x_1 (or indicated beam x_1) indicated by the first information field 1 corresponds to a time domain resource index y_1 (or indicated time domain resource y_1) indicated by the second information field 1, a beam index x_2 (or indicated beam x_2) indicated by the first information field 2 corresponds to a time domain resource index y_2 (or indicated time domain resource y_2) indicated by the second information field 2, and so on, and a beam index x_N (or indicated beam x_N) indicated by the first information field N corresponds to a time domain resource index y_N (or indicated time domain resource y_N) indicated by the second information field N.

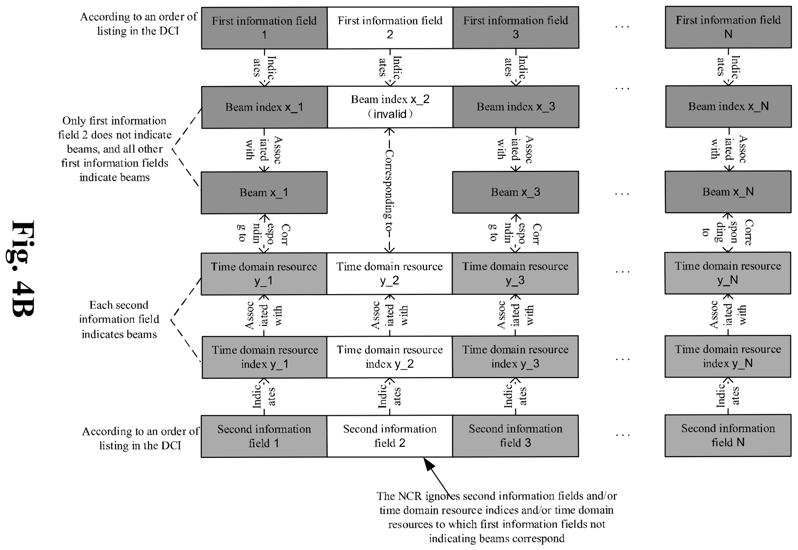

As shown in FIG. 4B, the first information field 2 does not indicate beams, all other first information fields indicate beams, and all second information fields indicate time domain resources. The beam index x_1 (or the indicated beam x_1) indicated by the first information field 1 corresponds to the time domain resource index y_1 (or the indicated time domain resource y_1) indicated by the second information field 1, the beam index x_3 (or the indicated beam x_3) indicated by the first information field 3 corresponds to the time domain resource index y_3 (or the indicated time domain resource y_3) indicated by the second information field 3, and so on, and the beam index x_N (or the indicated beam x_N) indicated by the first information field N (or the indicated beam x_N) corresponds to the time domain resource index y_N (or the indicated time domain resource y_N) indicated by the second information field N. The NCR ignores the second information field 2 and/or time domain resource index y_2 and/or time domain resource y_2 to which a first information field not indicating beams corresponds.

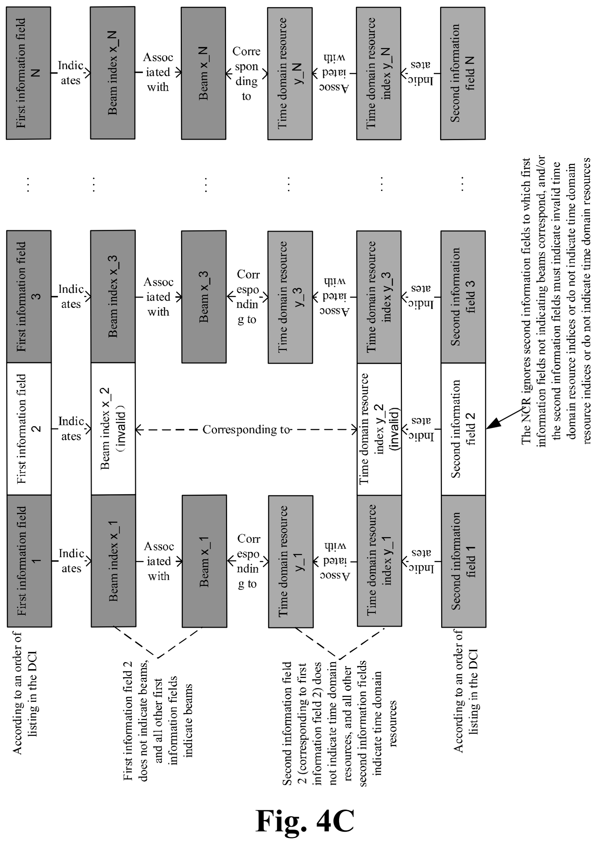

As shown in FIG. 4C, the first information field 2 does not indicate beams, all other first information fields indicate beams, the second information field 2 does not indicate time domain resources, and all other second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_3 (or indicated beam x_3) indicated by the first information field 3 corresponds to the time domain resource index y_3 (or indicated time domain resource y_3) indicated by the second information field 3, and so on, and the beam x_N (or indicated beam x_N) indicated by the first information field N corresponds to the time domain resource index y_N (or the indicated time domain resource y_N) indicated by the second information field N. The NCR ignores the second information field 2 to which a first information field not indicating beams corresponds and/or the second information field 2 must indicate an invalid time domain resource index (time domain resource index y_2 is invalid) or does not indicate a time domain resource index or does not indicate a time domain resource.

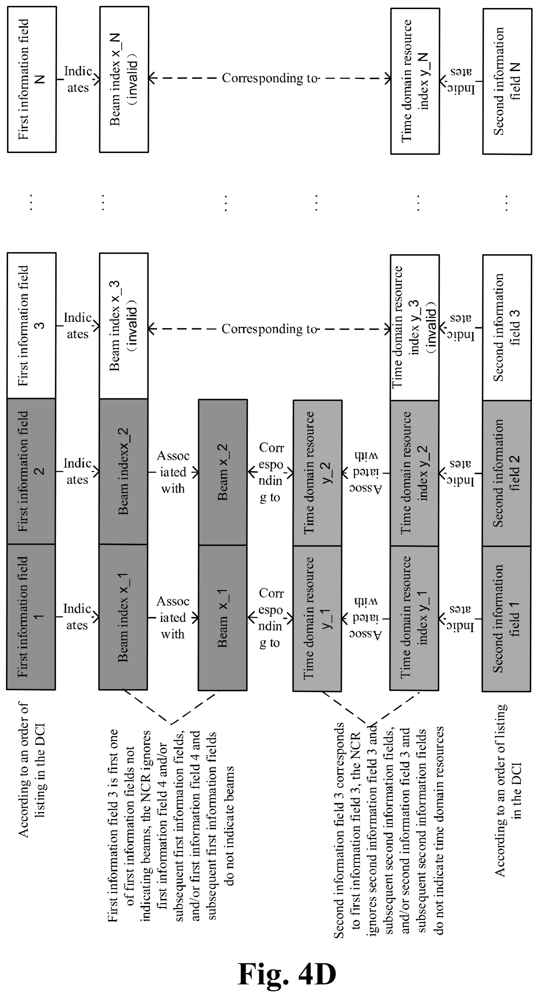

As shown in FIG. 4D, a first information field 3 (n=3) is a first one of the first information fields not indicating beams. The NCR ignores a first information field 4 (n+1) and/or subsequent first information fields, and/or the first information field 4 and the subsequent first information fields do not indicate beams, and a second information field 3 (n=3) corresponds to the first information field 3. The NCR ignores the second information field 3 (n=3) and/or subsequent second information fields, and/or the second information field 3 (n=3) and the subsequent second information fields do not indicate time domain resources. The beam index x_1 (or indicated beam x_1) indicated by the first information field 1 corresponds to the time domain resource index y_1 (or indicated time domain resource y_1) indicated by the second information field 1, and the beam index x_2 (or indicated beam x_2) indicated by the first information field 2 corresponds to the time domain resource index y_2 (or indicated time domain resource y_2) indicated by the second information field 2.

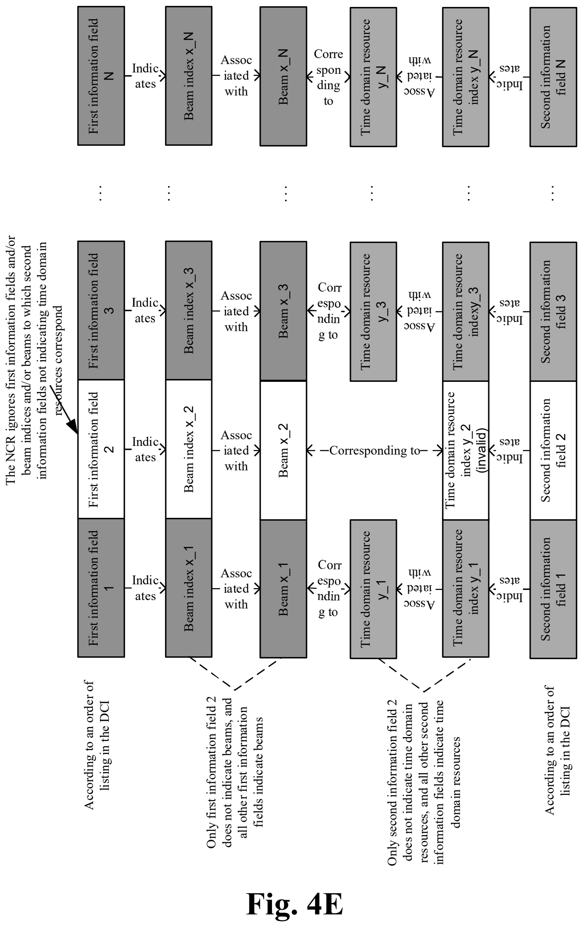

As shown in FIG. 4E, the first information field 2 does not indicate beams, all other first information fields indicate beams, the second information field 2 does not indicate time domain resources, and all other second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_3 (or indicated beam x_3) indicated by the first information field 3 corresponds to the time domain resource index y_3 (or indicated time domain resource y_3) indicated by the second information field 3, and so on, and the beam x_N (or indicated beam x_N) indicated by the first information field N corresponds to the time domain resource index y_N (or the indicated time domain resource y_N) indicated by the second information field N. The NCR ignores the first information field 2 and/or beam index x_2 and/or beam x_2 to which the second information field 2 not indicating time domain resources corresponds.

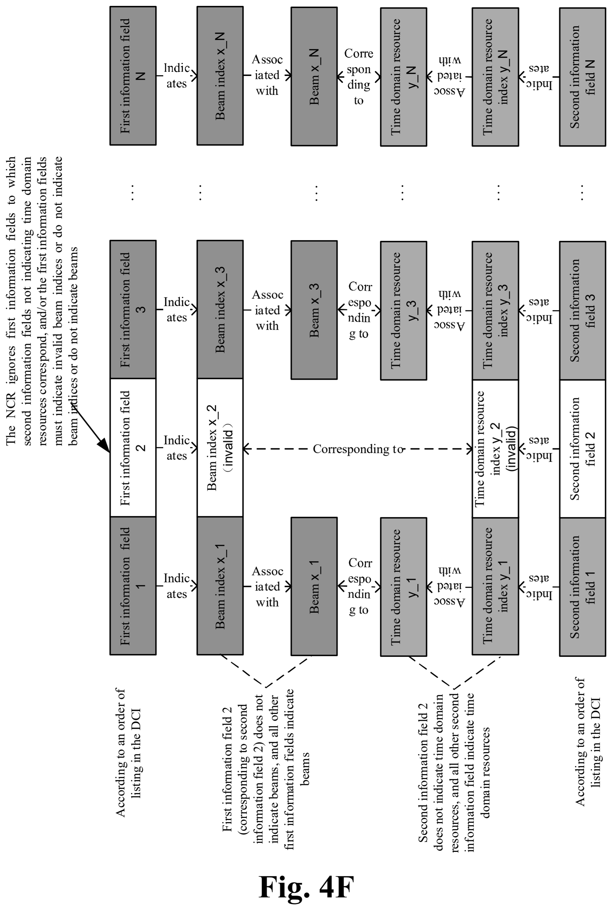

As shown in FIG. 4F, the first information field 2 (corresponding to the second information field 2) does not indicate beams, all other first information fields indicate beams, the second information field 2 does not indicate time domain resources, and all other second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_3 (or indicated beam x_3) indicated by the first information field 3 corresponds to the time domain resource index y_3 (or indicated time domain resource y_3) indicated by the second information field 3, and so on, and the beam x_N (or indicated beam x_N) indicated by the first information field N corresponds to the time domain resource index y_N (or the indicated time domain resource y_N) indicated by the second information field N. The NCR ignores the first information field 2 to which a second information field not indicating time domain resources corresponds and/or the first information field 2 must indicate an invalid beam index (beam index x_2 is invalid) or does not indicate a beam index or does not indicate a beam.

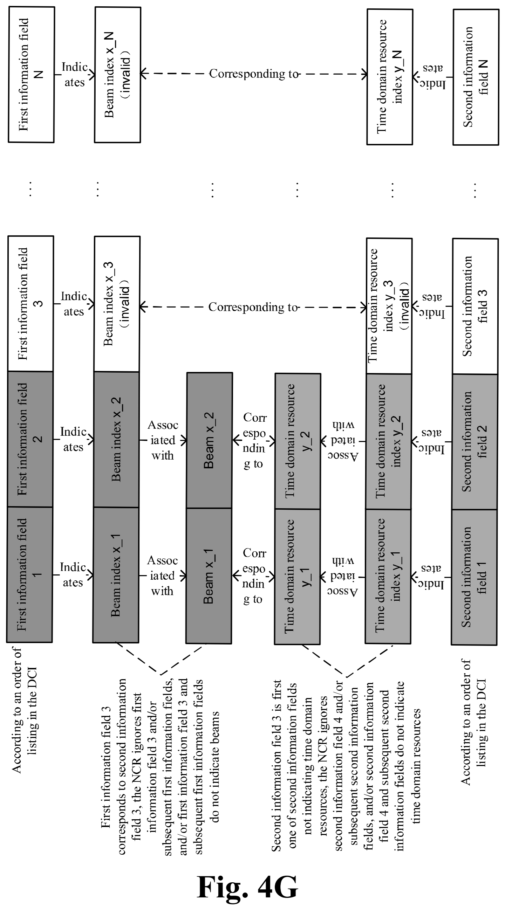

As shown in FIG. 4G, a second information field 3 (m=3) is a first one of the second information fields not indicating time domain resources. The NCR ignores a second information field 4 (m+1) and/or subsequent second information fields, and/or the second information field 4 and the subsequent first information fields do not indicate time domain resources, and a first information field 3 (m=3) corresponds to the second information field 3. The NCR ignores the first information field 3 (m=3) and subsequent first information fields, and/or the first information field 3 (m=3) and the subsequent first information fields do not indicate beams. The beam index x_1 (or indicated beam x_1) indicated by the first information field 1 corresponds to the time domain resource index y_1 (or indicated time domain resource y_1) indicated by the second information field 1, and the beam index x_2 (or indicated beam x_2) indicated by the first information field 2 corresponds to the time domain resource index y_2 (or indicated time domain resource y_2) indicated by the second information field 2.

In the above examples, $N_{1,fields}$ first information fields correspond one-to-one with $N_{2,fields}$ second information fields, $N_{2,fields} = N_{1,fields} = N$, the *n-th* first information field corresponds to the *n-th* second information field, hence, $N_{1,fields}^{valid}$ first information fields correspond one-to-one with $N_{2,fields}^{valid}$ second information fields.

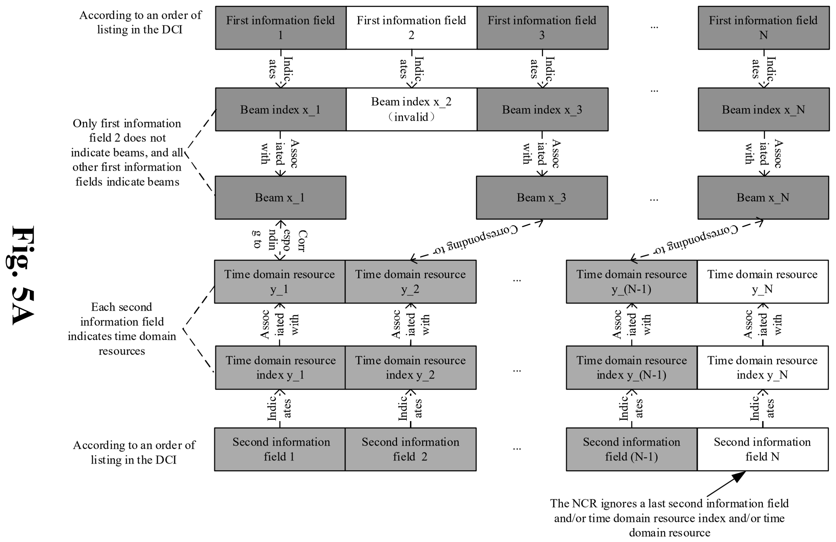

FIGs. 5A-5D are schematic diagrams of the correspondences in the embodiments of this disclosure. As shown in FIGs. 5A-5D, assuming that the first information fields not indicating beams and/or the second information fields not indicating time domain resources are skipped over, $N_{1,fields}^{valid}$ first information fields correspond one-to-one with $N_{2,fields}^{valid}$ second information fields, and the *n-th* first information field indicating beams corresponds to the *n-th* second information field indicating time domain resources. In FIGs. 5A-5D, there are total N first information fields, which are in an order of first information field 1, first information field 2,..., first information field N listed in the DCI in the first DCI format, and there are total N second information fields, which are in an order of second information field 1, second information field 2,..., second information field N listed in the DCI in the first DCI format.

As shown in FIG. 5A, the first information field 2 does not indicate beams, all other first information fields indicate beams, and all second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_3 (or indicated beam x_3) indicated by the first information field 3 corresponds to the time domain resource index y_2 (or indicated time domain resource y_2) indicated by the second information field 2, and so on, and the beam index x_N (or indicated beam x_N) indicated by the first information field N corresponds to the time domain resource index y_N-1(or indicated time domain resource y_N-1) indicated by the second information field N-1. The NCR ignores a last second information field N and/or time domain resource index y_N and/or time domain resource y_N.

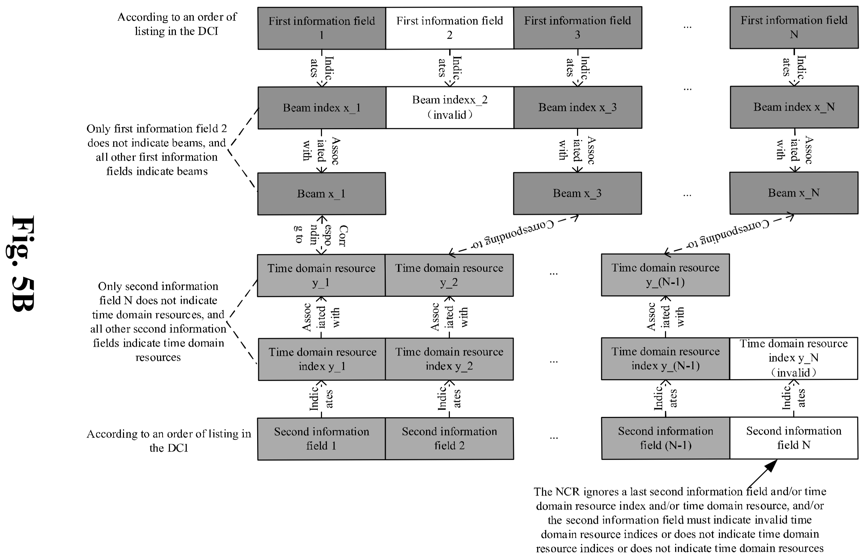

As shown in FIG. 5B, the first information field 2 does not indicate beams, all other first information fields indicate beams, and all second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_3 (or indicated beam x_3) indicated by the first information field 3 corresponds to the time domain resource index y_2 (or indicated time domain resource y_2) indicated by the second information field 2, and so on, and the beam index x_N (or indicated beam x_N) indicated by the first information field N corresponds to the time domain resource index y_N-1 (or indicated time domain resource y_N-1) indicated by the second information field N-1. The NCR ignores a last second information field N and/or time domain resource index y_N and/or time domain resource y_N, and/or the second information field N must indicate invalid time domain resource indices (the time domain resource index y_N is invalid) or does not indicate time domain resources indices or time domain resources.

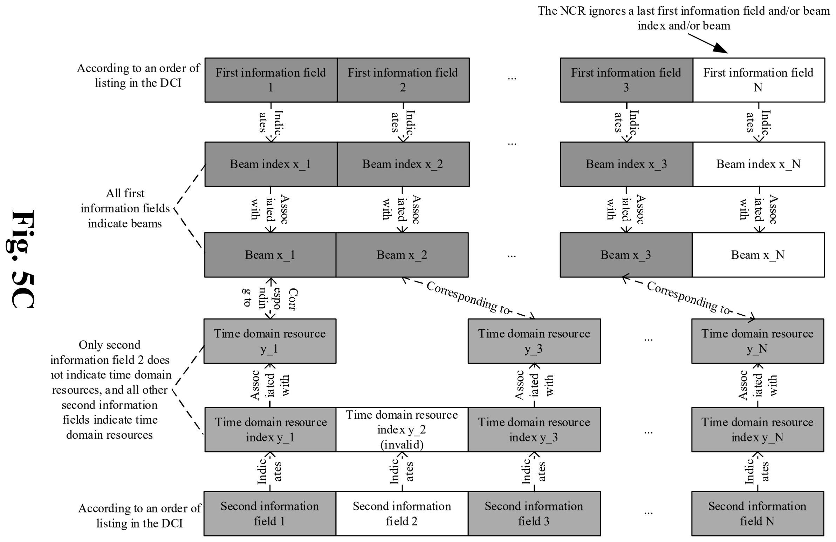

As shown in FIG. 5C, all first information fields indicate beams, the second information field 2 does not indicate time domain resources, and all other second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_2 (or indicated beam x_2) indicated by the first information field 3 corresponds to the time domain resource index y_3 (or indicated time domain resource y_3) indicated by the second information field 3, and so on, and the beam index x_N-1 (or indicated beam x_N-1) indicated by the first information field N-1 corresponds to the time domain resource index y_N (or indicated time domain resource y_N) indicated by the second information field N. The NCR ignores a last first information field N and/or beam index x_N and/or beam x_N.

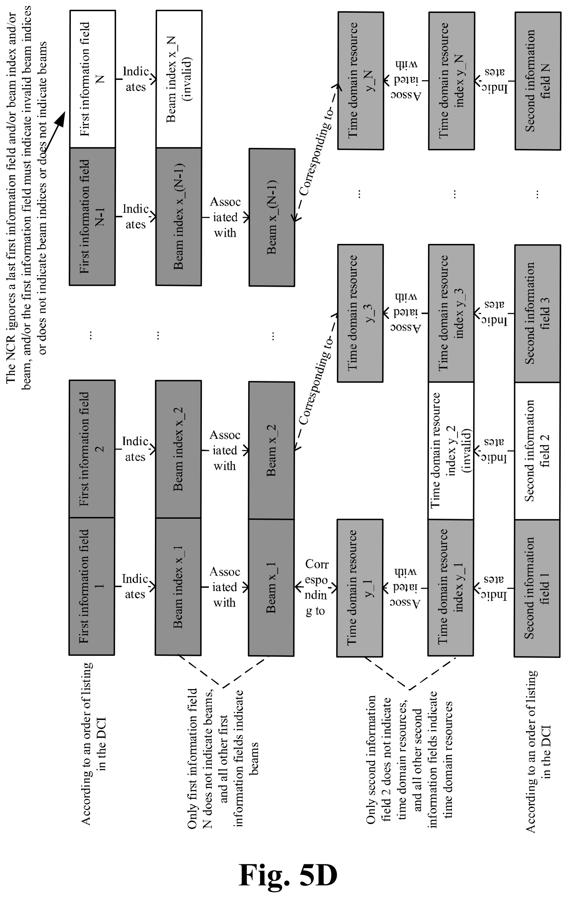

As shown in FIG. 5D, the first information field N does not indicate beams, all other first information fields indicate beams, the second information field 2 does not indicate time domain resources, and all other second information fields indicate time domain resources. The beam index x_1 (or indicated beam x_1) indicated by the first information field 1 corresponds to the time domain resource index y_1 (or indicated time domain resource y_1) indicated by the second information field 1, the beam index x_2 (or indicated beam x_2) indicated by the first information field 2 corresponds to the time domain resource index y_3 (or indicated time domain resource y_3) indicated by the second information field 3, and so on, and the beam index x_N-1 (or indicated beam x_N-1) indicated by the first information field N-1 corresponds to the time domain resource index y_N (or indicated time domain resource y_N) indicated by the second information field N. The NCR ignores a last first information field N and/or beam index x_N and/or beam x_N, and/or the first information field N must indicate invalid beam indices (the beam index x_N is invalid) or does not indicate beam indices or does not indicate beams.

A third information field shall be described below.

In some embodiments, the downlink control information may include a third information field, wherein a subcarrier spacing (SCS) indicated by the third information field is applied to all time domain resources indicated by one or more second information fields. Or, the downlink control information may include multiple third information fields, wherein the second information fields correspond one-to-one with the third information fields, and SCSs indicated by different third information fields are applied to time domain resources indicated by different second information fields.

A payload size of the DCI in the first DCI format shall be described below.

In some embodiments, the payload size of the downlink control information is determined by the bitwidths of the information fields included in the downlink control information and/or is predefined and/or is configured by higher-layer signaling.

In some embodiments, the payload size of the downlink control information is not less than a minimum value that is predefined or is configured by the higher-layer signaling and is not greater than a maximum value that is predefined or is configured by the higher-layer signaling. The predefined minimum value is, for example, 12, and the predefined maximum value is, for example, 140; where, the maximum value is determined by (a maximum value of) the bitwidths of the information fields of the downlink control information and/or (a maximum value of) the information fields.

For example, when a total number of bits of the information fields included in the DCI in the first DCI format is less than the above minimum value (e.g. 12), '0's may be added after a last information field in the DCI in the first DCI format, until the payload size is equal to the minimum value.

For example, the payload size $N_{size}$ of the first DCI format is predefined and/or is configured by a higher-layer parameter. When the total number of bits of the information fields included in the DCI in the first DCI format is less than $N_{size}$, '0's are appended after a last information field, until the payload size is equal to $N_{size}$.

In some embodiments, the payload size of the downlink control information in the first DCI format may be identical to or different from a payload size of downlink control information in the second DCI format. The second DCI format is as described above, which shall not be elaborated herein any further.

For example, the payload size of the DCI in the first DCI format must be identical to the payload size of the DCI in the second DCI format. For example, if the payload size of the DCI in the first DCI format is smaller than the payload size of the DCI in the second DCI format, '0's are appended after the last information field of the DCI in the first DCI format, until the payload size is identical to that of the DCI in the second DCI format, or, the bits in the DCI in the second DCI format are truncated/punched, so that the payload size of the DCI in the second DCI format is identical to that of the DCI in the first DCI format. For another example, if the payload size of the DCI in the first DCI format is larger than that of the DCI in the second DCI format, '0's are appended after a last information field of the DCI in the second DCI format, until the payload size is identical to that of the DCI in the first DCI format, or the bits in the DCI in the first DCI format are truncated/punched, so that the payload size of the DCI in the first DCI format is identical to that of the DCI in the second DCI format. The DCI in the first DCI format and the DCI in the second DCI format are monitored at different SSs, and/or different RNTIs are adopted (such as for CRC scrambling).

For example, the payload size of the DCI in the first DCI format must be different from that of the DCI in the second DCI format. For example, if the payload size of the DCI in the first DCI format is identical to that of the DCI in the second DCI format, some bits (such as a '0' bit) are appended to the DCI in the first DCI format or the DCI in the second DCI format to make the payload sizes of them different. The DCI in the first DCI format and the DCI in the second DCI format are monitored at identical or different SSs, and/or different RNTIs are adopted (such as for CRC scrambling).

In some embodiments, a PDCCH used to carry a DCI consists of one or more CCEs (control channel elements), and an aggregation level (AL) refers to the number of CCEs consisting a PDCCH. Currently, a supported AL range is as shown in Table 14 below.

Table 14

| Aggregation level | The number of CCEs |
|---|---|
| 1 | 1 |
| 2 | 2 |
| 4 | 4 |
| 8 | 8 |
| 16 | 16 |

In some embodiments, a PDCCH candidate set that the NCR-MT needs to monitor is defined according to a PDCCH search space set. The search space (SS) defines a monitoring occasion and search behaviors in the monitoring occasion (or, in other words, defines how/where to search for PDCCH candidates).

In some embodiments, in a cell, the NCR-MT may be configured with multiple SSs. The SSs are configured per bandwidth part (BWP); however, indices of the SSs are per serving cell. For a BWP, multiple SSs may be configured in a serving cell. SS 0 is associated with CORESET 0 by default, and for other SSs, *SearchSpace* includes higher-layer parameters for configuring the indices of the SSs and higher-layer parameter 5 for configuring indices of CORESETs associated with the SSs. Thus, the NCR-MT may learn a CORESET with which each SS is associated, and CORESET(s) associated with search spaces in one or more search space sets used to monitor the downlink control information and search space(s) are configured in the same BWP or different BWPs.

A search space set may be a common search space (CSS) set or a UE-specific search space (USS) set. Currently, the NCR-MT may, for example, monitor PDCCHs (or monitor DCI) in one or more of the following search space sets:

1) 1) Type0-PDCCH CSS set
Configure by *pdcch-ConfigSIB1* in a master information block (MIB) or *searchSpaceSIB1* in *PDCCH-ConfigCommon* or *searchSpaceZero* in *PDCCH-ConfigCommon.* On a primary cell (Pcell), it is used to monitor DCI format 1_0 with cyclic redundancy check (CRC) scrambled by a system information radio network temporary identifier (SI-RNTI), and a PDSCH scheduled by the DCI is used to carry the system information block SIB1.
2) 2) Type0A-PDCCH CSS set
Configure by *searchSpaceOtherSystemInformation* in *PDCCH-ConfigCommon.* On a Pcell, it is used to monitor DCI format 1_0 with CRC scrambled by an SI-RNTI, and a PDSCH scheduled by the DCI is used to carry other system information (SI).
3) 3) Type1-PDCCH CSS set
Configured by *ra-SearchSpace* in *PDCCH-ConfigCommon.* On a Pcell or PScell, it is used to monitor a DCI format with CRC scrambled by an RA-RNTI or a TC-RNTI or an MsgB-RNTI.
4) 4) Type2-PDCCH CSS set
Configured by *pagingSearchSpace* in *PDCCH-ConfigCommon.* On a Pcell, it is used to monitor DCI format 1_0 with CRC scrambled by a P-RNTI.

5) 5) Type3-PDCCH CSS set

Configured by *SearchSpace* of *searchSpaceType = common* in *PDCCH-Config.*

6) 6) USS set

Configured by *SearchSpace* of *searchSpaceType = ue-specific* in *PDCCH-Config.*

In some embodiments, one or more search space sets for monitoring the downlink control information in the first DCI format include CSS sets and/or USS sets, and the network device may configure the NCR-MT to monitor the DCI in the first DCI format in the CSS sets and/or USS sets, a CSS set including, for example, a Type3-PDCCH CSS set. The network device may configure the NCR-MT to monitor the DCI in the first DCI format on a Pcell or a PScell or an Scell. For example, if an NCR-MT does not support carrier aggregation/dual Connectivity (CA/DC), the network device configures the NCR-MT to monitor the DCI in the first DCI format on the Pcell, i.e. the above CSS sets and/or USS sets used to monitor the DCI in the first DCI format are on the Pcell. If an NCR-MT supports CA/DC, the network device configures the NCR-MT to monitor the DCI in the first DCI format on the Pcell and/or the PScell and/or the Scell, i.e. the above CSS sets and/or USS sets used to monitor the DCI in the first DCI format are respectively on the Pcell or the PScell or the Scell. Wherein, the CSS sets and/or USS sets used to monitor the DCI in the first DCI format (are configured by the network device to or not to) may or may not be used to monitor DCI in other DCI formats (such as DCI in a legacy DCI format, including DCI formats 1_0, 0_0, 1_1, 0_1, 1_2, 0_2, and 2-0, etc.).

In some embodiments, the method may further include: the network device transmits search space configuration information to the repeater, the search space configuration information including a fourth information field, the fourth information field being used to configure the repeater to monitor the downlink control information.

For example, one or more new higher-layer parameters 6 (or parameters, or fields, corresponding to the fourth information field) are introduced into a search space configuration information *SearchSpace* IE, the one or more new higher-layer parameters 6 being used to configure the NCR-MT to monitor the DCI in the first DCI format. The higher-layer parameters are, for example, *dci-Formats-MT-r18, dci-Formats-2_x-r18* (x=8 or 9 or 10), and the one or more higher-layer parameters 6 are respectively optional (or optionally present) or conditionally optionally present or conditionally mandatory.

For example, the higher-layer parameter(s) is/are conditionally optionally present. For example, for the NCR-MT and/or FR2 (or an NCR-MT of FR2-1 and/or FR2-2 (also applicable to other positions)) and/or in *PDCCH-Config,* the parameter(s) is/are optionally present, that is, it/they may be present or not (depending on the network device); otherwise (such as in *PDCCH-ConfigCommon*), the parameter(s) is/are not present.

For example, the higher-layer parameter(s) is/are conditionally mandatory. For example, for the NCR-MT and/or FR2, the parameter(s) is/are mandatory/must be present; otherwise, the parameter(s) is/are not present or optionally present.

In some embodiments, the fourth information field may further include information for configuring an aggregation level and/or information for configuring a PDCCH candidate number, i.e. the parameter(s) may further be used to simultaneously configure aggregation levels (ALs), i.e. used to configure aggregation levels of PDCCHs used to carry the DCI in the first DCI format.

Example 1: it is assumed that the parameter(s) is/are only used to configure the NCR-MT to monitor the DCI in the first DCI format and is/are optional. In a case where the parameter(s) is/are present in *SearchSpace,* the NCR-MT determines AL/PDCCH candidates according to the parameter(s) used to configure AL(s) in *SearchSpace* (such as *nrofCandidates*), so as to monitor the DCI in the first DCI format. The parameter(s) may be expressed as follows by using ASN.1:

```
    dci-Formats-2_x-r18                          SEQUENCE {

                 ...

             }

OPTIONAL,    -- Need R
```

Example 2: it is assumed that the parameter(s) is/are used to configure aggregation levels (ALs) (and corresponding candidate numbers) and is/are optional. The higher-layer parameter(s) may include a second higher-layer parameter for configuring ALs (and corresponding candidate numbers). The second higher-layer parameter is optional, and if an aggregation level (or a corresponding parameter) is absent, the NCR-MT will not search for any candidates with the aggregation level.

In the parameter(s) is/are present in *SearchSpace,* the network device configures only one aggregation level and a corresponding candidate number, or may configure multiple aggregation levels and corresponding candidate numbers.

On the other hand, the network devices must configure one aggregation level (and a corresponding candidate number) (or, in other words, a parameter for configuring ALs (and corresponding candidate numbers) must be present in the parameter(s)), or must configure at least one aggregation level (and a corresponding candidate number) (or, in other words, at least one parameter for configuring ALs (and corresponding candidate numbers) must be present in the parameter(s)), or the network device may not configure an aggregation level (and a corresponding candidate number) (or a parameter for configuring ALs (and corresponding candidate numbers) may not be present in the parameter(s)).

In the case where the parameter(s) is/are present in *SearchSpace* and a parameter for configuring ALs is not present in the parameter(s), the NCR-MT determines the AL/PDCCH candidates according to another parameter for configuring ALs in *SearchSpace* (such as *nrofCandidates*), so as to monitor the DCI in the first DCI format. *nrofCandidates* is conditionally mandatory, and when a new *SearchSpace* is created, *nrofCandidates* is mandatory. The parameter(s) may be expressed as follows by using ASN.1:

```
dci-Formats-2_x-r18                        SEQUENCE {

            nrofCandidates-NCR-r16                     SEQUENCE {

                aggregationLevel1-r16                      ENUMERATED {n1, n2}
OPTIONAL,    -- Need R

                aggregationLevel2-r16                      ENUMERATED {n1, n2}
OPTIONAL,    -- Need R

                aggregationLevel4-r16                      ENUMERATED {n1, n2}
OPTIONAL,    -- Need R

                aggregationLevel8-r16                      ENUMERATED {n1, n2}
OPTIONAL,    -- Need R

                aggregationLevel16-r16                     ENUMERATED {n1, n2}
OPTIONAL     -- Need R
                },
                ...

            }
OPTIONAL,    -- Need R
```

The above one or more fourth information fields may be included in higher-layer parameters (such as *searchSpaceType, searchSpaceType-r18*) used to configure a search space type in the search space configuration information. Following are two examples.

Example 1: *searchSpaceType* includes a new higher-layer parameter 6. *searchSpaceType* may be expressed as follows by using ASN.1:

```
searchSpaceType                     CHOICE {
    common                                SEQUENCE {
        dci-Format0-0-AndFormat1-0                 SEQUENCE {
            ...
```

```
                }
OPTIONAL,    -- Need R
            ···(fields omitted)
            },
            ue-Specific                       SEQUENCE {
                dci-Formats                        ENUMERATED {formats0-0-And-1-
0, formats0-1-And-1-1},
                ...,
                ···(fields omitted)
                dci-Formats-2_x-r18                  SEQUENCE {
                    ...
    }
OPTIONAL,    -- Need R
    }
```

Example 2: *searchSpaceType-r18* includes a new higher-layer parameter 6. *searchSpaceType-r18* may be expressed as follows by using ASN.1:

```
    searchSpaceType-r18              SEQUENCE{
searchSpaceType-r18              SEQUENCE{
        common-r18                      SEQUENCE {
···
        dci-Formats-2_x-r18                    SEQUENCE {
            ...
    }
OPTIONAL,    -- Need R
···
                },
```

In some embodiments, the above control resource set (CORESET) is a time-frequency resource corresponding to a monitoring occasion. A control source set (CORESET) consists of $N_{RB}^{CORESET}$ resource blocks (RBs) in the frequency domain and $N_{symb}^{CORESET}$ symbols in the time domain. A CCE consists of 6 resource element groups (REGs), wherein one REG is equal to one RB during an OFDM symbol period. REGs in a CORESET are numbered/indexed in an ascending order in the time domain first, wherein a number/index of an RB with a lowest number for a first one of OFDM symbols in the CORESET is 0.

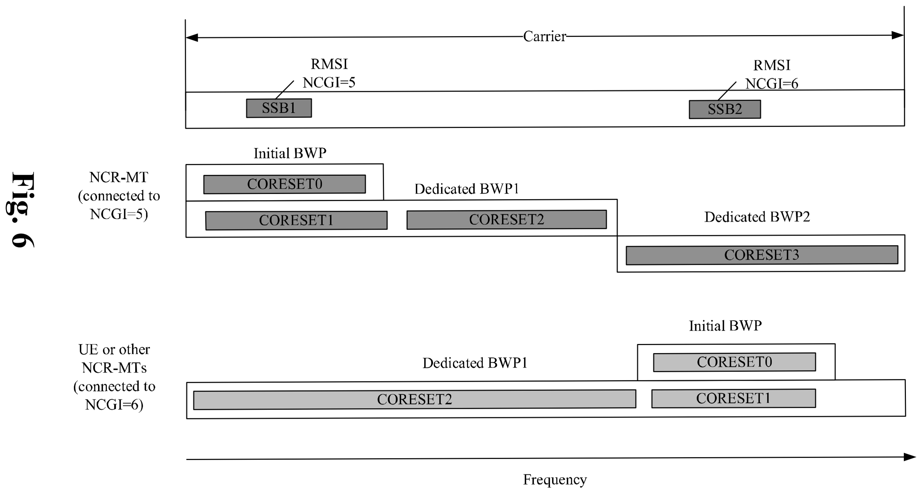

In a cell, the NCR-MT may be configured with multiple CORESETs. The CORESETs are configured per bandwidth part (BWP) (that is, configuration information of a CORESET is included in configuration information of a BWP, and resources of the CORESET are in the BWP), but an index of the CORESET is per serving cell (that is, an index of a CORESET is used to uniquely identify the CORESET in a cell). FIG. 6 shows an example of CORESET configuration, wherein for the same carrier, an NCR-MT is connected to a cell identified by NCGI=5, a terminal equipment or another NCR-MT is connected to a cell identified by NCGI=6. Two devices are respectively configured with multiple BWPs and CORESETs in the BWPs, the former being configured with 3 BWPs and 4 CORESETs, wherein CORESET 0 is in an initial BWP, CORESETs 1 and 2 are in BWP 1, and CORESET 3 is in BWP 2, and the latter being configured with 2 BWPs and 3 CORESETs, wherein CORESET 0 in the initial BWP, and CORESET 1 and CORESET 2 are in BWP 1.

In some embodiments, each CORESET is only associated with one CCE-to-REG mapping/one type of CCE-to-REG mapping. A CCE-to-REG mapping of a CORESET may be non-interleaved or interleaved, which is described by a REG bundle.

A REG bundle $i$ is defined as $REGs\{iL, iL + 1, ... , iL + L - 1\}$; where, $L$ denotes a size of the REG bundle, $i = 0,1, ... , N_{REG}^{CORESET}/L - 1$ , and $N_{REG}^{CORESET} = N_{RB}^{CORESET} N_{symb}^{CORESET}$ is the number of REGs in the CORESET.

CCE $j$ is composed of REG bundles $\{f(6j/L), f(6j/L + 1), ... , f(6j/L + 6/L - 1)\}$; where, $f(\cdot)$ is an interleaver.

For the non-interleaved CCE-to-REG mapping, $L = 6$ and $f(x) = x$.

For the interleaved CCE-to-REG mapping, for $N_{symb}^{CORESET} = 1$ , $L \in \{2, 6\}$, for $N_{symb}^{CORESET} \in \{2, 3\}$, $L \in \{N_{symb}^{CORESET}, 6\}$ . And the interleaver is defined as:

$$f(x) = \left(rC + c + n_{shift}\right) \bmod \left(N_{REG}^{CORESET}/L\right)$$

$$x = cR + r$$

$$r = 0,1, ... , R - 1$$

$$c = 0,1, ... , C - 1$$

$$C = N_{REG}^{CORESET}/(LR);$$

where, $R \in \{2,3,6\}$, and C should be an integer.

For a CORESET configured by a *ControlResourceSet* IE, an index of the CORESET is given by a higher-layer parameter *controlResourceSetId*, $N_{RB}^{CORESET}$ is provided/given by a higher-layer parameter *frequencyDomainResources,* and $N_{symb}^{CORESET}$ is provided/given by a higher-layer parameter *duration,* wherein $N_{symb}^{CORESET} = 3$ is only supported when a higher-layer parameter *dmrs-TypeA-Position* is equal to 3. The interleaved or non-interleaved mapping is provided/given by a higher-layer parameter *cce-REG-MappingType.* For the non-interleaved mapping, $L = 6$; and for the non-interleaved mapping, $L$ is provided/given by a higher-layer parameter *reg-BundleSize. R* is provided/given by a higher-layer parameter *interleaverSize.* If a higher-layer parameter *shiftIndex* is provided, $n_{shift} \in \{0,1, ... ,274\}$ is provided/given by the higher-layer parameter *shiftIndex*; otherwise, $n_{shift} = N_{ID}^{cell}$ ; where, $N_{ID}^{cell}$ is a physical layer cell identifier. For both the interleaved and non-interleaved mappings, the NCR-MT may assume that if a higher-layer parameter *precoderGranularity* is equal to *sameAsREG-bundle,* identical precodings are used in an REG bundle, and if the higher-layer parameter *precoderGranularity* is equal to *allContiguousRBs,* identical precodings are used in all REGs in continuous RB sets of the CORESET, and there are no REs and SSBs or LTE cell-specific reference signals (such as those indicated by a higher-layer parameter *lte-CRS-ToMatchAround,* or *lte-CRS-PatternList1,* or *lte-CRS-PatternList2)* overlapped in the CORESET.

For CORESET 0 configured by the *ControlResourceSetZero* IE, $N_{RB}^{CORESET}$ and $N_{symb}^{CORESET}$ are provided/given by *ControlResourceSetZero.* The NCR-MT may assume that $L = 6$, $R = 2$ and $n_{shift} = N_{ID}^{cell}$ ; and when CORESET 0 is configured by an MIB or SIB1, a normal cyclic prefix (CP) is assumed, and it is assumed that identical precodings are used in an REG bundle.

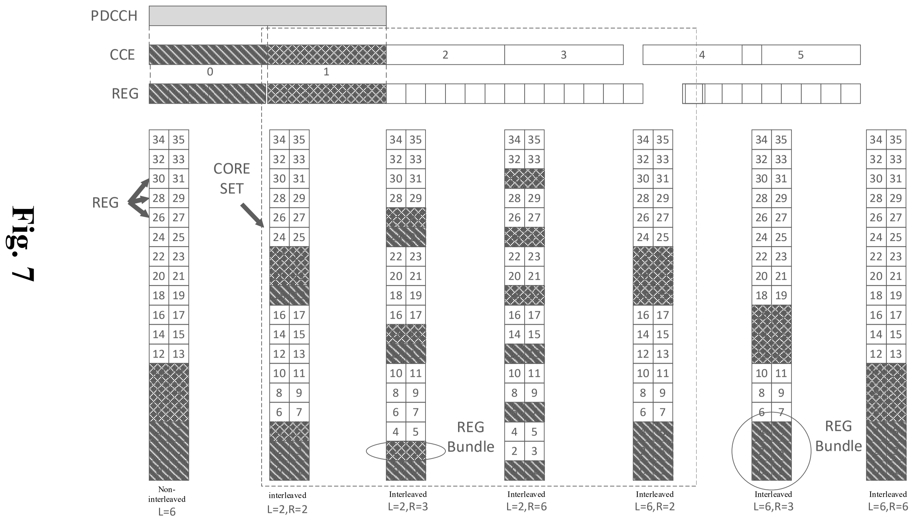

FIG. 7 is an example of a mapping relationship between a PDCCH and a physical resource of the embodiments of this disclosure, wherein it is assumed that in a CORESET, the number of RBs is $N_{RB}^{CORESET} = 18$ and the number of symbols is $N_{symb}^{CORESET} = 2$ . It can be seen that for a PDCCH composed of CCE 0 and CCE 1, in different CCE-to-REG mappings, actual physical resources to which it corresponds are different. Hence, the network device may appropriately configure according to channel conditions, etc., so as to ensure reliability of PDCCH transmission.

How the network device transmits the DCI in the first DCI format in 201 shall be described below.

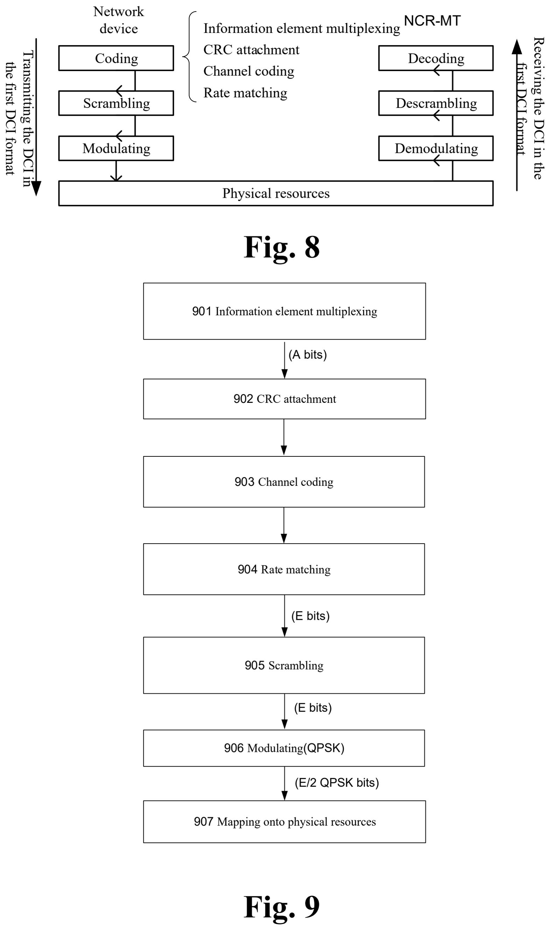

FIG. 8 is a flowchart of transmitting the DCI in the first DCI format by the network device and the repeater in the embodiments of this disclosure. As shown in FIG. 8, a transmitting process includes: 1) encoding, including information element multiplexing, CRC attachment, channel encoding, and rate matching; 2) scrambling; 3) modulating; 5) mapping to physical resources; and a receiving process includes: 1) demodulating; 2) descrambling; and 3) decoding.

The transmitting process shall be further described below with reference to FIG. 9.

1) Encoding, including:
901: information element multiplexing.

The information fields in the DCI in the first DCI format are sequentially mapped to information bits $a_0$-$a_{A-1}$. For example, the information fields (including zero-padding bits, if any) are sequentially mapped in the order described in the above embodiments, and a first one of information fields is mapped to a lowest order information bit $a_0$, hence, consecutive information fields are mapped to higher order information bits. A most significant bit (MSB) of each information field is mapped to the lowest order information bit for the information field, for example, the MSB of the first one of information fields is mapped to $a_0$.

902: CRC attachment

Error detection is provided for DCI transmission via cyclic redundancy check (CRC). The CRC of the DCI in the first DCI format is scrambled by using a newly-introduced RNTI, which are only configured for the repeater. For example, the newly-introduced RNTI may include: a network controlled repeater (NCR) RNTI(NCR-RNTI), an access link indication/indicator (ACI) RNTI(ACI-RNTI), an access link beam indication/indicator (ACBI) RNTI(ACBI-RNTI), a beam indicator/indication/index (BI) RNTI(BI-RNTI), an aperiodic beam Indication (ABI) RNTI(ABI-RNTI), and a side control information (SCI) RNTI(SCI-RNTI), etc.

The newly-introduced RNTI is configured via higher-layer signaling. For example, a new higher-layer parameter 7 is introduced, which is used to configure the RNTI for scrambling the DCI in the first DCI format. The higher-layer parameter 7 is optional (or optionally present) or conditionally optionally present or conditionally mandatory. For example, for the NCR-MT and/or FR2, the higher-layer parameter 7 is optional; otherwise, the higher-layer parameter 7 is not present. For another example, for the NCR-MT and/or FR2, the higher-layer parameter 7 is mandatory; otherwise, the higher-layer parameter 7 is not present.

In some embodiments, bits (or input bits) of a payload are denoted by $a_0, a_1, a_2, a_3, \ldots, a_{A-1}$, and parity bits thereof are denoted by $p_0, p_1, p2, p_3, \ldots, p_{L-1}$; where, $A$ is a size of the payload, and L1 is the number of parity bits, $L = 24$. Let a bit sequence $a'_0, a'_1, a'_2, a'_3, \ldots, a_{A+L1-1}$ be:

$$\begin{cases} a'_i = 1, \ i = 0,1,\ldots,L1-1, \\ a'_i = a_{i-L1}, \ i = L1, L1+1, \ldots, A+L1-1 \end{cases}.$$

A generator polynomial (1) is used to take the bit sequence as input to compute check and attach it, and the output bits $b_0, b_1, b_2, b_3, \ldots, b_{K-1}$ are:

$$\begin{cases} b_k = a_k, \ k = 0,1,\ldots,A-1, \\ b_k = p_{k-A}, \ k = A, A+1, A+2, \ldots, A+L1-1 \end{cases};$$

where, K = $A$ + L1, denoting the number of information bits.

A length of $g_{CRC24C}(D) = [D^{24} + D^{23} + D^{21} + D^{20} + D^{17} + D^{15} + D^{13} + D^{12} + D^8 + D^4 + D^2 + D + 1]$ for a CRC is L1=24 (1).

In some embodiments, the CRC check bits are scrambled by the bits of the new RNTI, i.e. after attachment, the CRC check bits are scrambled by the above RNTI $x_{rnti,0}, x_{rnti,1}, \ldots, x_{rnti,15}$ to form a bit sequence $c_0, c_1, c_2, c_3, \ldots, c_{K-1}$; where, $x_{rnti,0}$ corresponds to an MSB the RNTI. A relationship between $c_k$ and $b_k$ is:

$$\begin{cases} c_k = b_k, \ k = 0,1,\ldots,A+7, \\ c_k = (b_k + x_{rnti,k-A-8}) \bmod 2, \ k = A+8, A+9, A+10, \ldots, A+23 \end{cases}.$$

903: channel coding

The above bit sequence (or information bits) $c_0, c_1, c_2, c_3, \ldots, c_{K-1}$ is coded by using polar coding, and the coded information bits are denoted by $d_0, d_1, d_2, d_3, \ldots, d_{N-1}$, where, $N$ is the number of coded information bits.

904: rate matching

The above bit sequence (or information bits) $d_0, d_1, d_2, d_3, ..., d_{N-1}$ is taken as input for rate matching. An output bit sequence after the rate matching is denoted by $f_0, f_1, f_2, f_3, ..., f_{E-1}$; where, E is the number of information bits after the rate matching or a length of a rate matching output sequence. The number of information bits after the rate matching is equal to the number of bits to be transmitted on a physical channel (PDCCH), that is, $E = M_{bit}$.

905: scrambling

Before modulation, the information bits are scrambled.

Let a bit block (or bit sequence, or information bit) be $b(0), ..., b(M_{bit} - 1)$; where, $M_{bit}$ is the number of bits to be transmitted on the physical channel (PDCCH). Before modulation, the PDCCH carrying the downlink control information is scrambled by using a scrambling sequence, and the scrambling sequence is initialized according to a first parameter and a second parameter, that is, it may be scrambled by using a scrambling sequence $c(i)$ according to (2), so as to obtain scrambled bit blocks.

$$\tilde{b}(i) = \big(b(i) + c(i)\big) \bmod 2 \qquad\qquad (2);$$

where, the scrambling sequence $c(i)$ is a pseudo-random sequence. A scrambling sequence generator is initialized by $c_{init} = (n_{RNTI} \cdot 2^{16} + n_{ID})\bmod 2^{31}$, wherein,
the first parameter: for $n_{ID}$, when the network device configures scrambling ID information for a CORESET, the first parameter is determined according to the scrambling ID information. When the downlink control information is transmitted in a CSS, the network device does not configure scrambling ID information for a CORESET, and the first parameter is determined according to a cell ID.

For example, if the DCI in the first DCI format is transmitted in a USS, if a higher-layer parameter (scrambling ID) *pdcch-DMRS-ScramblingID* is configured (for an associated CORESET), $n_{ID} \in \{0,1,...,65535\}$ is equal to the higher-layer parameter *pdcch-DMRS-ScramblingID;* otherwise, $n_{ID} = n_{ID}^{cell}$.

For example, if the DCI in the first DCI format is transmitted in a CSS, $n_{ID} = n_{ID}^{cell}$ (for example, (it is specified in a protocol that) (an associated CORESET) is unable to be configured with the higher-layer parameter *pdcch-DMRS-ScramblingID*); or, if the higher-layer parameter *pdcch-DMRS-ScramblingID* is configured (for the associated CORESET), $n_{ID} \in \{0,1,...,65535\}$ is equal to the higher-layer parameter *pdcch-DMRS-ScramblingID;* otherwise, $n_{ID} = n_{ID}^{cell}$.

The second parameter: for $n_{RNTI}$, when the network device configures the scrambling ID information for a CORESET, the second parameter is provided by a C-RNTI; or, when the downlink control information is transmitted in a CSS, the network device does not configure the scrambling ID information for a CORESET, and the second parameter is 0.

For example, if the DCI in the first DCI format is transmitted in a USS, if the higher-layer parameter (scrambling ID) *pdcch-DMRS-ScramblingID* is configured, $n_{RNTI}$ is provided by the C-RNTI for the PDCCH in the USS; otherwise, $n_{RNTI}=0$.

For example, if the DCI in the first DCI format is transmitted in a CSS, $n_{RNTI}=0$ (for example, (it is specified in a protocol that) (an associated CORESET) is unable to be configured with the higher-layer parameter *pdcch-DMRS-ScramblingID*); or, if the higher-layer parameter *pdcch-DMRS-ScramblingID* is configured, $n_{RNTI}$ is provided by the C-RNTI for the PDCCH in the USS; otherwise, $n_{RNTI}=0$.

Generic pseudo-random sequences are defined by a length-31 gold sequence. An output sequence $c(n)$, $n = 0,1,...,M_{PN} - 1$ (corresponding to the above scrambling sequence denoted by $c(i)$, $M_{PN} = M_{bit}$) with a length $M_{PN}$ is defined as:

$$c(n) = \big(x_1(n + N_c) + x_2(n + N_c)\big) \bmod 2$$

$$x_1(n + 31) = \big(x_1(n + 3) + x_1(n)\big) \bmod 2$$

$$x_2(n + 31) = \big(x_2(n + 3) + x_2(n + 2) + x_2(n + 1) + x_2(n)\big) \bmod 2;$$

where, $N_c = 1600$, a first m-sequence $x_1(n)$ is initialized by $x_1(0) = 1$, $x_1(n) = 0$, $n = 1,2,...,30$, and a second m-sequence $x_2$

(*n*) is initialized by $c_{init}$.

906: modulating

The above bit blocks (or bit sequences, or information bits) $\tilde{b}(0), ... , \tilde{b}(M_{bit} - 1)$ are modulated by QPSK to obtain complex-valued modulation symbols $d(0), ..., d(M_{symbol} - 1)$ ; where, $M_{symbol}$ denotes the number of modulation symbols.

907: mapping to physical resources

The modulation symbols $d(0), ... , d(M_{symbol} - 1)$ (optionally, after being scaled by a factor $\beta_{\text{PDCCH}}$) are sequentially mapped onto resource elements (REs) $(k, l)_{p,\mu}$ that are not used for associated PDCCH DMRS of PDDCHs to be monitored in an ascending order of frequency domain indices *k* first and then an ascending order of time domain indices *l*. Wherein, antenna port i$p$ = 2000, and $(k, l)_{p,\mu}$ denotes resource elements of frequency domain indices *k* and time domain indices *l* for the antenna port *p* and a subcarrier spacing configuration $\mu$ (as shown in Table 15 below).

Table 15 Supported transmission numbers

| $\mu$ | $\Delta f=2^{\mu}\cdot 15$[kHz | Cyclic prefixes |
|---|---|---|
| 0 | 15 | Normal |
| 1 | 30 | Normal |
| 2 | 60 | Normal, extended |
| 3 | 120 | Normal |
| 4 | 240 | Normal |
| 5 | 480 | Normal |
| 6 | 960 | Normal |

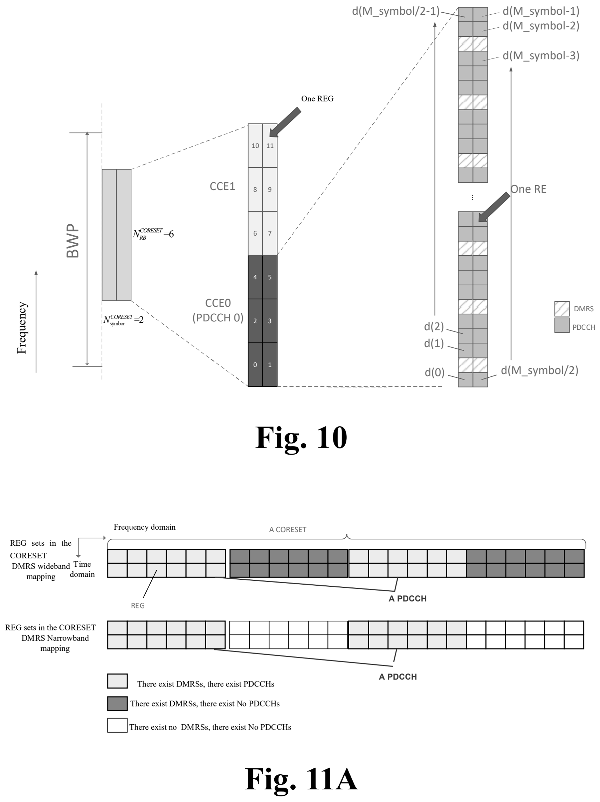

FIG. 10 is an exemplary diagram of mapping the modulation symbols to the physical resources of the embodiments of this disclosure. It is assumed here that the number of RBs included in a CORESET is $N_{\text{RB}}^{\text{CORESET}} = 6$ , the number of symbols included therein is $N_{\text{symb}}^{\text{CORESET}} = 2$ , the CCE-to-REG mapping is non-interleaved, a PDCCH candidate with one aggregation level AL=1 (i.e. one PDCCH is composed of one CCE) is composed of CCE 0 (including REGs 0~5), the DCI is carried by PDCCH 0, and PDCCH 0 is transmitted in the PDCCH candidate. In which case modulation symbols $d(0), ... , d(M_{symbol} - 1)$, $M_{symbol} = N_{\text{RB}}^{\text{CORESET}} \cdot N_{\text{symb}}^{\text{CORESET}}$ (optionally, after being scaled by a factor $\beta_{\text{PDCCH}}$) to which PDCCH 0 corresponds are mapped to REs in CCE0 (or REGs0~5) that are not used for DMRSs in an order of frequency domain first and then time domain (in an ascending order of RE frequency domain indices *k* first and then time domain indices *l*).

The PDCCH DMRSs shall be described below.

In some embodiments, a DMRS reference signal sequence of the PDCCH carrying the downlink control information is initialized according to the above first parameter.

It is assumed by the UE that the reference signal sequence $r_l(m)$ of a OFDM symbol *l* is defined as:

$$r_l(m) = \frac{1}{\sqrt{2}}\big(1 - 2 \cdot c(2m)\big) + j\frac{1}{\sqrt{2}}\big(1 - 2 \cdot c(2m + 1)\big);$$

where, a definition of the pseudo-random sequence *c*(*i*) shall be introduced below, and the pseudo-random sequence generator is initialized by $c_{\text{init}} = \big(2^{17}\big(N_{\text{symb}}^{\text{slot}}n_{\text{s,f}}^{\mu} + l + 1\big)(2N_{\text{ID}} + 1) + 2N_{\text{ID}}\big)\text{mod}2^{31}$ ; where, *l* is an OFDM symbol number in a slot, $n_{\text{s,f}}^{\mu}$ is a slot number in a frame, and for $N_{\text{ID}} \in \{0,1, ...,65535\}$:

for example, if the DCI in the first DCI format is transmitted in a USS, if the higher-layer parameter *pdcch-DMRS-ScramblingID* is configured (for the associated CORESET), $n_{\text{ID}} \in \{0,1, ...,65535\}$ is equal to the higher-layer parameter *pdcch-DMRS-ScramblingID;* otherwise, $n_{\mathrm{ID}} = \mathrm{n}_{\mathrm{ID}}^{\mathrm{cell}}$ .

For example, if the DCI in the first DCI format is transmitted in a CSS, $n_{\mathrm{ID}} = \mathrm{n}_{\mathrm{ID}}^{\mathrm{cell}}$ (for example, (it is specified in a protocol that) (an associated CORESET) is unable to be configured with the higher-layer parameter *pdcch-DMRS-ScramblingID*); or, if the higher-layer parameter *pdcch-DMRS-ScramblingID* is configured (for the associated CORESET), $n_{\mathrm{ID}} \in \{0,1, ...,65535\}$is equal to the higher-layer parameter *pdcch-DMRS-ScramblingID*; otherwise, $n_{\mathrm{ID}} = \mathrm{n}_{\mathrm{ID}}^{\mathrm{cell}}$ .

In some embodiments, in mapping to physical resources, the PDCCH DMRSs may be of broadband mapping or narrowband mapping.

For example, the reference signal sequence $r_l(m)$ is mapped to REs$(k, l)_{p,\mu}$; where, $(k, l)_{p,\mu}$ denotes the resource elements of the frequency domain indices $k$ and the time domain indices $l$ for the antenna port $p$ and a subcarrier spacing configuration $\mu$:

$$a_{k,l}^{(p,\mu)} = \beta_{\mathrm{DMRS}}^{\mathrm{PDCCH}} \cdot r_l(3n + k')$$

$$k = nN_{\mathrm{sc}}^{RB} + 4k' + 1$$

$$k' = 0,1,2$$

$$n = 0,1, ...$$

where, $a_{k,l}^{(p,\mu)}$ is a complex value to which $RE(k, l)_{p,\mu}$ corresponds.

If the higher-layer parameter *precoderGranularity* is equal to *sameAsREG-bundle,* these REs$(k, l)_{p,\mu}$ are in REGs composing the PDCCH that the UE attempts to decode, i.e. narrowband mappings. If *precoderGranularity* is equal to *allContiguousRBs,* these REs$(k, l)_{p,\mu}$ are in all REGs in continuous resource block sets in a CORESET of the PDCCH that the UE attempts to decode, i.e. broadband mappings.

A reference point for $k$: if a CORESET is configured by a PBCH (or MIB) or a *controlResourceSetZero* field in a *PDCCH-ConfigCommon* IE, the reference point for $k$ is subcarrier 0 of an RB in the CORESET with a lowest number/sequence number (i.e. $k = 0$ corresponds to subcarrier 0); otherwise, the reference point for $k$ is subcarrier 0 of common RB 0 (i.e. $k = 0$ corresponds to subcarrier 0); where, $l$ is an OFDM symbol number in a slot, and the antenna port $p = 2000$.

It can be seen from the above formula that in the REGs used for transmitting the DMRSs, 3 REs (REs 1/5/9) in each REG are used for mapping/transmitting the DMRSs.

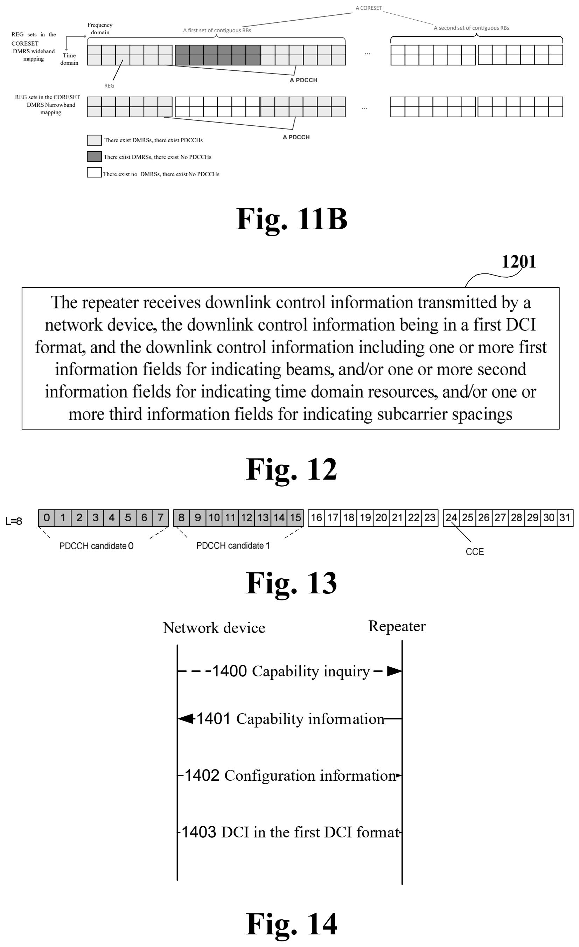

FIGs. 11A and 11B are two exemplary diagrams of PDCCH DMRSs in cases of wideband mapping and narrowband mapping. In the first exemplary diagram, all RBs in the CORESET are continuous (i.e. there is only one set of continuous RBs), and in the second exemplary diagram, the CORESET includes discontinuous RBs (i.e. two sets of continuous RBs). Assuming that the CCE-to-REG mapping is interleaved, a PDCCH corresponds to discontinuous REGs. As shown in FIGs. 11A and 11B, in the case of broadband mapping, all REGs in the set of continuous RBs in the CORESET where the PDCCH is located are used to transmit DMRSs, in other words, in the set of continuous RBs, even if an REG is not used to transmit PDCCHs, it will still be used to transmit DMRSs, thereby improving accuracy of channel estimation. In the case of narrowband mapping, all REGs where the PDCCH is located are used to transmit DMRSs, that is, if an REG is not used to transmit PDCCHs, it is also not used to transmit DMRSs, thereby saving resources.

In some embodiments, the method further includes: the network device transmits first configuration information to the repeater, the first configuration information including information indicating the number of the first information fields, and/or information indicating a bitwidth of the first information field, and/or information indicating the number of the second information fields, and/or information indicating a bitwidth of the second information field, and/or information indicating a payload size of the downlink control information, and/or information indicating an RNTI used by a CRC of the downlink control information. The first configuration information includes, for example, any one of the above higher-layer parameters 1-5 and 7; however, the embodiments of this disclosure are not limited thereto, and the above higher-layer parameters 1-5 and 7 may be identical or different.

In some embodiments, the method may further include: the network device receives, capability information transmitted by the repeater, the capability information including or not including fifth information used for indicating whether/how the repeater supports the first DCI format. The fifth information includes one or more following information: information used for indicating whether the repeater supports the first DCI format; information used for indicating whether the repeater supports monitoring DCI of the first DCI format in the CSS; information used for indicating whether the repeater supports monitoring DCI of the first DCI format in a USS; information used for indicating whether the repeater supports a dynamic access link beam indication; and information used for indicating whether the repeater supports dynamic side control information. The capability information shall be described later in the embodiment of the second aspect.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, indication on beams of the repeater may be performed via the DCI in the first DCI format, and the beams of the repeater in performing forwarding (forwarding downlink/uplink signals) may be enabled to match with beams of the terminal equipment receiving/transmitting signals by controlling the beams of the repeater by the network device, thereby improving effects of amplifying/enhancing signals, and at the same time, reducing interference to other devices in the network, and improving the network throughput.

Embodiments of a second aspect

The embodiments of this disclosure provide an information reception method, which shall be described from a side of a repeater, with contents identical to those in the embodiments of the first aspect being not going to be described herein any further.

FIG. 12 is a schematic diagram of the information reception method of the embodiments of this disclosure. As shown in FIG. 12, the method includes:

1201: the repeater receives, downlink control information transmitted by a network device, the downlink control information being in a first DCI format, and the downlink control information including one or more first information fields for indicating beams, and/or one or more second information fields for indicating time domain resources, and/or one or more third information fields for indicating subcarrier spacings.

It should be noted that FIG. 12 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 12.

Reference may be made to the embodiments of the first aspect for the first DCI format, the first information field, the second information field, arrangement of and correspondences between the first information fields and the second information fields and a payload of the DCI, which shall not be repeated herein any further.

How the repeater receives the DCI in the first DCI format (how to determine the PDCCH candidate set for monitoring the DCI) shall be described below in detail.

In some embodiments, on an activated serving cell configured with PDCCH monitoring, an NCR-MT monitors the PDCCH candidate set at one or more CORESETs on an active downlink BWP (DL BWP) according to corresponding SS sets, wherein the monitoring refers to decoding each PDCCH candidate according to DCI in a monitored DCI format. The downlink control information is carried by PDCCH candidates in the PDCCH candidate set.

In some embodiments, for a search space set s associated with a CORESET p, a CCE index corresponding to a PDCCH candidate $m_{s,n_{CI}}^{(L)}$ of an aggregation level $L$ of an active DL BWP of a serving cell in a slot $n_{s,f}^{\mu}$ of the search space set corresponding to $n_{CI}$ is:

$$L \cdot \left\{ \left( Y_{p,n_{s,f}^{\mu}} + \left\lfloor \frac{m_{s,n_{CI}}^{(L)} \cdot N_{\mathrm{CCE},p}}{L \cdot M_{s,\max}^{(L)}} \right\rfloor + n_{CI} \right) mod \left\lfloor N_{\mathrm{CCE},p}/L \right\rfloor \right\} + i, \qquad i = 0, \dots, L - 1;$$

where, $Y_{p,n_{s,f}^{\mu}}$ denotes a starting CCE of the PDCCH candidate set.

For any CSS, $Y_{p,n_{s,f}^{\mu}} = 0$ .

For a USS, $Y_{p,n_{s,f}^{\mu}} = \left( A_p \cdot Y_{p,n_{s,f}^{\mu}-1} \right) mod D$ ; where, $Y_{p,-1} = n_{RNTI} \neq 0$ ; for CORESET $pmod3 = 0$, $A_p = 39827$, for CORESET $pmod3 = 1$, $A_p = 39829$, and for CORESET $pmod3 = 2$, $A_p = 39839$, $D = 65537$. Wherein, $n_{RNTI}$ is a C-RNTI or the above newly-introduced RNTI (for example, when the USS is used to transmit the DCI in the first DCI format, or the NCR-MT monitors the DCI in the first DCI format at the USS, an index of a CCE (starting CCE) of the PDCCH candidate set is related (equal) to the new RNTI).

Where, $N_{CCE,p}$ denotes the number of CCEs of CORESET $p$, and these CCEs are numbered from 0 to $N_{CCE,p}$ - 1.

Wherein, $n_{CI}$:

for any CSS, $n_{CI} = 0$;
for a USS, except $n_{CI} = 0$ when the serving cell is scheduled from identical serving cell, if the NCR-MT is configured with a carrier indication field by *CrossCarrierSchedulingConfig*, $n_{CI}$ is a value of the carrier indication field (corresponding to the serving cell).

$$m_{s,n_{CI}}^{(L)} = 0, \cdots, M_{s,n_{CI}}^{(L)} - 1$$; where, $M_{s,n_{CI}}^{(L)}$ is the number of PDCCH candidates of the serving cell of the aggregation level $L$ corresponding to $n_{CI}$ in the search space set s that the NCR-MT is configured to monitor.

For any CSS, $M_{s,\max}^{(L)} = M_{s,0}^{(L)}$.

For a USS, $M_{s,\max}^{(L)}$ denotes a maximum $M_{s,n_{CI}}^{(L)}$ of all configured $n_{CI}$ values of the aggregation level $L$ in the search space set s.

The repeater monitors the downlink control information in the first DCI format on the CSS and/or USS configured to monitor the first DCI format. Assuming that it is configured to monitor the DCI in the first DCI format on a CSS, and accordingly, $Y_{p,n_{s,f}^{\mu}} = 0$, $n_{CI} = 0$ are determined according to the above method, the number of CCEs in the CORESET $p$ associated with the CSS is $N_{CCE,p} = 32$, and only two PDCCH candidates of an aggregation level $L = 8$ are configured for the DCI in the first DCI format, as shown in FIG. 13, the NCR-MT monitors the DCI in the first DCI format at PDCCH candidate 0 (composed of CCEs 0-7) and PDCCH candidate 1 (composed of CCEs 8-15).

In some embodiments, the method may further include: the repeater transmits capability information to the network device, the capability information including or not including fifth information used for indicating whether/how the repeater supports a first DCI format. The fifth information includes one or more following information: information used for indicating whether the repeater (which may be hereinafter replaced with an NCR-MT or an NCR-Fwd or an NCR) supports the first DCI format; information used for indicating whether the repeater supports monitoring DCI in the first DCI format in the CSS; information used for indicating whether the repeater supports monitoring DCI in the first DCI format in a USS; information used for indicating whether the repeater supports a dynamic access link beam indication; and information used for indicating whether the repeater supports dynamic side control information.

In some embodiments, the fifth information may be defined in a protocol, and may be defined as being optional, or mandatory, or conditionally mandatory.

For example, being optional refers to that different repeaters may selectively support functions or features to which the fifth information corresponds, when it supports, corresponding fifth information is transmitted, and when it does not support, corresponding fifth information is not transmitted.

For example, being mandatory refers to that the fifth information is mandatory and/or functions or features to which the fifth information corresponds are mandatory, and all repeaters support the functions or features to which the fifth information corresponds, and/or need to transmit the fifth information.

For example, being conditional mandatory refers to that the fifth information is mandatory and/or the functions or features to which the fifth information corresponds are conditionally mandatory, which means that in a specific situation, the repeater must support the functions or features to which the fifth information corresponds, and/or must transmit the fifth information.

For example, if the operating frequency band of the repeater is at FR2, the fifth information is mandatory, and if the operating frequency band is at FR1, the fifth information may be optional or is not mandatory.

For another example, if the working frequency band of the repeater is at FR2 (or not at FR1) and the repeater does not support semi-static access link beam indication/configuration, the fifth information is mandatory; otherwise, the fifth information may be optional.

For a further example, if the repeater does not support semi-static access link beam indication/configuration, the fifth information is mandatory; otherwise, the fifth information may be optional.

In some embodiments, the above fifth information may not be defined (correspondingly, the above capability information does not include the fifth information). The repeater supports the DCI in the first DCI format by default, that is, all repeaters support the DCI in the first DCI format, i.e. the feature or function of the DCI in the first DCI format is mandatory for the repeaters.

FIG. 14 is a flowchart of information transmission between the network device and the repeater of the embodiments of this disclosure. The flow includes:

1400: the network device transmits *UECapabilityEnquiry* to the repeater;
1401: the repeater transmits *UECapabilityInformation* to the network device;
1402: the network device transmits configuration information to the repeater; and
1403: the network device transmits or does not transmit the DCI in the first DCI format to the repeater.

In some embodiments, in order that the NCR-MT correctly monitors and receives the DCI in the first DCI format, the network device needs to first transmit some configuration information to the NCR-MT, including at least one of the above first configuration information, search space configuration information, RNTI configuration and CORESET configuration. Prior to this, in order that the configuration transmitted by the network device to the terminal equipment UE matches with the functions supported by the NCR-MT, the NCR-MT may need to transmit some capability information related to functions supported by itself to the network device. All or a part of these configuration information and capability information may be transmitted/exchanged via RRC signaling or MAC signaling or OAM. Based on the information exchange, transmission and reception of the DCI in the first DCI format may or may not be performed between the network device and the NCR-MT.

Steps 1401, 1402 and 1403 described in the embodiments of this disclosure may be implemented separately or in a combined manner, and the embodiments of this disclosure are not limited thereto. Reference may be made to the previous embodiments for specific contents and transmission modes of the capability information, configuration information and the DCI in the first format DCI, which shall not be repeated herein any further.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, indication on beams of the repeater may be performed via the DCI in the first DCI format, and the beams of the repeater in performing forwarding may be enabled to match with beams of the terminal equipment receiving forwarded signals by controlling the beams of the repeater by the network device, thereby improving effects of amplifying/enhancing signals, and at the same time, reducing interference to other devices in the network, and improving the network throughput.

Embodiments of a third aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

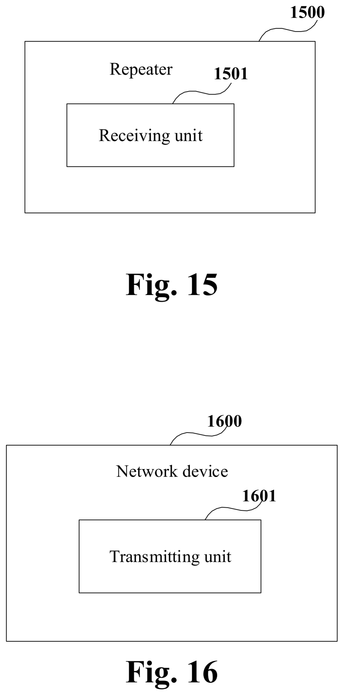

FIG. 15 is a schematic diagram of the repeater of the embodiments of this disclosure. As a principle of the repeater for solving problems is similar to that of the method in the embodiment of the first aspect, reference may be made to the implementation of the method described in the embodiment of the second aspect for implementation of the repeater, with identical contents being not going to be described herein any further.

As shown in FIG. 15, the repeater 1500 includes:
a receiving unit 1501 configured to receive downlink control information transmitted by a network device, the downlink control information being in a first DCI format, and the downlink control information including one or more first information fields for indicating beams, and/or one or more second information fields for indicating time domain resources, and/or one or more third information fields for indicating subcarrier spacings.

Reference may be made to the embodiments of the first and second aspects for the first DCI format, the first information field, the second information field, arrangement of and correspondences between the first information fields and the second information fields, a payload of the DCI and how to receive the DCI in the first DCI format, which shall not be repeated herein any further.

Furthermore, for the sake of simplicity, connection relationships between the components or modules or signal profiles thereof are only illustrated in FIG. 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, indication on beams of the repeater may be performed via the DCI in the first DCI format, and the beams of the repeater in performing forwarding may be enabled to match with beams of the terminal equipment receiving forwarded signals by controlling the beams of the repeater by the network device, thereby improving effects of amplifying/enhancing signals, and at the same time, reducing interference to other devices in the network, and improving the network throughput.

Embodiments of a fourth aspect

The embodiments of this disclosure provide a network device.

FIG. 16 is a schematic diagram of the network device of the embodiments of this disclosure. As a principle of the network device for solving problems is similar to that of the method in the embodiments of the first aspect, reference may be made to the implementation of the method described in the embodiment of the first aspect for implementation of the network device, with identical or related contents being not going to be described herein any further.

As shown in FIG. 16, the network device 1600 of the embodiments of this disclosure includes:

a transmitting unit 1601 configured to transmit downlink control information to a repeater, the downlink control information being in a first DCI format, and the downlink control information including one or more first information fields for indicating beams, and/or one or more second information fields for indicating time domain resources, and/or one or more third information fields for indicating subcarrier spacings.

Reference may be made to the embodiments of the first aspect for the first DCI format, the first information field, the second information field, arrangement of and correspondences between the first information fields and the second information fields, a payload of the DCI and how to transmit the DCI in the first DCI format, which shall not be repeated herein any further.

It should be noted that the components or modules related to this disclosure are only described above. However, this disclosure is not limited thereto, and the network device 1600 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, indication on beams of the repeater may be performed via the DCI in the first DCI format, and the beams of the repeater in performing forwarding may be enabled to match with beams of the terminal equipment receiving forwarded signals by controlling the beams of the repeater by the network device, thereby improving effects of amplifying/enhancing signals, and at the same time, reducing interference to other devices in the network, and improving the network throughput.

Embodiments of a fifth aspect

The embodiments of this disclosure provide a communication system. FIG. 1 is a schematic diagram of the communication system of the embodiment of this disclosure. As shown in FIG. 1, the communication system 100 includes a network device 101, a repeater 102 and a terminal equipment 103. For the sake of simplicity, description is given in FIG. 1 by taking one network device, one repeater and two terminal equipments only as an example; however, the embodiments of this disclosure are not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information reception method in the embodiments of the second aspect, and the network device 101 is configured to execute the information transmission method in the embodiments of the first aspect, contents of which being incorporated herein, which shall not be repeated herein any further.

The embodiments of this disclosure further provide an electronic device, which may be, for example, a repeater or a network device.

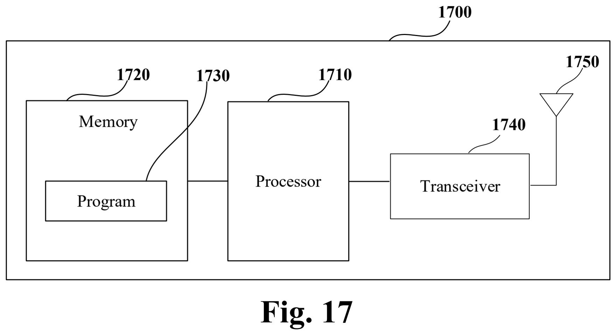

FIG. 17 is a schematic diagram of a structure of the electronic device of the embodiments of this disclosure. As shown in FIG. 17, the electronic device 1700 may include a processor 1710 (such as a central processing unit (CPU)) and a memory 1720, the memory 1720 being coupled to the processor 1710. Wherein, the memory 1720 may store various data, and furthermore, it may store a program 1730 for information processing, and execute the program 1730 under control of the processor 1710.

For example, the processor 1710 may be configured to execute a program to execute the information transmission method described in the embodiments of the first aspect.

For another example, the processor 1710 may be configured to execute a program to execute the information reception method described in the embodiments of the second aspect.

For a further example, the processor 1710 may be configured to execute a program to execute at least one of steps 1400-1403 described in the embodiments of the second aspect.

Furthermore, as shown in FIG. 17, the electronic device 1700 may include a transceiver 1740, and an antenna 1750, etc. Wherein, functions of the above components are similar to those in the related art, and shall not be described herein any further. It should be noted that the electronic device 1700 does not necessarily include all the parts shown in FIG. 17, and furthermore, the electronic device 1700 may include parts not shown in FIG. 17, and the related art may be referred to.

Embodiments of this disclosure provide a computer readable program, which, when executed in a network device, will cause a computer to carry out the information transmission method described in the embodiments of the first aspect in the network device.

Embodiments of this disclosure provide a computer readable medium, including a computer readable program, which will cause a computer to carry out the information transmission method described in the embodiments of the first aspect in a network device.

Embodiments of this disclosure provide a computer readable program, which, when executed in a repeater, will cause a computer to carry out the information reception method described in the embodiments of the second aspect in the repeater.

Embodiments of this disclosure provide a computer readable medium, including a computer readable program, which will cause a computer to carry out the information reception method described in the embodiments of the second aspect in a repeater.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and

# EP 4 651 590 A1

principle of the present disclosure, and such variants and modifications fall within the scope of the present disclosure.

As to implementations containing the above embodiments, following supplements are further disclosed.

1. An information transmission method, applicable to a network device, characterized in that the method comprises: transmitting downlink control information by the network device to a repeater, the downlink control information being in a first DCI format, and the downlink control information comprising one or more first information fields for indicating beams, and/or one or more second information fields for indicating time domain resources, and/or one or more third information fields for indicating subcarrier spacings.

2. The method according to supplement 1, wherein one first information field is used to indicate one beam index, or indicate at most one beam index, or indicate multiple beam indices.

3. The method according to supplement 2, wherein the beam index comprises a beam index corresponding a beam and/or a beam index not corresponding to a beam.

4. The method according to supplement 1, wherein a bit value of the first information field comprises a bit value corresponding a beam index and/or a bit value not corresponding to a beam index.

5. The method according to supplement 1, wherein the number of the first information fields is predefined and/or is configured or indicated by higher layer signaling.

6. The method according to supplement 1, wherein a bitwidth of the first information field is predefined and/or is configured or indicated by higher layer signaling.

7. The method according to supplement 1 or 6, wherein when the downlink control information comprises multiple first information fields, bitwidths of different first information fields are identical or different.

8. The method according to supplement 6 or 7, the bitwidth of the first information field is related to the number of corresponding beam indices and/or the number of valid beam indices and/or the number of beams.

9. The method according to supplement 1, wherein one second information field is used to indicate a time domain resource index, or indicate at most one time domain resource index, or indicate multiple time domain resource indices.

10. The method according to supplement 1 or 9, wherein the second information field corresponds to a time domain resource table, the time domain resource table comprising one or more time domain resource configurations, wherein each time domain resource configuration comprises one or more time domain resources or does not comprise a time domain resource.

11. The method according to supplement 10, wherein one of the time domain resources is continuous or discontinuous.

12. The method according to supplement 10, wherein numbers of time domain resources included in the time domain resource configurations are identical or different.

13. The method according to any one of supplements 9-12, wherein the time domain resource index comprises a time domain resource index corresponding to a time domain resource and/or a time domain resource index not corresponding to a time domain resource.

14. The method according to any one of supplements 9-13, wherein a bit value of the second information field comprises a bit value with a corresponding time domain resource index and/or a bit value with no corresponding time domain resource index.

15. The method according to supplement 1, wherein the number of the second information fields is predefined and/or is configured or indicated by higher layer signaling.

16. The method according to supplement 15, wherein the number of the second information fields is related to the number of the first information fields and/or the number of time domain resources included in configurations in a time domain resource table.

17. The method according to supplement 1, wherein a bitwidth of the second information field is predefined and/or is configured or indicated by higher layer signaling.

18. The method according to supplement 1 or 17, wherein when the downlink control information comprises multiple second information fields, bitwidths of different second information fields are identical or different.

19. The method according to supplement 17 or 18, wherein the bitwidth of the second information field is related to the number of configurations of a corresponding time domain resource table and/or the number of time domain resource indices and/or the number of valid time domain resource indices.

20. The method according to any one of supplements 1-19, wherein an order of information fields in the downlink control information comprises that: all second information fields are listed after or before all first information fields, or the second information fields are listed crosswise with the first information fields.

21. The method according to any one of supplements 1-20, wherein the first information fields correspond to the second information fields one by one, or multiple first information fields correspond to one second information field, or one first information field corresponds to multiple second information fields.

22. The method according to any one of supplements 1-21, wherein a beam indicated by one first information field corresponds to one time domain resource, and beams indicated by different first information fields correspond to different time domain resources indicated by one second information field, or, beams indicated by multiple first information fields correspond to identical time domain resource, and beams indicated by different first information fields in multiple first information fields correspond to different frequency domain resources, or, a beam indicated by one first information field corresponds to multiple time domain resources indicated by one second information field; or, a beam indicated by one first information field corresponds to a time domain resource indicated by one second information field, and beams indicated by different first information fields correspond to time domain resources indicated by different second information fields, or, beams indicated by multiple first information fields correspond to time domain resources indicated by identical second information field, and beams indicated by different first information fields in multiple first information fields correspond to different frequency domain resources and/or different time domain resources indicated by identical second information field, or a beam indicated by one first information field corresponds to time domain resources indicated by multiple second information fields.

23. The method according to any one of supplements 1-22, wherein a correspondence between time domain resources indicated by the second information field and the first information field is determined according to an order of the first information field listed in the downlink control information, and/or whether the first information field indicates a beam or indicates an valid beam index or indicates a beam index, and/or an order of time domain resources indicated by the second information field listed in time domain resource table configuration, and/or an order of time domain resources indicated by the second information field in the time domain, and/or an order of the second information field listed in the downlink control information, and/or whether the second information field indicates a time domain resource or indicates an valid time domain resource index or indicates a time domain resource index.

24. The method according to any one of supplements 1-23, wherein a first number of the first information fields in all first information fields indicates beams or valid beam indices or beam indices, and one second information field indicates the first number of time domain resources, or one second information field indicates time domain resources of a number not less than the first number.

25. The method according to any one of supplements 1-23, wherein a first number of first information fields in all first information fields indicates beams or indicates valid beam indices or indicates beam indices, and a second number of second information fields in all second information fields indicates time domain resources or valid time domain resource indices or time domain resource indices, the second number being equal to the first number, or the second number being greater than the first number, or the first number being greater than the second number.

26. The method according to any one of supplements 1-25, wherein when an *n-th* first information field indicates an invalid beam index or does not indicate a beam or does not indicate a beam index, the *n-th* first information field and/or an *(n+1)-th* first information field and first information fields thereafter are ignored by the repeater, and/or an *n-th* second information field and second information fields thereafter are ignored by the repeater, and/or the *n-th* second information field and second information fields thereafter indicate invalid beam indices or do not indicate time domain resources or do not indicate time domain resource indices.

27. The method according to any one of supplements 23-25, wherein when an *m-th* second information field indicates an invalid time domain resource index or does not indicate a time domain resource or does not indicate a time domain resource index, the *m-th* second information field and/or an *(m+1)-th* second information field and second information fields thereafter are ignored by the repeater, and/or an *m-th* first information field and first information fields thereafter are ignored by the repeater, and/or the *m-th* first information field and first information fields thereafter indicate invalid beam indices or do not indicate beams or do not indicate beam indices.

28. The method according to any one of supplements 1-22, wherein a payload size of the downlink control information is determined by a bitwidth of an information field included in the downlink control information and/or is predefined and/or is configured by higher layer signaling.

29. The method according to supplement 28, wherein the payload size of the downlink control information is not less than a minimum value that is predefined or is configured by higher layer signaling and is not greater than a maximum value that is predefined or is configured by higher layer signaling.

30. The method according to supplement 28, wherein the maximum value is determined by (a maximum value of) the bitwidth of the information field and/or (a maximum value of) the information field of the downlink control information.

31. The method according to supplement 28, wherein the payload size of the downlink control information is identical to or different from that of downlink control information in a second DCI format.

32. The method according to supplement 31, wherein the downlink control information in the second DCI format is used for scheduling a PDSCH/PUSCH and/or is used for activating/deactivating beam configuration (provided by higher layer signaling).

33. The method according to any one of supplements 1-32, wherein a CORSET associated with a search space in one or more search space sets for monitoring the downlink control information and the search space are configured in identical BWP or different BWPs.

34. The method according to supplement 33, wherein the one or more search space sets for monitoring the downlink control information comprise CSS sets and/or USS sets.

35. The method according to supplement 34, wherein the CSS sets comprise a Type3-PDCCH CSS set.

36. The method according to supplement 34, wherein the network device configures the repeater to monitor the downlink control information on a Pcell, a PScell or an Scell.

37. The method according to supplement 36, wherein the CSS sets and/or USS sets used for monitoring the downlink control information are on the Pcell, or the CSS sets and/or USS sets used for monitoring the downlink control information are respectively on the Pcell, the PScell or the Scell.

38. The method according to supplement 34, wherein the CSS sets and/or USS sets used for monitoring the downlink control information are used for or are not used for monitoring other DCI formats different than the first DCI format.

39. The method according to any one of supplements 1-38, wherein the method further comprises:

transmitting search space configuration information by the network device to the repeater, the search space configuration information comprising a fourth information field, the fourth information field being used to configure the repeater to monitor the downlink control information.

40. The method according to supplement 39, wherein the fourth information field comprises information for configuring an aggregation level and/or information for configuring a PDCCH candidate number.

41. The method according to supplement 20, wherein the information fields in the downlink control information are sequentially mapped according to the order.

42. The method according to any one of supplements 1-41, wherein cyclic redundancy check CRC of the downlink control information is scrambled by a new RNTI, the new RNTI being configured for the repeater only.

43. The method according to supplement 42, wherein check bits of the CRC are scrambled by bits of the new RNTI.

44. The method according to any one of supplements 1-43, wherein a PDCCH carrying the downlink control information is scrambled by a scrambling sequence, the scrambling sequence being initialized according to a first parameter and a second parameter, and/or a DMRS reference signal sequence of the PDCCH carrying the downlink control information being initialized according to the first parameter.

45. The method according to supplement 44, wherein when the network device configures scrambling ID information for the CORESET, the first parameter is determined according to the scrambling ID information; or, when the downlink control information is transmitted in a CSS, the network device does not configure scrambling ID information for the CORESET, and the first parameter is determined according to a cell ID.

46. The method according to supplement 44, wherein when the network device configures scrambling ID information for the CORESET, the second parameter is provided by a C-RNTI; or, when the downlink control information is transmitted in a CSS, the network device does not configure scrambling ID information for the CORESET, and the second parameter is 0.

47. The method according to any one of supplements 1-46, wherein the method further comprises:

transmitting first configuration information by the network device to the repeater, the first configuration information comprising information indicating the number of the first information fields, and/or information indicating a bitwidth of the first information field, and/or information indicating the number of the second information fields, and/or information indicating a bitwidth of the second information field, and/or information indicating a payload size of the downlink control information, and/or information indicating an RNTI used by a CRC of the downlink control information.

48. The method according to any one of supplements 1-47, wherein the method further comprises:

receiving, by the network device, capability information transmitted by the repeater, the capability information comprising or not comprising fifth information used for indicating whether/how the repeater supports the first DCI format.

49. The method according to supplement 48, wherein the fifth information comprises one or more of the following information:

information used for indicating whether the repeater supports the first DCI format;
information used for indicating whether the repeater supports monitoring DCI in the first DCI format in the CSS;
information used for indicating whether the repeater supports monitoring DCI in the first DCI format in a USS;
information used for indicating whether the repeater supports a dynamic access link beam indication; and
information used for indicating whether the repeater supports dynamic side control information.

50. The method according to any one of supplements 1-47, wherein the repeater supports the first DCI format by default.

51. An information reception method, applicable to a repeater, characterized in that the method comprises:

receiving, by the repeater, downlink control information transmitted by a network device, the downlink control information being in a first DCI format, and the downlink control information comprising one or more first information fields for indicating beams, and/or one or more second information fields for indicating time domain resources, and/or one or more third information fields for indicating subcarrier spacings.

52. The method according to supplement 51, wherein the repeater monitors a PDCCH candidate set at one or more CORESETs, the downlink control information being carried by a PDCCH candidate in the PDCCH candidate set, wherein when the repeater monitors the downlink control information in the first DCI format on the USS, a CCE index of the PDCCH candidate set is related to the new RNTI.

53. The method according to supplement 51 or 52, wherein the repeater monitors the downlink control information in the first DCI format on a CSS and/or USS configured to monitor the first DCI format.

54. An information transmission method, applicable to a network device, the method comprising:

transmitting search space configuration information by the network device to a repeater, the search space configuration information comprising a fourth information field, the fourth information field being used to configure the repeater to monitor downlink control information in a first DCI format, and/or,

transmitting first configuration information by the network device to the repeater, the first configuration information comprising information indicating the number of first information fields, and/or information indicating a bitwidth of the first information field, and/or information indicating the number of second information fields, and/or information indicating a bitwidth of the second information field, and/or information indicating a payload size of the downlink control information, and/or information indicating an RNTI used by CRC of the downlink control information.

55. An information reception method, applicable to a repeater, the method comprising:

receiving, by the repeater, search space configuration information transmitted by a network device, the search space configuration information comprising a fourth information field, the fourth information field being used to configure the repeater to monitor downlink control information in a first DCI format, and/or,

receiving, by the repeater, first configuration information transmitted by the network device, the first configuration information comprising information indicating the number of first information fields, and/or information indicating a bitwidth of the first information field, and/or information indicating the number of second information fields, and/or information indicating a bitwidth of the second information field, and/or information indicating a payload size of the downlink control information, and/or information indicating an RNTI used by CRC of the downlink control information.

56. An information reception method, applicable to network device, the method comprising:

receiving, by the network device, capability information transmitted by a repeater, the capability information comprising or not comprising fifth information used for indicating whether/how the repeater supports a first DCI format.

57. An information transmission method, applicable to a repeater, the method comprising:

transmitting capability information by the repeater to a network device, the capability information comprising or not comprising fifth information used for indicating whether/how the repeater supports a first DCI format.

58. A repeater, comprising a memory and a processor, the memory storing a computer program, and the processor being configured to execute the computer program to carry out the method as described in any one of supplements 51-53 or 55 or 57.

59. A network device, comprising a memory and a processor, the memory storing a computer program, and the processor being configured to execute the computer program to carry out the method as described in any one of supplements 1-50 or 54 or 56.

## Claims

1. A network device, **characterized in that** the network device comprises:

a transmitting unit configured to transmit downlink control information to a repeater, the downlink control information being in a first DCI format, and the downlink control information comprising one or more first information fields for indicating beams, and/or one or more second information fields for indicating time domain resources, and/or one or more third information fields for indicating subcarrier spacings.

2. The network device according to claim 1, wherein one first information field is used to indicate one beam index, or indicate at most one beam index, or indicate multiple beam indices; and/or, one second information field is used to indicate a time domain resource index, or indicate at most one time domain resource index, or indicate multiple time domain resource indices.

3. The network device according to claim 2, wherein the beam index comprises a beam index corresponding a beam and/or a beam index not corresponding to a beam; and/or, the time domain resource index comprises a time domain resource index corresponding to a time domain resource and/or a time domain resource index not corresponding to a time domain resource.

4. The network device according to claim 1, wherein a bit value of the first information field comprises a bit value corresponding a beam index and/or a bit value not corresponding to a beam index; and/or, a bit value of the second information field comprises a bit value with a corresponding time domain resource index and/or a bit value with no corresponding time domain resource index.

5. The network device according to claim 1, wherein the number of the first information fields is predefined and/or is configured or indicated by higher layer signaling; and/or, the number of the second information fields is predefined and/or is configured or indicated by higher layer signaling.

6. The network device according to claim 1, wherein a bitwidth of the first information field is predefined and/or is configured or indicated by higher layer signaling; and/or, a bitwidth of the second information field is predefined and/or is configured or indicated by higher layer signaling.

7. The network device according to claim 1, wherein when the downlink control information comprises multiple first information fields, bitwidths of different first information fields are identical or different; and/or, when the downlink control information comprises multiple second information fields, bitwidths of different second information fields are identical or different.

8. The network device according to claim 6, wherein the bitwidth of the first information field is related to the number of corresponding beam indices and/or the number of valid beam indices and/or the number of beams; and/or, the bitwidth of the second information field is related to the number of configurations of a corresponding time domain resource table and/or the number of time domain resource indices and/or the number of valid time domain resource indices.

9. The network device according to claim 1, wherein the second information field corresponds to a time domain resource table, the time domain resource table comprising one or more time domain resource configurations, wherein each time domain resource configuration comprises one or more time domain resources or does not comprise a time domain resource.

10. The network device according to claim 9, wherein numbers of time domain resources included in the time domain resource configurations are identical or different.

11. The network device according to claim 1, wherein an order of information fields in the downlink control information comprises that: all second information fields are listed after or before all first information fields, or the second information fields are arranged crosswise with the first information fields.

12. The network device according to claim 1, wherein the first information fields correspond to the second information fields one by one, or multiple first information fields correspond to one second information field, or one first information field corresponds to multiple second information fields.

13. The network device according to claim 1, wherein a beam indicated by one first information field corresponds to one time domain resource, and beams indicated by different first information fields correspond to different time domain resources indicated by one second information field, or, beams indicated by multiple first information fields correspond to identical time domain resource, and beams indicated by different first information fields correspond to different frequency domain resources, or, a beam indicated by one first information field corresponds to multiple time domain resources indicated by one second information field; or,
a beam indicated by one first information field corresponds to a time domain resource indicated by one second information field, and beams indicated by different first information fields correspond to time domain resources indicated by different second information fields, or, beams indicated by multiple first information fields correspond to time domain resources indicated by identical second information field, and beams indicated by different first information fields in multiple first information fields correspond to different frequency domain resources and/or different time domain resources indicated by identical second information field, or a beam indicated by one first information field corresponds to time domain resources indicated by multiple second information fields.

14. The network device according to claim 1, wherein a correspondence between time domain resources indicated by the first information field and the second information field is determined according to an order of the first information field listed in the downlink control information, and/or whether the first information field indicates a beam or indicates an valid beam index or indicates a beam index, and/or an order of time domain resources indicated by the second information field listed in time domain resource table configuration, and/or an order of time domain resources indicated by the second information field in the time domain, and/or an order of the second information field listed in the downlink control information, and/or whether the second information field indicates a time domain resource or indicates an valid time domain resource index or indicates a time domain resource index.

15. The network device according to claim 1, wherein a first number of the first information fields in all first information fields indicates beams or valid beam indices or beam indices, and one second information field indicates the first number of time domain resources, or one second information field indicates time domain resources of a number not less than the first number.

16. The network device according to claim 1, wherein a first number of first information fields in all first information fields indicates beams or indicates valid beam indices or indicates beam indices, and a second number of second information fields in all second information fields indicates time domain resources or valid time domain resource indices or indicates time domain resource indices, the second number being equal to the first number, or the second number being greater than the first number, or the first number being greater than the second number.

17. The network device according to claim 16, wherein when an *n-th* first information field indicates an invalid beam index or does not indicate a beam or does not indicate a beam index, the *n-th* first information field and/or an *(n+1)-th* first information field and first information fields thereafter are ignored by the repeater, and/or an *n-th* second information field and second information fields thereafter are ignored by the repeater, and/or the *n-th* second information field and second information fields thereafter indicate invalid beam indices or do not indicate time domain resources or do not indicate time domain resource indices.

18. The network device according to claim 16, wherein when an *m-th* second information field indicates an invalid time domain resource index or does not indicate a time domain resource or does not indicate a time domain resource index, the *m-th* second information field and/or an *(m+1)-th* second information field and second information fields thereafter are ignored by the repeater, and/or an *m-th* first information field and first information fields thereafter are ignored by the repeater, and/or the *m-th* first information field and first information fields thereafter indicate invalid beam indices or do not indicate beams or do not indicate beam indices.

19. The network device according to claim 1, wherein a payload size of the downlink control information is determined by a bitwidth of an information field included in the downlink control information and/or is predefined and/or is configured by higher layer signaling.

20. A repeater, **characterized in that** the repeater comprises:
a receiving unit configured to receive downlink control information transmitted by a network device, the downlink control information being in a first DCI format, and the downlink control information comprising one or more first information fields for indicating beams, and/or one or more second information fields for indicating time domain resources, and/or one or more third information fields for indicating subcarrier spacings.

Access link beam

102

Control link

NCR-MT

Backhaul link

NCR-Fwd

101

103

103

**Fig. 1**

201

The network device transmits downlink control information by to a repeater, the downlink control information being in a first DCI format, and the downlink control information including one or more first information fields for indicating beams, and/or one or more second information fields for indicating time domain resources, and/or one or more third information fields for indicating subcarrier spacings

**Fig. 2**

According to an order of listing in the DCI:

First information field 1 — Indicates → Beam index x_1 — Associated with → Beamx_1 ← Corresponding to → Time domain resource y_1

First information field 2 — Indicates → Beam index x_2 — Associated with → Beamx_2 ← Corresponding to → Time domain resource y_2

First information field 3 — Indicates → Beam index x_3 — Associated with → Beamx_3 ← Corresponding to → Time domain resource y_3

...

First information field N — Indicates → Beam index x_N — Associated with → Beamx_N ← Corresponding to → Time domain resource y_N

Each of the first information fields indicates a beam

According to an order of listing in the configurations or an order in the time domain

Time domain resource indexy_1 — Indicate → Second information field

The number of the time domain resources included in the indicated configuration is identical to the number of the first information fields

**Fig. 3A**

Fig. 3B

According to an order of listing in the DCI

| First information field 1 | First information field 2 | First information field 3 | ... | First information field N |

Indicates

| Beam index x_1 | Beam index x_2 (invalid) | Beam index x_3 | ... | Beam index x_N |

First information field 2 does not indicate beams, and others indicate beams

Associated with

| Beam x_1 | | Beam x_3 | ... | Beam x_N |

Corresponding to

According to an order of listing in the configurations or an order in the time domain

| Time domain resource y_1 | Time domain resource y_2 | ... | Time domain resource y_(N-1) |

The number of the time domain resources included in the indicated configuration is identical to the number of the first information fields indicating beams

| Time domain resource index y_1 |

Indicate

| Second information field |

EP 4 651 590 A1

51

Fig. 3C

**Fig. 3D**

According to an order of listing in the DCI:

| First information field 1 | First information field 2 | First information field 3 | ... | First information field N |

Indicates

| Beam index x_1 | Beam index x_2 | Beam indexx_3 (invalid) | ... | Beam index x_N (invalid) |

First information field 3 does not indicate beams, the NCR ignores first information field 4 and subsequent first information fields, and/or first information field 4 and subsequent first information fields do not indicate beams

Associated with

| Beam x_1 | Beam x_2 | | ... | |

Corresponding to

According to an order of listing in the configurations or an order in the time domain

| Time domain resource y_1 | Time domain resource y_2 | Time domain resource y_3 | ... | Time domain resource y_N |

The number of the time domain resources included in the indicated configuration is identical to the number of the first information fields

| Time domain resource index y_1 |

Indicates

| Second information field |

The NCR ignores time domain resources to which first information fields not indicating beams correspond

53

**Fig. 3E**

According to an order of listing in the DCI

| First information field 1 | First information field 2 | First information field 3 | ... | First information field N |

Indicates

| Beam index x_1 | Beam index x_2 (invalid) | Beam index x_3 | ... | Beam index x_N |

Associated with

First information field 2 does not indicate beams, and others indicate beams

| Beam x_1 | | Beam x_3 | ... | Beam x_N |

X first information fields indicating beams correspond to former X time domain resources

Corresponding to

According to an order of listing in the configurations or an order in the time domain

| Time domain resource y_1 | Time domain resource y_2 | ... | Time domain resource y_(N-1) | Time domain resource y_N |

The number of time domain resources included in the indicated configuration is identical to the number of the first information fields

| Time domain resource index y_1 |

Indicates

| Second information field |

The NCR ignores time domain resources not corresponding to beams

Fig. 3F

**Fig. 3G**

Each first information field indicates beams

| First information field 1 | First information field 2 | First information field 3 | ⋮ | First information field N |
|---|---|---|---|---|
| Indicates | Indicates | Indicates | ⋮ | Indicates |

| Beam index x_1 | Beam index x_2 | Beam index x_3 | ⋮ | Beam index x_N |
|---|---|---|---|---|

Each first information field indicates A beam

| Associated with | Associated with | Associated with | ⋮ | Associated with |
|---|---|---|---|---|

| Beam x_1 | Beam x_2 | Beam x_3 | ⋮ | Beam x_N |
|---|---|---|---|---|

| Corresponding to | Corresponding to | Corresponding to | ⋮ | Corresponding to |
|---|---|---|---|---|

| Time domain resource y_1 | Time domain resource y_2 | Time domain resource y_3 | ⋮ | Time domain resource y_N |
|---|---|---|---|---|

Each second information field indicates time domain resources

| Associated with | Associated with | Associated with | ⋮ | Associated with |
|---|---|---|---|---|

| Time domain resource index y_1 | Time domain resource index y_2 | Time domain resource index y_3 | ⋮ | Time domain resource index y_N |
|---|---|---|---|---|

| Indicates | Indicates | Indicates | ⋮ | Indicates |
|---|---|---|---|---|

According to an order of listing in the DCI

| Second information field 1 | Second information field 2 | Second information field 3 | ⋮ | Second information field N |
|---|---|---|---|---|

Fig. 4A

EP 4 651 590 A1

Fig. 4B

58

**Fig. 4C**

Fig. 4D

The NCR ignores first information fields and/or beam indices and/or beams to which second information fields not indicating time domain resources correspond

According to an order of listing in the DCI

First information field 1 → Indicates → Beam index x_1 → Associated with → Beam x_1 → Corresponding to → Time domain resource y_1 → Associated with → Time domain resource index y_1 → Indicates → Second information field 1

First information field 2 → Indicates → Beam index x_2 → Associated with → Beam x_2 → Corresponding to → Time domain resource index y_2 (invalid) → Indicates → Second information field 2

First information field 3 → Indicates → Beam index x_3 → Associated with → Beam x_3 → Corresponding to → Time domain resource y_3 → Associated with → Time domain resource index y_3 → Indicates → Second information field 3

First information field N → Indicates → Beam index x_N → Associated with → Beam x_N → Corresponding to → Time domain resource y_N → Associated with → Time domain resource index y_N → Indicates → Second information field N

Only first information field 2 does not indicate beams, and all other first information fields indicate beams

Only second information field 2 does not indicate time domain resources, and all other second information fields indicate time domain resources

According to an order of listing in the DCI

Fig. 4E

First information field N — Indicates → Beam index x_N — Associated with → Beam x_N — Corresponding to → Time domain resource y_N — Associated with → Time domain resource index y_N — Indicates → Second information field N

First information field 3 — Indicates → Beam index x_3 — Associated with → Beam x_3 — Corresponding to → Time domain resource y_3 — Associated with → Time domain resource index y_3 — Indicates → Second information field 3

First information field 2 — Indicates → Beam index x_2 (invalid) — Corresponding to — → Time domain resource index y_2 (invalid) — Indicates → Second information field 2

First information field 1 — Indicates → Beam index x_1 — Associated with → Beam x_1 — Corresponding to → Time domain resource y_1 — Associated with → Time domain resource index y_1 — Indicates → Second information field 1

The NCR ignores first information fields to which second information fields not indicating time domain resources correspond, and/or the first information fields must indicate invalid beam indices or do not indicate beam indices or do not indicate beams

According to an order of listing in the DCI

First information field 2 (corresponding to second information field 2) does not indicate beams, and all other first information fields indicate beams

Second information field 2 does not indicate time domain resources, and all other second information field indicate time domain resources

According to an order of listing in the DCI

**Fig. 4F**

## Fig. 4G

According to an order of listing in the DCI

| First information field 1 | First information field 2 | First information field 3 | ... | First information field N |

*Indicates*

| Beam index x_1 | Beam index x_2 | Beam index x_3 (invalid) | ... | Beam index x_N (invalid) |

First information field 3 corresponds to second information field 3, the NCR ignores first information field 3 and/or subsequent first information fields, and/or first information field 3 and subsequent first information fields do not indicate beams

*Associated with*

| Beam x_1 | Beam x_2 |

*Corresponding to*

| Time domain resource y_1 | Time domain resource y_2 |

Second information field 3 is first one of second information fields not indicating time domain resources, the NCR ignores second information field 4 and/or subsequent second information fields, and/or second information field 4 and subsequent second information fields do not indicate time domain resources

*Associated with*

| Time domain resource index y_1 | Time domain resource index y_2 | Time domain resource index y_3 (invalid) | ... | Time domain resource index y_N |

*Indicates*   *Corresponding to*

According to an order of listing in the DCI

| Second information field 1 | Second information field 2 | Second information field 3 | ... | Second information field N |

63

**Fig. 5A**

According to an order of listing in the DCI

| First information field 1 | First information field 2 | First information field 3 | ... | First information field N |

Indicates (×4)

| Beam index x_1 | Beam index x_2 （invalid） | Beam index x_3 | ... | Beam index x_N |

Only first information field 2 does not indicate beams, and all other first information fields indicate beams

Associated with (×3)

| Beam x_1 | | Beam x_3 | ... | Beam x_N |

Corresponding to

| Time domain resource y_1 | Time domain resource y_2 | ... | Time domain resource y_(N-1) | Time domain resource y_N |

Each second information field indicates time domain resources

Associated with (×4)

| Time domain resource index y_1 | Time domain resource index y_2 | ... | Time domain resource index y_(N-1) | Time domain resource index y_N |

Indicates (×4)

According to an order of listing in the DCI

| Second information field 1 | Second information field 2 | ... | Second information field (N-1) | Second information field N |

The NCR ignores a last second information field and/or time domain resource index and/or time domain resource

**Fig. 5B**

Fig. 5C

The NCR ignores a last first information field and/or beam index and/or beam, and/or the first information field must indicate invalid beam indices or does not indicate beam indices or does not indicate beams

According to an order of listing in the DCI

| First information field 1 | First information field 2 | ... | First information field N-1 | First information field N |

Indicates

| Beam index x_1 | Beam index x_2 | ... | Beam index x_(N-1) | Beam index x_N (invalid) |

Only first information field N does not indicate beams, and all other first information fields indicate beams

Associated with

| Beam x_1 | Beam x_2 | ... | Beam x_(N-1) |

Corresponding to

| Time domain resource y_1 | Time domain resource y_2 | Time domain resource y_3 | ... | Time domain resource y_N |

Associated with

| Time domain resource index y_1 | Time domain resource index y_2 (invalid) | Time domain resource index y_3 | ... | Time domain resource index y_N |

Only second information field 2 does not indicate time domain resources, and all other second information fields indicate time domain resources

Indicates

| Second information field 1 | Second information field 2 | Second information field 3 | ... | Second information field N |

According to an order of listing in the DCI

## Fig. 5D

67

**Fig. 6**

**Fig. 7**

Network
device

Information element multiplexing    NCR-MT

CRC attachment

Channel coding

Rate matching

Transmitting the DCI in
the first DCI format

Coding

Scrambling

Modulating

Decoding

Descrambling

Demodulating

Physical resources

Receiving the DCI in the
first DCI format

# Fig. 8

901 Information element multiplexing

(A bits)

902 CRC attachment

903 Channel coding

904 Rate matching

(E bits)

905 Scrambling

(E bits)

906 Modulating(QPSK)

(E/2 QPSK bits)

907 Mapping onto physical resources

# Fig. 9

# Fig. 10

# Fig. 11A

REG sets in the CORESET DMRS wideband mapping

Frequency domain

A first set of contiguous RBs

A CORESET

A second set of contiguous RBs

Time domain

REG

A PDCCH

REG sets in the CORESET DMRS Narrowband mapping

A PDCCH

There exist DMRSs, there exist PDCCHs

There exist DMRSs, there exist No PDCCHs

There exist no DMRSs, there exist No PDCCHs

## Fig. 11B

**1201**

The repeater receives downlink control information transmitted by a network device, the downlink control information being in a first DCI format, and the downlink control information including one or more first information fields for indicating beams, and/or one or more second information fields for indicating time domain resources, and/or one or more third information fields for indicating subcarrier spacings

## Fig. 12

L=8

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

PDCCH candidate 0          PDCCH candidate 1                                            CCE

## Fig. 13

Network device                    Repeater

– – –1400 Capability inquiry ►

◄1401 Capability information

1402 Configuration information►

1403 DCI in the first DCI format

## Fig. 14

**1500**

Repeater **1501**

Receiving unit

# Fig. 15

**1600**

Network device **1601**

Transmitting unit

# Fig. 16

**1700**

**1720**    **1730**    **1710**    **1750**

Memory

**1740**

Program    Processor    Transceiver

## Fig. 17

## INTERNATIONAL SEARCH REPORT

| International application No. |
|---|
| **PCT/CN2023/071455** |

| A. | CLASSIFICATION OF SUBJECT MATTER |
|---|---|

H04W 72/04(2023.01)i; H04B7/155(2006.01)i

According to International Patent Classification (IPC) or to both national classification and IPC

| B. | FIELDS SEARCHED |
|---|---|

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT, CNKI, ENTXTC, VEN, 3GPP: 网络设备, 基站, 节点, 转发器, 中继站, 直放站, 发送接收点, 下行, 控制, 信息, 波束, 信息域, 时域, 资源, 子载波, 间隔, 索引; network device, BS, eNB, node, repeater, relay, TRP, downlink, control, information, DCI, beam, information domain, time domain, subcarrier, interval, index

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022053486 A1 (QUALCOMM INC.) 17 February 2022 (2022-02-17) description, paragraphs 157-279, and figures 11-22 | 1-20 |
| Y | US 2022053486 A1 (QUALCOMM INC.) 17 February 2022 (2022-02-17) description, paragraphs 157-279, and figures 11-22 | 1-20 |
| X | US 2021218534 A1 (HUAWEI TECHNOLOGIES CO., LTD.) 15 July 2021 (2021-07-15) description, paragraphs 82-184 | 1, 20 |
| Y | US 2021218534 A1 (HUAWEI TECHNOLOGIES CO., LTD.) 15 July 2021 (2021-07-15) description, paragraphs 82-184 | 1-20 |
| X | CN 115225131 A (HUAWEI TECHNOLOGIES CO., LTD.) 21 October 2022 (2022-10-21) description, paragraphs 67-189 | 1, 20 |
| Y | WO 2022127764 A1 (VIVO MOBILE COMMUNICATION CO., LTD.) 23 June 2022 (2022-06-23) description, page 5, line 3-page 51, line 3 | 1-20 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 September 2023** | **27 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/071455** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2020029777 A1 (HUAWEI TECHNOLOGIES CO., LTD.) 13 February 2020 (2020-02-13)<br>entire document | 1-20 |
| A | WO 2022253993 A2 (FRAUNHOFER-GESELLSCHAFT ZUR FORDERUNG DER ANGEWANDTEN FORSCHUNG E.V.) 08 December 2022 (2022-12-08)<br>entire document | 1-20 |
| A | ZTE, SANECHIPS. ""R1-1717429 Details and Evaluation Results on Beam Indication""<br>*3GPP Tsg_ran\WG1_RL1*, 03 October 2017 (2017-10-03),<br>pages 1-10 | 1-20 |

Form PCT/ISA/210 (second sheet) (July 2022)

## INTERNATIONAL SEARCH REPORT
### Information on patent family members

International application No.

**PCT/CN2023/071455**

| Patent document cited in search report | | | Publication date (day/month/year) | Patent family member(s) | | | Publication date (day/month/year) |
|---|---|---|---|---|---|---|---|
| US | 2022053486 | A1 | 17 February 2022 | WO | 2022035528 | A1 | 17 February 2022 |
| | | | | EP | 4197121 | A1 | 21 June 2023 |
| | | | | US | 11711789 | B2 | 25 July 2023 |
| US | 2021218534 | A1 | 15 July 2021 | EP | 3849265 | A1 | 14 July 2021 |
| | | | | EP | 3849265 | A4 | 08 December 2021 |
| | | | | WO | 2020063839 | A1 | 02 April 2020 |
| CN | 115225131 | A | 21 October 2022 | None | | | |
| WO | 2022127764 | A1 | 23 June 2022 | None | | | |
| WO | 2020029777 | A1 | 13 February 2020 | None | | | |
| WO | 2022253993 | A2 | 08 December 2022 | WO | 2022253993 | A3 | 12 January 2023 |

Form PCT/ISA/210 (patent family annex) (July 2022)